(19) Europäisches Patentamt
European Patent Office
Office européen des brevets

(11) EP 1 156 496 A1

(12) **EUROPEAN PATENT APPLICATION**
published in accordance with Art. 158(3) EPC

(43) Date of publication:
**21.11.2001 Bulletin 2001/47**

(21) Application number: **00977909.1**

(22) Date of filing: **24.11.2000**

(51) Int Cl.$^7$: **H01F 1/08**

(86) International application number:
**PCT/JP00/08288**

(87) International publication number:
**WO 01/39216 (31.05.2001 Gazette 2001/22)**

(84) Designated Contracting States:
**AT BE CH CY DE DK ES FI FR GB GR IE IT LI LU MC NL PT SE TR**

(30) Priority: **24.11.1999 JP 33336699**
**02.02.2000 JP 2000025535**
**21.02.2000 JP 2000042813**
**24.02.2000 JP 2000046688**
**25.02.2000 JP 2000049602**
**30.03.2000 JP 2000094060**
**18.08.2000 JP 2000248647**

(71) Applicant: **HITACHI METALS, LTD.**
**Minato.ku, Tokyo 105-8614 (JP)**

(72) Inventors:
- **TOBISE, Masahiro**
**Fukaya-shi, Saitama 366-0052 (JP)**
- **USHIJIMA, Makoto**
**Fukaya-shi, Saitama 366-0025 (JP)**
- **IWASAKI, Katsunori**
**Kumagawa-shi, Saitama 360-0856 (JP)**
- **TANIGAWA, Shigeho**
**Kounosu-shi, Saitama 365-0031 (JP)**
- **GOTO, Ryuji**
**Fukaya-shi, Saitama 366-0052 (JP)**
- **YAMASHITA, Keitaro**
**Kodama-gun, Saitama 369-0305 (JP)**
- **MITA, Masahiro**
**Fukaya-shi, Saitama 366-0052 (JP)**
- **MASUZAWA, Masahiro**
**Fukaya-shi, Saitama 366-0041 (JP)**

(74) Representative: **Strehl Schübel-Hopf & Partner**
**Maximilianstrasse 54**
**80538 München (DE)**

(54) **ISOTROPIC COMPOUND AND METHOD FOR PREPARATION THEREOF, ISOTROPIC BONDED MAGNET, ROTARY MACHINE AND MAGNET ROLL**

(57) An isotropic bonded magnet which consist essentially of a R-T-N magnet powder having a main component composition represented, in atomic %, by $R_\alpha T_{100-(\alpha+\beta+\gamma+\gamma)} M_\beta B_\gamma N_\delta$ wherein R represents Sm or Sm and at least one of other rare earth elements including Y, T represents Fe or Fe and Co, M represents at least one element selected from the group consisting of Al, Ti, V, Cr, Mn, Cu, Ga, Zr, Nb, Mo, Hf, Ta, W and Zn, and $\alpha$, $\beta$, $\gamma$ and $\delta$ satisfy $4 \leqq \alpha \leqq 15$, $0 \leqq \beta \leqq 10$,$0 \leqq \gamma \leqq 4$ and $4 \leqq \delta \leqq 30$, respectively, and a binder, is formed into a sheet having a thickness of 0.1 to 5 mm, and has a maximum roughness in accordance to JIS B 0601 being reduced to 15 m or less.

Fig. 1

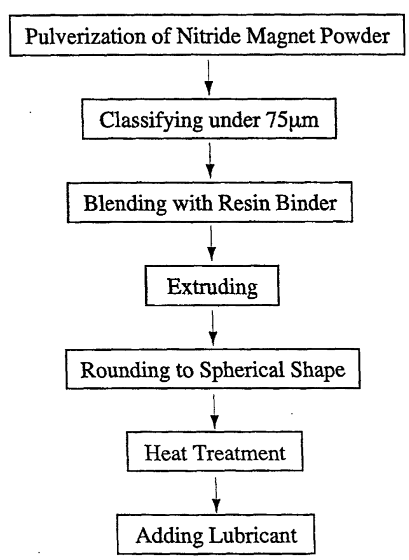


EP 1 156 496 A1

## Description

FIELD OF THE INVENTION

The present invention relates to a high-performance, sheet-shaped, isotropic, resin-bonded R-T-N magnet having decreased surface roughness as compared with the conventional resin-bonded magnets, which is useful for wide ranges of magnet applications such as various rotating machines, magnet rolls for electromagnetic developing-type printers and copiers, various actuators such as voice coil motors and linear motors, etc., audio speakers, buzzers, sensors, magnets for absorption or generation of magnetic field, etc.

The present invention also relates to a high-performance, sheet-shaped, isotropic, resin-bonded magnet having decreased surface roughness as compared with the conventional resin-bonded magnets, which substantially comprises R-T-N isotropic magnet powder, R'-T'-B isotropic magnet powder comprising an $R'_2T'_{14}B$-type intermetallic compound as a main phase and a binder.

The present invention further relates to a high-performance, ring-shaped or cylindrical, isotropic, resin-bonded R-T-N magnet, which is improved in roundness of the external or internal peripheral surface as compared with the conventional resin-bonded magnets.

The present invention further relates to a high-performance, ring-shaped or cylindrical, isotropic, resin-bonded magnet substantially comprising R-T-N isotropic magnet powder, R'-T'-B isotropic magnet powder and a binder, which is improved in roundness of the external or internal peripheral surface as compared with the conventional resin-bonded magnets.

The present invention further relates to a high-performance, sheet-shaped, isotropic, resin-bonded (Sm, La)-T-N magnet, which is improved in magnetizability as compared with the conventional resin-bonded magnets.

The present invention further relates to a high-performance, isotropic, resin-bonded, magnet substantially comprising isotropic (Sm, La)-T-N magnet powder having improved magnetizability compared with the conventional resin-bonded magnets, R'-T'-B isotropic magnet powder, and a binder.

The present invention further relates to a rotating machine and a magnet roll both constituted by such an isotropic, resin-bonded magnet.

The present invention further relates to a compound for such an isotropic, resin-bonded magnet and a method for producing it.

PRIOR ART

Isotropic Nd-Fe-B magnet powder comprising an $Nd_2Fe_{14}B$-type intermetallic compound (see U. S. Patent No. 4,496,395) as a main phase is widely used for resin-bonded rare earth magnets. This magnet powder is obtained by rapid quenching a molten Nd-Fe-B alloy of a predetermined composition and heat-treating the resultant flakes under predetermined conditions, if necessary. However, this magnet powder is poor in corrosion resistance and magnetizability.

Magnetizability is evaluated by magnetic properties such as maximum energy product $(BH)_{max}$, etc., when magnetized in a magnetizing field of 1.9 MA/m (25 kOe) or less at room temperature. The conventional, isotropic, resin-bonded rare earth magnets are poor in magnetizability, needing improvement in magnetizability. Why the intensity of a magnetizing field is limited to 1.9 MA/m (25 kOe) or less is that for instance, when an isotropic, resin-bonded rare earth magnet is magnetized in a state of being assembled in a predetermined magnetic circuit, it is difficult to be magnetized in a magnetizing field of more than 1.9 MA/m (25 kOe) most of the time in an industrial production.

Isotropic, resin-bonded rare earth magnets are required to have high performance (small thickness) as well as high dimensional accuracy. For instance, in the case of an electronic buzzer assembled in a cell phone, the isotropic, resin-bonded rare earth magnet and a vibration plate are disposed in opposite each other via a magnetic gap, which is changeable to control the quality of sound of the electronic buzzer. Also, because the assembling of electronic buzzers are usually carried out in an automated lines, isotropic, resin-bonded rare earth magnets assembled in the electronic buzzers are required to have high dimensional accuracy.

Further, isotropic, resin-bonded rare earth magnets for spindle motors constituting hard disc drives for computers, motors for CD-ROM and DVD (digital video disc) drives, etc. are required to have high magnetic properties and dimensional accuracy enabling them to be made thinner.

Further, to reduce the steps of assembling by eliminating adhered seams, and to provide magnet appliances with high performance, there are mounting needs for long, integral, ring-shaped or cylindrical, isotropic, resin-bonded rare earth magnets. Here, the term "long" means that a resin-bonded magnet is as long as 10 mm or more, preferably 20 mm or more in an axial direction. Also, the term "thin" means that a resin-bonded magnet is as thin as 3 mm or less, preferably 2 mm or less.

In a case where a thin ring-shaped or cylindrical, isotropic, resin-bonded rare earth magnet is used for a field magnet in a rotating machine, if the resin-bonded magnet had poor roundness in the external peripheral surface or the internal peripheral surface, it would be difficult to set an air gap at a predetermined dimension (usually 0.3 mm) or less, lest that a rotor is in contact with a stator, resulting in decrease in the performance of the rotating machine.

Also, in a case where the sheet-shaped, isotropic, resin-bonded rare earth magnet having a thickness of 5mm or less, preferably 2mm or less is used for a field magnet for a rotating machine, if the resin-bonded magnet had poor surface roughness (maximum roughness $R_{max}$), it would also be difficult to set an air gap in the rotating machine at a predetermined dimension (usually 0.3 mm) or less. Further, because the sheet-shaped, resin-bonded magnet is usually in a wound state, it is important to that the sheet-shaped, resin-bonded magnet has increased cracking resistance (durability) when bended at a predetermined radius of curvature.

Thus, there is recently increasing demand to provide the isotropic, resin-bonded rare earth magnets with improved magnetizability, thinning, elongation, dimensional accuracy in molded products, and durability.

OBJECT OF THE INVENTION

Therefore, an object of the present invention is to solve the problems of the conventional art, thereby providing a high-performance, sheet-shaped, isotropic, resin-bonded R-T-N magnet, wherein R is at least one of rare earth elements including Y, Sm being indispensable, T is Fe or Fe and Co, and having a decreased surface roughness (maximum roughness: $R_{max}$) compared with the conventional resin-bonded magnet.

Another object of the present invention is to provide a high-performance, sheet-shaped, isotropic, resin-bonded magnet comprising R-T-N isotropic magnet powder, R'-T'-B isotropic magnet powder substantially comprising as main phase an $R'_2T'_{14}B$-type intermetallic compound, wherein R' is at least one of rare earth element including Y, Nd being indispensable, and T' is Fe or Fe and Co, and a binder, and having a decreased surface roughness (maximum roughness:
$R_{max}$) compared with the conventional resin-bonded magnet.

A further object of the present invention is to provide a high-performance, ring-shaped or cylindrical, isotropic, resin-bonded R-T-N magnet having an improved roundness in an external or internal peripheral surface compared with the conventional resin-bonded magnet.

A still further object of the present invention is to provide a high-performance, ring-shaped or cylindrical, isotropic, resin-bonded magnet comprising R-T-N isotropic magnet powder, R'-T'-B isotropic magnet powder and a binder substantially, and having an improved roundness of in an external or internal peripheral surface compared with the conventional resin-bonded magnet.

A still further object of the present invention is to provide a high-performance, sheet-shaped, isotropic, resin-bonded, (Sm, La)-T-N-type magnet having an improved magnetizability compared with the conventional resin-bonded magnet.

A still further object of the present invention is to provide a high-performance, isotropic, resin-bonded magnet substantially comprising an (Sm, La) -T-N isotropic magnet powder having an improved magnetizability compared with the conventional resin-bonded magnet, R'-T'-B isotropic magnet powder and a binder.

A still further object of the present invention is to provide a rotating machine and magnet roll both constituted by such an isotropic, resin-bonded magnet.

A still further object of the present invention is to provide a compound and the method of producing it for such an isotropic, resin-bonded magnet.

DISCLOSURE OF THE INVENTION

The isotropic, resin-bonded magnet according to an embodiment of the present invention substantially comprises R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and $\alpha$, $\beta$, $\gamma$ and $\delta$ satisfy $4\leq\alpha\leq15$, $0\leq\beta\leq10$, $0\leq\gamma\leq4$ and $4\leq\delta\leq30$, respectively, and a binder, in the form of a sheet-shaped, molded product having a thickness of 0.1-5 mm, with the maximum roughness ($R_{max}$) defined by JIS B 0601 decreased to 15 $\mu$m or less.

The sheet-shaped, isotropic, resin-bonded magnet of the present invention is suitable for magnet appliances having small magnetic gaps.

The isotropic, resin-bonded magnet according to another embodiment of the present invention substantially comprises (a) R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and $\alpha$, $\beta$, $\gamma$ and $\delta$ satisfy $4\leq\alpha\leq15$, $0\leq\beta\leq10$, $0\leq\gamma\leq4$ and $4\leq\delta\leq30$, respectively, (b) R'-T'-B magnet powder comprising as a main phase an $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding the above two kinds of magnet powder, is molded to a sheet-shaped, isotropic, resin-bonded magnet having a thickness of 0.1-5 mm, decreases a maximum roughness ($R_{max}$) defined by JIS B 0601 to 15 μm or less.

The sheet-shaped, isotropic, resin-bonded magnet of the present invention has high $(BH)_{max}$ and is suitable for magnet appliances having small magnetic gaps.

The isotropic, resin-bonded magnet according to a further embodiment of the present invention substantially comprises R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, and a binder, in the form of a ring-shaped or cylindrical, molded product with the deviation of its outer diameter from a diameter of a true circle decreased to 15 μm or less.

In the above ring-shaped, isotropic, resin-bonded magnet, the deviation of its inner diameter from a diameter of a true circle can be decreased to 15 μm or less.

The ring-shaped or cylindrical, isotropic, resin-bonded magnet of the present invention is suitable for magnet appliances having small magnetic gaps.

The isotropic, resin-bonded magnet according to a still further embodiment of the present invention substantially comprises (a) R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, (b) R'-T'-B magnet powder comprising as a main phase $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding the above two kinds of magnet powder, in the form of a ring-shaped or cylindrical; molded product with the deviation of its outer diameter from a diameter of a true circle decreased to 15 μm or less.

In the above ring-shaped, isotropic, resin-bonded magnet, the deviation of its inner diameter from a diameter of a true circle (roundness of inner surface) can be decreased to 15 μm or less.

The ring-shaped or cylindrical, isotropic, resin-bonded magnet of the present invention is suitable for magnet appliances having small magnetic gaps.

The isotropic, resin-bonded magnet according to a still further embodiment of the present invention substantially comprises R-T-N magnet powder having a main component composition represented by $R_\alpha T_{100-(\alpha+\beta+\gamma+\delta)}M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, and a binder, in the form of a sheet-shaped, molded product having a thickness of 0.1-5 mm. Here, the inevitable rare earth elements are other rare earth elements than Sm and La, such as Nd, Ce, etc., which may enter in recycling. The sheet-shaped, resin-bonded magnet is excellent in magnetizability.

The above sheet-shaped, resin-bonded magnet can be provided with a decreased surface roughness of 15 μm or less, expressed by the maximum roughness $R_{max}$ defined by JIS B 0601, suitable for magnet appliances having small magnetic gaps.

The isotropic, resin-bonded magnet according to a still further embodiment of the present invention substantially comprises (a) R-T-N magnet powder having a main component composition represented by $R_\alpha T_{100-(\alpha+\beta+\gamma+\delta)}M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, (b)R'-T'-B magnet powder comprising as a main phase $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding the above two kinds of magnet powder.

This isotropic, resin-bonded magnet has improved magnetizability by contribution of the R-T-N magnet powder, and high $(BH)_{max}$ by contribution of the R'-T'-B magnet powder.

The isotropic, resin-bonded magnet is useful in the form of a sheet-shaped, molded product having a thickness of 0.1-5 mm. Particularly a sheet-shaped, isotropic, resin-bonded magnet having the maximum roughness $R_{max}$ (defined by JIS B 0601) decreased to 15 μm or less is suitable for magnet appliances having small magnetic gaps.

With the above R-T-N magnet powder comprising a hard magnetic phase having a $Th_2Zn_{17}$- or $Th_2Ni_{17}$-type crystal structure as a main phase, the main phase having an average crystal grain size of 0.01-1 μm, the isotropic, resin-bonded magnet can be provided with improved durability (cracking resistance, etc.). With the R-T-N magnet powder comprising a hard magnetic phase having a $TbCu_7$-type crystal structure as a main phase, the main phase having an average crystal grain size of 0.002-0.5 μm, the isotropic, resin-bonded magnet can be provided with high $(BH)_{max}$.

The rotating machine constituted by using the above isotropic, resin-bonded magnet has high performance. The magnet roll constituted by the above isotropic, resin-bonded magnet can be assembled in copiers and printers providing high-accuracy pictures.

The isotropic compound according to an embodiment of the present invention comprises R-T-N magnet powder having a main component composition represented by $R_\alpha T_{100-(\alpha+\beta+\gamma+\delta)}M_\beta B_\gamma N_\delta$ by atomic %, wherein R substantially comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4\le\alpha\le15$, $0\le\beta\le10$, $0\le\gamma\le4$ and $4\le\delta\le30$, respectively, and a binder. This compound provides isotropic, resin-bonded magnets with improved magnetizability.

With the R-T-N magnet powder comprises a hard magnetic phase having a $Th_2Zn_{17}$- or $Th_2Ni_{17}$-type crystal structure as a main phase, the main phase having an average crystal grain size of 0.01-1 μm, the isotropic, resin-bonded magnet has high strength.

With the R-T-N magnet powder comprising a hard magnetic phase having a $TbCu_7$-type crystal structure as a main phase, the main phase having an average crystal grain size of 0.002-0.5 μm, the isotropic, resin-bonded magnet has high $(BH)_{max}$.

The isotropic compound according to another embodiment of the present invention comprises (a) R-T-N magnet powder having a main component composition represented by $R_\alpha T_{100-(\alpha+\beta+\gamma+\delta)}M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4\le\alpha\le15$, $0\le\beta\le10$, $0\le\gamma\le4$ and $4\le\delta\le30$, respectively, (b) R'-T'-B magnet powder comprising as main phase a $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding the above two kinds of magnet powder.

The isotropic, resin-bonded magnet formed from this compound has improved magnetizability by contribution of the R-T-N magnet powder and has high $(BH)_{max}$ by contribution of the R'-T'-B magnet powder.

With the R-T-N magnet powder comprising a hard magnetic phase having a $Th_2Zn_{17}$- or $Th_2Ni_{17}$-type crystal structure as a main phase, the main phase having an average crystal grain size of 0.01-1 μm, the isotropic, resin-bonded magnet has improved strength. With the R-T-N magnet powder comprising a hard magnetic phase having a $Th_2Cu_7$-type crystal structure as main phase, the main phase having an average crystal grain size of 0.002-0.5 μm, the isotropic, resin-bonded magnet has high $(BH)_{max}$.

The first method for producing an isotropic compound according to the present invention comprises the steps of (1) introducing into an extruder a mixture of R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4\le\alpha\le15$, $0\le\beta\le10$, $0\le\gamma\le4$ and $4\le\delta\le30$, respectively, and a binder, (2) extruding the resultant blend through a nozzle of 300 μm or less in diameter attached to the extruder, and (3) cutting and rounding the extruded blend.

The above production method can provide compounds (pellets) more densely filled with R-T-N magnet powder and isotropic, resin-bonded magnets having higher dimensional accuracy and magnetic properties than conventional methods.

The second method for producing an isotropic compound according to the present invention comprises the steps of (1) introducing into an extruder a mixture substantially comprises (a) R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4\le\alpha\le15$, $0\le\beta\le10$, $0\le\gamma\le4$ and $4\le\delta\le30$, respectively, (b) R'-T'-B magnet powder comprising as a main phase an $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder boding the above two magnet powders, (2) extruding the resultant blend through a nozzle of 300 μm or less in diameter attached to the extruder, and (3) cutting and rounding the extruded blend.

The above production method can provide compounds (pellets) more densely filled with the magnet powder and isotropic, resin-bonded magnets having higher dimensional accuracy and $(BH)_{max}$ than conventional methods.

BRIEF DESCRIPTION OF THE DRAWINGS

Fig. 1 is a flowchart showing a method of producing the isotropic compound of the present invention;
Fig. 2 (a) is a cross-sectional view showing an important part of an extruder for producing the isotropic compound of the present invention;
Fig. 2 (b) is a cross-sectional view showing an important part of a rounding apparatus (Marumeraiser) for producing the isotropic compound of the present invention;
Fig. 3 (a) is a view showing Marumeraiser of Fig. 2 (b) from above;
Fig. 3 (b) is a partial cross-sectional view showing grooves on a rotatable table in Marumeraiser;
Fig. 3 (c) is a partial schematic view showing the angles of baffle blades disposed in Marumeraiser;
Fig. 4 (a) is a graph showing the relation between the height L and $(BH)_{max}$ of cylindrical isotropic, resin-bonded magnets in EXAMPLE 3 and COMPARATIVE EXAMPLE 4;
Fig. 4 (b) is a schematic perspective view showing a cut position of the cylindrical resin-bonded magnet;
Fig. 5 (a) is a view showing an example of the roundness in an external peripheral surface of a ring-shaped, isotropic, resin-bonded magnet (height L: maximum) in EXAMPLE 4;
Fig. 5 (b) is a view showing an example of the roundness in an external peripheral surface of a ring-shaped, isotropic, resin-bonded magnet (height L: minimum) in EXAMPLE 4;
Fig. 6 (a) is a view showing the roundness in an external peripheral surface of a ring-shaped, isotropic, resin-bonded magnet (height L: maximum) in COMPARATIVE EXAMPLE 5;
Fig. 6 (b) is a view showing the roundness in an external peripheral surface of a ring-shaped, isotropic, resin-bonded magnet (height L: minimum) in COMPARATIVE EXAMPLE 5;
Fig. 7 (a) is a graph showing a density distribution of ring-shaped, isotropic, resin-bonded magnets in an L direction in EXAMPLE 6 and COMPARATIVE EXAMPLE 6;
Fig. 7 (b) is a perspective view showing a cut position of a ring-shaped, isotropic, resin-bonded magnet;
Fig. 8 is a schematic view showing the definition of maximum diameter and minimum diameter;
Fig. 9 is a cross-sectional view showing an important part of an example of a calendar roll-molding equipment;
Fig. 10 is a graph showing La content dependency of magnetizability;
Fig. 11 is a graph showing irreversible loss of flux depending on the La content;
Fig. 12 (a) is a scanning-type electron photomicrograph of round magnet powder particles in EXAMPLE 19;
Fig. 12 (b) is a scanning-type electron photomicrograph of flat magnet powder particles in COMPARATIVE EXAMPLE 14;
Fig. 13 (a) is a schematic view showing the relation between the strength and stress of the nitride magnet powder of the present invention;
Fig. 13 (b) is a schematic view showing the relation between the strength and stress of the magnet powder in comparative examples;
Fig. 14 is a cross sectional view showing an important part of one example of a developing roll apparatus comprising the magnet roll of the present invention;
Fig. 15 is a cross sectional view showing a magnet roll according to an embodiment of the present invention;
Fig. 16 (a) is a cross sectional view showing a magnet roll comprising a sheet-shaped, resin-bonded magnet attached to a groove having a U-shaped cross section according to another embodiment of the present invention having;
Fig. 16 (b) is a cross sectional view showing a magnet roll comprising a C-type magnet having a gap filled with a sheet-shaped, resin-bonded magnet according to a further embodiment of the present invention;
Fig. 16(c) is a cross sectional view showing a magnet roll comprising a sheet-shaped, resin-bonded magnet wound around and fixed to a shaft according to a still further embodiment of the present invention;
Fig. 17 is a cross sectional view showing a magnet roll according to a still further embodiment of the present invention;
Fig. 18 is a cross sectional view showing a magnet roll according to a still further embodiment of the present invention;
Fig. 19 (a) is a side view showing a magnet roll having a seam slanting relative to an axial direction according to a still further embodiment of the present invention;
Fig. 19 (b) is a side view showing a magnet roll having a seam slanting relative to an axial direction with a gap at a position corresponding to the seam according to a still further embodiment of the present invention
Fig. 20 (a) is a front view showing an important part of a rotor according to an embodiment of the present invention;
Fig. 20 (b) is a rear view showing an important part of a rotor according to an embodiment of the present invention;
Fig. 21 is a graph showing one example of a surface magnetic flux density distribution on a rotor constituting the rotating machine of the present invention;

Fig. 22 (a) is a perspective view showing a field magnet having parallel seams and magnetic poles for constituting the rotating machine of the present invention;

Fig. 22 (b) is a perspective view showing a field magnet having slanting seams and magnetic poles for constituting the rotating machine of the present invention;

Fig. 22 (c) is a perspective view showing a field magnet having slanting and bent seams and magnetic poles for constituting the rotating machine of the present invention;

Fig. 22 (d) is a perspective view showing a field magnet having seams and magnetic poles for constituting the rotating machine of the present invention, with gaps corresponding to the seams;

Fig. 23 (a) is a cross sectional view showing an outer-rotor-type rotor of the present invention;

Fig. 23 (b) is a cross sectional view showing an inner-rotor-type rotor to which a field magnet formed by winding the sheet-shaped, resin-bonded magnet of the present invention by one turn is adhered;

Fig. 23 (c) is a cross sectional view showing an inner-rotor-type rotor in which the sheet-shaped, resin-bonded magnet of the present invention is adhered to an outer surface of the rotor core via equal interval gaps;

Fig. 24 (a) is a cross-sectional view showing an important part of a rotating machine according to a still further embodiment of the present invention;

Fig. 24 (b) is a cross-sectional view taken along the line B-B in Fig. 24(a);

Fig. 25 is a graph showing the relation between a torque and a mechanical angle in the rotating machine of EXAMPLE 36;

Fig. 26 (a) is a cross-sectional view showing a rotating machine according to a still further embodiment of the present invention;

Fig. 26 (b) is a cross-sectional view taken along the line C-C in Fig. 26 (a);

Fig. 27 (a) is a cross-sectional view showing an important part of a rotating machine according to a still further embodiment of the present invention;

Fig. 27 (b) is a cross-sectional view taken along the line D-D in Fig. 27 (a);

Fig. 27 (c) is a plan view showing a field magnet formed from a sheet-shaped, isotropic, resin-bonded magnet by punching in a doughnut shape and provided with a plurality of magnetic poles in a plane in a rotational direction; and

Fig. 28 is a graph showing the relation between a torque and a mechanical angle in the rotating machine of EXAMPLE 38.

DETAILED DESCRIPTION OF THE PREFERRED EMBODIMENTS

The R-T-N magnet powder for the isotropic, resin-bonded magnet of the present invention having good roundness or surface roughness has a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable; T is Fe or Fe and Co; M is at least one element selected from the group consisting of Al, Ti, V, Cr, Mn, Cu, Ga, Zr, Nb, Mo, Hf, Ta, W and Zn, and $\alpha$, $\beta$, $\gamma$ and $\delta$ satisfy $4 \leq \alpha \leq 15$, $0 \leq \beta \leq 10$, $0 \leq \gamma \leq 4$ and $4 \leq \delta \leq 30$, respectively.

R includes Sm as an indispensable element and may further include at least one rare earth element selected from the group consisting of La, Y, Ce, Pr, Nd, Eu, Gd, Tb, Dy, Ho, Er, Tm, Yb and Lu. Mixtures of two or more rare earth elements such as Sm misch metals or didymium may also be used. To obtain an intrinsic coercivity iHc≥397.9 kA/m (5 kOe) at room temperature, the percentage of Sm in R is preferably 50 atomic % or more, more preferably 70 atomic % or more. Particularly preferable is Sm alone except for inevitable rare earth elements.

The content ($\alpha$) of R is preferably 4-15 atomic %, more preferably 6-12 atomic %. When R is less than 4 atomic %, the magnet cannot have iHc≥397.9 kA/m (5 kOe) at room temperature. On the other hand, when R is more than 15 atomic %, the magnet has drastically reduced $(BH)_{max}$.

When R comprises Sm, La and inevitable rare earth elements, and when the content of La is 0.05-2 atomic %, the isotropic, resin-bonded magnet has improved magnetizability. When the content of La is less than 0.05 atomic %, the magnet does not have improved magnetizability. On the other hand, when the content of La is more than 2 atomic %, the magnet exhibits rather decreased squareness (Hk) in a demagnetization curve. The reason therefor is that high $(BH)_{max}$ and Hk are obtained in the above La content range when magnetized at 1989.5 kA/m (25kOe) or less at room temperature, despite slightly decreased anisotropic magnetic field and saturation magnetic flux density. Hk is a value of H corresponding to 0.7 Br in the second quadrant of a $4\pi$I-H curve, a measure of rectangularity of the demagnetization curve, wherein Br is a residual magnetic flux density, H is the intensity of a magnetic field, and $4\pi$I is the intensity of magnetization.

The content ($\beta$) of an M element, at least one element selected from the group consisting of Al, Ti, V, Cr, Mn, Cu, Ga, Zr, Nb, Mo, Hf, Ta, W and Zn, is preferably 0.5-10 atomic %, more preferably 1-4 atomic %. When the M element exceeds 10 atomic %, an $Sm(Fe, M)_{12}N_z$ phase of a $ThMn_{12}$-type is generated, resulting in drastically decrease in iHc. On the other hand, when the M element is less than 0.5 atomic %, the effects of its addition are not obtained substantially.

The content (γ) of B is preferably 0.1-4 atomic %, more preferably 1-3 atomic %. When B is less than 0.1 atomic %, the effects of improving iHc are not obtained substantially. On the other hand, when B exceeds 4 atomic %, iHc decreases drastically.

The content (δ) of nitrogen is preferably 4-30 atomic %, more preferably 10-20 atomic %. When the content of nitrogen is less than 4 atomic % or more than 30 atomic %, iHc and $(BH)_{max}$ decrease drastically.

To elevate a Curie temperature and a temperature coefficient of iHc, part of Fe is preferably replaced with 0.01-30 atomic % of Co. The content of Co is more preferably 1-20 atomic %. When Co exceeds 30 atomic %, $(BH)_{max}$ and iHc decrease remarkably. On the other hand, when Co is less than 0.01 atomic %, no substantial effects of its addition are obtained.

The method of producing the R-T-N magnet powder will be described below. A strip-casting method, a rapid-quenching method, a molding method, and a reduction/diffusion method may be used to produce an R-T mother alloy for nitriding.

When an R-T mother alloy melt is rapidly quenched by a strip-casting method, the R-T mother alloy melt is preferably poured onto a surface of a cooling roll made of a copper alloy, etc. rotating at a peripheral speed of 0.05-10 m/sec in single-roll- or twin-roll-type melt-quenching apparatus. The resultant thin ribbon of the R-T mother alloy preferably has a thickness of 200 μm-3 mm. To suppress the generation of α-Fe, the peripheral speed of the cooling roll is more preferably 0.1-5 m/sec and the thickness of the thin ribbon of the R-T mother alloy is preferably 300 μm-1 mm. The resultant thin mother alloy ribbon is subjected to a hydrogenation-decomposition reaction treatment, a subsequent dehydrogenation-recombination reaction treatment and then a nitriding treatment, to form R-T-N magnet powder in the form of round, easy-to-charge particles, which substantially comprises a hard magnetic phase having a $Th_2Zn_{17}$- or $Th_2Ni_{17}$-type crystal structure and has an average particle size of 0.01-1 μm, while suppressing the generation of α-Fe.

In the case of the rapid-quenching method, the peripheral speed of the cooling roll is 15 m/sec or more, preferably 30 m/sec or more, more preferably 45 m/sec or more, particularly preferably 50-120 m/sec in the above melt-quenching apparatus, with a smaller amount of a melt poured than in the case of a strip-casting method, to form a thin ribbon (flake) of a R-T mother alloy having a thickness of preferably about 5-200 μm, more preferably 5-50 μm. This thin mother alloy ribbon is in a state of an ultra-fine crystal structure and/or an amorphous structure. This thin mother alloy ribbon is heat-treated at 400-800°C for 0.1-300 hours, more preferably at 600-800°C for 0.2-10 hours in an inert gas atmosphere containing no nitrogen or in vacuum to turn its crystal structure to microcrystalline, and then cooled to room temperature. Next, nitriding is carried out to provide the R-T-N magnet powder with a hard magnetic phase having a $TbCu_7$-type crystal structure as a main phase and an average crystal grain size of 0.002-0.5 μm. Outside the above heat treatment conditions, it is difficult to provide the R-T-N magnet powder with an average crystal grain size of 0.002-0.5 μm.

Because there is a remarkable segregation of α-Fe, etc. in an R-T mother alloy ingot produced by the molding method, the ingot is subjected to a homogenization heat treatment under the heating conditions of 1010-1280°C x 1-40 hours in an inert gas atmosphere (except for nitrogen gas), and cooled to room temperature. It is then subjected to a hydrogenation-decomposition reaction treatment and a dehydrogenation-recombination reaction treatment and nitrided in this order, to form R-T-N magnet powder in the form of round, easy-to-charge particles, which substantially comprises a hard magnetic phase having a $Th_2Zn_{17}$- or $Th_2Ni_{17}$-type crystal structure and an average crystal grain size of 0.01-1 μm, while suppressing the generation of α-Fe. When the homogenization heat treatment conditions are less than 1010°C x 1 hour, sufficient homogenization cannot be achieved. On the other hand, when the homogenization heat treatment conditions are more than 1280°C x 40 hours, the homogenized ingot has a remarkably different composition from that of the ingot before the treatment by oxidation and evaporation of Sm, etc.

In the case of a reduction/diffusion method, for instance, oxides of R and Fe or its oxide are formulated to a main component composition of an R-Fe mother alloy corresponding to the R-Fe-N magnet powder. Further, a reducing agent (at least one of Ca, Mg, $CaH_2$ and $MgH_2$) is mixed with the above formulation, in an amount 0.5-2 times the amount (stoichiometric amount) with which the oxides of R and if necessary, the oxide of Fe are 100% reduced by a chemical reaction. The resultant mixture is heated in an inert gas atmosphere at 1000-1300°C for 1-20 hours to reduce the oxides of R, etc., and after R and Fe are fully diffused in each other, it is cooled to room temperature. When the amount of the reducing agent added is less than 0.5 times the stoichiometric amount, there is no reduction reaction effective in industrial production. On the other hand, when it exceeds 2 times the stoichiometric amount, the amount of the reducing agent finally remaining in the magnet powder increases, resulting in decrease in magnetic properties. When the heating conditions in an inert gas atmosphere are less than 1000°C x 1 hour, a reduction/diffusion reaction effective in industrial production does not proceed. On the other hand, when it is more than 1300°C x 20 hours, the reduction/diffusion reaction furnace is remarkably deteriorated. The resultant reduction/diffusion reaction is introduced into a washing liquid to remove reaction by-products such as CaO, etc., and then dehydrated and dried in vacuum to obtain a reduced and diffused R-Fe mother alloy.

The R-T mother alloy powder thus formed usually has an average particle size of 10-100 μm, with the Ca

content of 0.4 weight % or less, preferably 0.2 weight % or less, more preferably 0.1 weight % or less. The content of oxygen is generally 0.8 weight % or less, preferably 0.4 weight % or less, more preferably 0.2 weight % or less. The content of carbon is generally 0.3 weight % or less, preferably 0.2 weight % or less, more preferably 0.1 weight % or less.

Next, a hydrogenation-decomposition reaction treatment, a dehydrogenation-recombination reaction treatment and nitriding are carried out, to form R-T-N magnet powder in the form of round, easy-to-charge particles, which substantially comprises a hard magnetic phase having a $Th_2Zn_{17}$- or $Th_2Ni_{17}$-type crystal structure, the hard magnetic phase having an average crystal grain size of 0.01-1 μm, while suppressing the generation of α-Fe.

The conditions for the hydrogenation-decomposition reaction treatment and the dehydrogenation-recombination reaction treatment will be explained below.

The R-T mother alloy is subjected to a hydrogenation-decomposition reaction treatment comprising heating at 675-900°C for 0.5-8 hours in a hydrogen gas of 1.0 x $10^4$-1.0 x $10^6$ Pa (0.1-10 atm) or in an inert gas (except for nitrogen gas) having a hydrogen gas partial pressure of 1.0 x $10^4$-1.0 x $10^6$ Pa (0.1-10 atm), and then to a dehydrogenation-recombination reaction treatment comprising heating at 700-900°C for 0.5-20 hours in vacuum of 1.3 Pa (1 x $10^{-2}$ Torr) or less. The hydrogenation-decomposition reaction decomposes the mother alloy to hydrides of rare earth elements R such as RHx phases, etc. By the subsequent dehydrogenation-recombination reaction, the RHx phases are recombined with the mother alloy phase to provide an mother alloy with an average recrystallized grain size of 0.01-1 μm. Individual recrystallized grains are oriented randomly. When the hydrogen partial pressure in the hydrogenation-decomposition reaction is more than 1.0 x $10^4$ Pa (0.1 atm), a decomposition reaction does not take place. On the other hand, when it is less than 1.0 x $10^6$ Pa (10 atm), a large evacuation facility is needed, resulting in increase in production cost. Accordingly, the hydrogen partial pressure is preferably 1.0 x $10^4$-1.0 x $10^6$ Pa (0.1-10 atm), more preferably 5.0 x $10^4$-5.0 x $10^5$ Pa (0.5-5 atm). When the heating conditions of the hydrogenation-decomposition reaction are less than 675°C (substantially lower limit temperature of hydrogenation decomposition) x 0.5 hours, the mother alloy only absorbs hydrogen without being decomposed to RHx phases, etc. On the other hand, when they are more than 900°C x 8 hours, the dehydrogenated mother alloy becomes coarse, so that the isotropic, resin-bonded magnet has drastically decreased iHc. Accordingly, the heating conditions of hydrogenation-decomposition reaction are preferably 675-900°C x 0.5-8 hours, more preferably 675-800°C x 0.5-4 hours.

When the hydrogen partial pressure in the dehydrogenation-recombination reaction is more than 1.3 Pa (1 x $10^{-2}$ Torr), the treatment takes too much time. On the other hand, when it is less than 1.2 x $10^{-3}$ Pa (9 x $10^{-6}$Torr), a large evacuation facility is needed, resulting in increase in cost. When the heating conditions in the dehydrogenation-recombination reaction are less than 700°C x 0.5 hours, the decomposition of RHx, etc. does not proceed. On the other hand, when they are more than 900°C x 20 hours, recrystallized grains become coarse, so that the isotropic, resin-bonded magnet has drastically decreased iHc. Accordingly, the heating conditions in the dehydrogenation-recombination reaction are preferably 700-900°C x 0.5-20 hours, more preferably 800-900°C x 0.5-5 hours.

After the hydrogenation-decomposition reaction treatment and the subsequent dehydrogenation-recombination reaction treatment, the magnet powder is pulverized if necessary, and then classified or sieved to adjust its particle size distribution for nitriding.

The conditions of nitriding will be explained below.

The nitriding is carried out in the atmosphere of nitrogen gas of 2.0 x $10^4$-1.0 x $10^6$ Pa (0.2-10 atm), a (hydrogen+nitrogen) mixed gas containing 1-95 mol % of hydrogen, the balance being nitrogen, or a ($NH_3$ +hydrogen) mixed gas containing 1-50 mol % of $NH_3$, the balance being hydrogen. Preferable as the nitriding method for practical reasons is a gas-nitriding method comprising heating the mother alloy powder in the above nitriding atmosphere.

Gas-nitriding comprising heating at 300-650°C for 0.1-30 hours is useful for practical applications. The heating conditions of gas-nitriding are preferably 300-650°C x 0.1-30 hours, more preferably 400-550°C x 0.5-20 hours. When the heating conditions are less than 300°C x 0.1 hour, nitriding is insufficient. On the other hand, when they are more than 650°C x 30 hours, the R-N phase is generated, resulting in a decrease in iHc. The pressure of nitriding gas is preferably 2.0 x $10^4$-1.0 x $10^6$ Pa (0.2-10 atm), more preferably 5.0 x $10^4$-5.0 x $10^5$ Pa (0.5-5 atm). The nitride reaction is very slow at lower than 2.0 x $10^4$ Pa (0.2 atm), while the pressure of more than 1.0 x $10^6$ Pa (10 atm) necessitates a more large and expensive high-pressure gas apparatus.

After nitriding, a heat treatment in vacuum or in an inert gas atmosphere (except for nitrogen gas) at 300-600°C for 0.5-50 hours can increase iHc.

Thus, the resultant R-T-N magnet powder may contain 0.01-10 atomic % of hydrogen.

The average particle size of R-T-N magnet powder is preferably 5-300 μm, more preferably 10-100 μm, particularly preferably 10-50 μm. When the average particle size is less than 5 μm, remarkable oxidation takes place, resulting in decrease in $(BH)_{max}$. On the other hand, when the average particle size is more than 300 μm, the resultant resin-bonded magnet has poor surface, failing to be used for applications with small magnetic gap in some cases.

When the R-T-N magnet powder comprises a hard magnetic phase having a $Th_2Zn_{17}$- or $Th_2Ni_{17}$-type crystal structure as a main phase, the average crystal grain size of the main phase is preferably 0.01-1 μm, more preferably 0.01-0.3 μm to increase $(BH)_{max}$ and iHc. It is difficult to form a 2-17-type crystal phase having an average crystal grain size of less than 0.01 μm in industrial production. When it is more than 1 μm, iHc is less than 397.9 kA/m (5 kOe) at room temperature. In addition to controlling the average crystal grain size, the reduction of the ratio of α-Fe in this R-T-N magnet powder as much as possible is indispensable to increase $(BH)_{max}$ and iHc. The content (α) of R is preferably 8-15 atomic %, so that the average area ratio of α-Fe is 5% or less, preferably 2% or less, more preferably 1% or less in a cross section structure of R-T-N magnet powder.

When the R-T-N magnet powder has a hard magnetic phase of $TbCu_7$-type crystal structure as a main phase, the main phase has an average crystal grain size of preferably 0.002-0.5 μm, more preferably 0.005-0.05 μm, wherein high $(BH)_{max}$ and iHc. When the main phase has an average crystal grain size of less than 0.002 μm or more than 0.5 μm, the industrial production is difficult.

Incidentally, though the hard magnetic phase is preferably based on R, T and N, with a $TbCu_7$-type crystal phase except for inevitable impurities phase, when hard magnetic phase comprises a $TbCu_7$-type crystal phase as a main phase, the hard magnetic phase constituted by a mixed crystal of $Th_2Zn_{17}$- and/or $Th_2Ni_{17}$-type crystal phases is within the scope of the present invention.

Though the M element mainly exists in the hard magnetic phase, it may exist in the soft magnetic phase (T phase). Because the R-T-N magnet powder is constituted by a $TbCu_7$-type hard magnetic phase except for inevitable impurities phase, the content (α) of R is preferably 8-15 atomic %.

Also, because the R-T-N magnet powder is constituted by a $TbCu_7$-type hard magnetic phase and a soft magnetic phase of a bcc structure except for inevitable impurities phase, the content (α) of R is preferably 4 atomic % or more and less than 8 atomic %, more preferably 5-7 atomic %.

The soft magnetic phase is a T phase having a bcc (body-centered cubic lattice) structure, which is considered α-Fe, part of which may be substituted by Co, M or R elements, etc. When the soft magnetic phase has an average crystal grain size of preferably 0.002-0.06 μm, more preferably 0.005-0.04 μm, the resin-bonded magnet has improved magnetizability and higher $(BH)_{max}$ and iHc of 397.9 kA/m (5kOe) or more at room temperature than the conventional resin-bonded magnet. Because this R-T-N magnet powder has an ultra-fine crystal structure having a hard magnetic phase having high crystal magnetic anisotropy and a soft magnetic phase having high saturation magnetization in a mixed manner, it is considered that there are a lot of boundaries between the hard magnetic phase and the soft magnetic phase, generating remarkable exchange anisotropy. When the soft magnetic phase has an average crystal grain size of less than 0.002 μm, the industrial production of the R-T-N magnet powder is difficult. On the other hand, when it is more than 0.06 μm, the deterioration of iHc is remarkable.

An average area ratio of the $TbCu_7$-type hard magnetic phase / the soft magnetic phase having a bcc structure is preferably (90-40%) / (10-60%), more preferably (90-65%) / (10-35%). When the ratio of the soft magnetic phase is less than 10%, there are no substantial effects of improving Br and $(BH)_{max}$ by contribution of the soft magnetic phase. On the other hand, when it is more than 60%, it is difficult to obtain iHc of 397.9 kA/m (5kOe) or more at room temperature.

The average area ratios of the soft magnetic phase, the hard magnetic phase and α-Fe, etc. are calculated by an area analysis in the following manner, with these phases identified at the same time. First, the transmission-type electron photomicrograph of the cross section structure of the R-T-N magnet powder particles is image-analyzed, to calculate the number *n* of crystal grains of the soft magnetic phase (or hard magnetic phase or α-Fe, etc.) and the total cross section area S of crystal grains in a cross section photograph. Calculating an average cross sectional area S/n per one crystal grain of the soft magnetic phase (or hard magnetic phase or α-Fe, etc.), an diameter D of a circle having an area S/n is defined as an average crystal grain size. In this case, n=50. The average crystal grain size D is calculated by the formula: $\pi (D/2)^2 = S/n$.

The R'-T'-B isotropic magnet powder may be produced, for instance, as follows: First, a molten R'-T'-B alloy adjusted to have a predetermined composition comprising as a main phase an $R'_2T'_{14}B$-type intermetallic compound, wherein R' is at least one of rare earth elements including Y, Nd being indispensable, and T' is Fe or Fe and Co, is rapidly quenched to form a substantially amorphous thin ribbon. Next, the thin ribbon is heated in an Ar gas atmosphere or in vacuum at 550-800°C for 0.5-20 hours, and then cooled to room temperature to adjust the average crystal grain size to 0.01-0.5 μm. Outside the above heat treatment conditions, it is difficult to adjust the average crystal grain size to 0.01-0.5 μm, failing to provide the isotropic, resin-bonded magnet with increased $(BH)_{max}$ and iHc.

The heat-treated thin ribbon is pulverized to powder having an average particle size of 10-300 μm, preferably 50-150 μm, and if necessary, classified or sieved for use in the isotropic, resin-bonded magnet. When the average particle size is less than 10 μm, there is remarkable deterioration in magnetic properties by oxidation. On the other hand, when the average particle size is more than 300 μm, it may not be suitable for applications with small magnetic gaps in some cases.

To achieve high $(BH)_{max}$ and iHc, the main component composition of the R'-T'-B magnet powder should be 8-16% of R', 4-11% of B, and 10% or less of the M' element, wherein M' is at least one element selected from the group consisting of Al, Si, Nb, W, V, Mo, Ta, Zr, Hf, P, C, Zn and Cu, the balance being T', in which Co is 30 atomic % or more. The ratio of Nd in R' is preferably 50 atomic % or more, and R' composed of Nd, Pr or inevitable component of R is useful. The contents of the other inevitable impurities are allowed.

Usable as binders for the isotropic, resin-bonded magnet (compound) of the present invention are thermoplastic resins, thermosetting resins, rubber materials, or alloys having melting points lower than the Curie temperature of the magnet powder. Among them, thermoplastic resins, thermosetting resins or rubber materials are useful for practical applications.

Particularly preferable thermosetting resins are liquid thermosetting resins. Their specific examples include epoxy resins, polyimide resins, polyester resins, phenol resins, fluorine resins, silicon resins, etc. The liquid epoxy resins are most preferable, because they are easy to handle, inexpensive and show good heat resistance.

The thermoplastic resins include polyamide resins (nylon 6, nylon 66, nylon 11 or nylon 12, etc.), polyphenylene sulfide resins, liquid-crystal polymer resins, thermoplastic polyimide resins, ethylene-ethyl acrylate copolymer resins, etc.

The rubber materials include natural rubbers, isoprene rubbers, butadiene rubbers, styrene-butadiene rubbers, butyl rubbers, ethylene-propylene rubbers, nitrile rubbers, acrylic rubbers, urethane rubbers, chloroprene rubbers, HYPALON, etc.

Though the formulation ratio of the binder to the magnet powder is not particularly restrictive, the magnet powder: the binder is preferably (80-99.5 parts by weight) : (20-0.5 parts by weight), more preferably (88-98 parts by weight) : (12-2 parts by weight). When the amount of the binder is less than 0.5 parts by weight, the binder cannot fully cover the magnet powder, rather resulting in decrease in magnetic properties and density. On the other hand, when the amount of the binder is more than 20 weight %, the bonded magnet contains too much a binder, failing to exhibiting useful magnetic properties.

When the magnet powder is composed of a mixed magnet powder of the R-T-N magnet powder and the R'-T'-B magnet powder, their ratios are such that the R-T-N magnet powder : the R'-T'-B magnet powder is preferably 10-90 parts by weight : 90-10 parts by weight, more preferably 20-80 parts by weight : 80-20 parts by weight. When the R-T-N magnet powder is less than 10 parts by weight, it is difficult to improve the magnetizability of the bonded magnet. On the other hand, when the R'-T'-B magnet powder is less than 10 parts by weight, it is difficult to improve $(BH)_{max}$.

The isotropic compound used in the present invention can be produced, for instance, as follows:

The granular compound blended under the conventional conditions (conventional blending is hereinafter referred to as "preliminary blending") in the form of pellets is charged into an extruder shown in Fig. 2 (a) equipped at an end with a nozzle orifice 7 (discharging opening) of 300 μm or less in diameter. The charged pellets are blended in the extruder and conveyed to the nozzle orifice 7, through which the compound is forcibly extruded. Because an extrudate is subjected to a strong compression force when extruded through the nozzle orifice 7, it is made dense, resulting in higher charging density of magnet powder particles. The compound extruded through the nozzle orifice 7 has a substantially columnar cross section, and is cut by its own weight to a predetermined length, thereby forming long columnar compound particles (P in Figure 2).

The columnar compound particles P are collected in a rounding apparatus, in which they are cut and rounded to obtain the isotropic compound of the present invention. For cutting and rounding operation, Marumeraiser (available from Fuji Paudal, tradename: Marumeraiser) is suitable. The addition of 0.01-0.5 weight % of a lubricant (calcium stearate, etc.) to a unit weight of the rounded compound preferably improves the fluidity and pressure transmittability of the compound. When the amount of the lubricant added is less than 0.01 weight %, there are no lubrication effects. On the other hand, when it exceeds 0.5 weight %, lubrication effects are saturated. The isotropic, resin-bonded magnet obtained from the compound of the present invention by compression molding, etc. suffers only extremely small variations in density among moldings lots, with better molding dimensional accuracy (roundness, etc.) than those of the conventional resin-bonded magnets.

The compound of the present invention is in the form of round particles substantially comprising the magnet powder and the binder, with a ratio ($a/b$) of the maximum diameter $a$ to the minimum diameter $b$ being 1-3, and the average particle size defined by $(a+b)/2$ being 50-300 μm. When the compound has $a/b$ of more than 3, it is too elongated, with drastically decreased fluidity (chargeability). On the other hand, the compound with $a/b$ of 1.00 cannot easily be produced in an industrial scale. Because the average particle size $(a/b)/2$ of the compound is restricted by the dimension of the nozzle orifice, it is properly 50-300 μm. When it is less than 50 μm, extrusion may be difficult in some cases. On the other hand, when it exceeds 300 μm, the compound exhibits decreased fluidity and magnetic properties.

The **structure** of the compound may be confirmed by observation with a scanning-type electron microscope. As the magnet powder + the binder = 100 weight %, when the percentage of the binder in the compound is 0.5-20 weight %, 10 or more magnet powder particles with the minimum diameter of 10-300 μm are contained on average in one compound of the present invention. When the average number of the magnet powder particles in one compound is less than 10, it is difficult for the compound to have improved magnetic properties and dimensional accuracy as compared with the conventional ones. Incidentally, as schematically shown in Fig. 8, the maximum length is defined as the maximum diameter in a cross-section photograph of the compound, the magnet powder particle or the nozzle orifice. Also, the minimum diameter is defined as the maximum length in a direction in perpendicular to the maximum diameter.

Though the production of the nozzle orifice is practically carried out by drilling, a nozzle orifice with improved dimensional accuracy can preferably be produced by working with laser or electron beams. The diameter of the nozzle orifice is preferably 50-300 μm relative to the average particle size of the compounds. Though the nozzle orifice may have a cross section in an elliptic, rectangular or irregular shape, it is preferable that in any cross section shape, the nozzle orifice has the maximum diameter of 300 μm or less and the minimum diameter of 50 μm or more in its cross section, to provide the compound with improved fluidity and pressure transmittability. The smaller the diameter of the nozzle orifice in a range in which clogging in the nozzle orifice can be prevented, the higher fluidity the compound has. To prevent the nozzle orifice from clogging at the time of extrusion, it is necessary that the magnet powder containing in the compound has a smaller particle size distribution than the dimension of the nozzle orifice, and for this purpose, the magnet powder is sieved or classified to adjust its particle size distribution.

When the binder in the isotropic, resin-bonded magnet is a thermoplastic resin, the molded product subjected to a heat treatment at 100-200°C for 0.5-5 hours in the air or an inert gas atmosphere and then cooled to room temperature. With this heat treatment, dimensional change and cracking, etc. with time can be suppressed in the isotropic, resin-bonded magnet products.

And when a thermosetting resin is used as the binder, the molded product is subjected to a heat-curing treatment at 100-200°C for 0.5-5 hours in the air or an inert gas atmosphere and then cooled to room temperature. When the heat curing conditions are less than 100°C x 0.5 hours, the polymerization reaction by heat curing is insufficient. On the other hand, when it exceeds 200°C x 5 hours, the effect of heat treatment is saturated. A heat curing treatment in an Ar gas atmosphere is particularly preferable because it improves $(BH)_{max}$.

The present invention will be described in detail referring to EXAMPLES below, without intention of restricting the scope of the present invention thereto.

EXAMPLE 1

High-dimensional precision, isotropic, resin-bonded magnet

Sm, Fe, Ti and B each having a purity of 99.9% were mixed to provide compositions of mother alloys corresponding to nitride magnet powder described below, and melted in a high-frequency furnace in an Ar gas atmosphere. Using a twin-roll strip casting machine equipped with two cooling copper rolls of 300 mm in diameter, the resultant mother alloy melt was poured onto a surface of the cooling roll rotating at a peripheral speed of 1 m/second, and rapidly quenched to provide a thin mother alloy ribbon having an average thickness of 300 μm. Next, the thin mother alloy ribbon was subjected to a dehydrogenation-recombination reaction treatment comprising heating at 800°C for 1 hour in hydrogen gas of 1.0 x $10^5$ Pa (1 atom) and next heating at 800°C for 1hour in vacuum of about 6.7 Pa (5 x $10^{-2}$ Torr) and then cooled to room temperature. The treated mother alloy was coarsely pulverized by a jaw crusher and a disc mill in an Ar gas atmosphere, and sieved under 75 μm.

Next, the resultant powder was nitrided at 450°C for 5 hours in a nitrogen gas of 1.0 x $10^5$ Pa (1atm) and then cooled to room temperature. Further, it was heat-treated at 400°C for 30 minutes in an Ar gas stream and then cooled to room temperature. Thus the obtained was nitride magnet powder having a main component composition of $Sm_{8.0}Fe_{bal}Ti_{2.0}B_{1.0}N_{12.0}$ by atomic % and an average particle size of 33 μm. The average particle size was measured by a laser diffraction-type apparatus for measuring particle size distribution (HEROS & RODOS available from Sympatec). This nitride magnet powder was substantially composed of a hard magnetic phase of a $Th_2Zn_{17}$-type crystal structure having an average crystal grain size of 0.21 μm, the average area ratio of α-Fe being 0.03%.

A mixture of 97.5 parts by weight of the above nitride magnet powder and 2.5 parts by weight of a liquid epoxy resin was introduced into a double-screw blender heated at about 90°C, preliminarily blended and granulated to provide pellets 1.

The resultant pellets 1 were charged into an extruder of Fig. 2 (a) heated at about 90°C. The charged pellets 1 were softened and conveyed while blending to a nozzle disposed at a tip end of the extruder by a rotation force of screws 2, and extruded through an orifice 7 of 0.2 mm in diameter disposed in the nozzle 4. The nozzle 4 was in a hemispherical dome shape such that an extrusion pressure was efficiently transmitted. A blend extruded from the nozzle orifice is spontaneously cut by its own weight, to provide elongated extrudates P having a length 100-500 times the diameter that substantially corresponds to the diameter of the nozzle orifice 7.

The extrudates P were placed on a rotatable table 11 of Marumeraiser (available from Fuji Paudal) shown in Fig. 2 (b), and rotated at about 300 rpm for 5 minutes. As shown in Fig. 3 (a), because the extrudates P were rotated while contacting or impinging grooves 21 disposed at the top surface of the rotatable table 11, baffle blades 12 and an inner surface of the casing 14, the extrudates P were rounded such that their length was shortened near their diameters.

Fig. 3 (a) shows Marumeraiser of Fig. 2 (b) from above, Fig. 3 (b) shows the grooves 21 on the rotatable table 11, and Fig. 3(c) shows angles of the baffle blades 12.

Because the extrudates P had a large specific gravity, they are trapped mostly in grooves 21 in a peripheral portion of the rotatable table 11 having a large peripheral speed during rotation. The trapped extrudates P impinge the baffle blades 12 fastened to the casing 14 via bolts, whereby a kinetic energy is given to the extrudates P. By interaction of this kinetic energy, a centrifugal force and a trapping force of the grooves 21, a spiral motion S as shown by the arrow vigorously takes place, thereby rounding the extrudates P substantially by their diameters.

To carry out rounding efficiently, the baffle blades 12 are preferably slanted at an angle θ relative to a line Q connecting a center C of the baffle blades 12 and a rotation center O of the rotatable table 11. Specifically, θ is preferably 30-70°, more preferably 40-50°. One or more baffle blades 12 are disposed if necessary. Also, to generate a trapping force, each groove 21 has a width W of preferably 0.4-1.2 mm, particularly 0.8 mm, a depth $D_1$ of preferably 0.6-1.0 mm, particularly 0.8 mm, and an interval I of preferably 0.4-2 mm, particularly 0.8 mm.

Because the rounded compound had a slight viscosity, 0.05 parts by weight of calcium stearate was added to the rounded compound after heat treatment at 120°C for 1 hour, and slightly blended to provide a molding compound. This heat treatment is preferably 80-150°C for 0.5-5 hours, more preferably 90-120°C for 0.5-1.5 hours. Under the conditions of less than 80°C for 0.5 hours, sufficient decrease in viscosity cannot be obtained, while polymerization proceeds excessively under the conditions of more than 150°C for 5 hours, resulting in decrease in the density of the resultant isotropic, resin-bonded magnet. The production steps of the compound are shown in Fig. 1.

200 compounds were arbitrarily sampled from the resultant rounded compounds, and their appearance was photographed by a scanning-type electron microscope for evaluation. As a result, a ratio (*a*/*b*) of the maximum diameter *a* to the minimum diameter *b* of each compound was more than 1.00 and within 3, its average particle size (*a* + *b)* /2 being 170 μm. Also, typical rounded compounds were immersed in acetone to remove resin components, and the number of magnet powder particles was counted. As a result, it was found that 25-85 magnet powder particles having a maximum diameter of 8-43 μm were contained in each compound particle 1.

COMPARATIVE EXAMPLE 1

Preliminary blended pellets prepared in EXAMPLE 1 were used as compounds for COMPARATIVE EXAMPLE 1. As a result of *a*/*b* of measuring the preliminary blended pellets in the same manner as in EXAMPLE 1, the *a*/*b* exceeded 3. The number (average value) of magnet powder particles contained in one pellet was less than 10.

COMPARATIVE EXAMPLE 2

It was tried to produce an isotropic compound in the same manner as in EXAMPLE 1 except for formulating 99.55 parts by weight of nitride magnet powder prepared in EXAMPLE 1 with 0.45 parts by weight of a liquid epoxy resin and preliminary blending them. However, the extrusion of the preliminary blend through a nozzle 7 of an extruder shown in Fig. 2(a) was extremely difficult, and extrusion was achieved only when such measures as elevating an extrusion temperature higher in EXAMPLE 1, etc. However, such phenomena as the separation and scattering of magnetic powders from an extrudate immediately after extrusion were observed, failing to use the extrudate for molding.

EXAMPLE 2

Compounds were produced by rounding in the same manner as in EXAMPLE 1 except that the diameter of the nozzle orifice 7 in the extruder was changed to 50 μm, 100 μm, 150 μm and 300 μm, respectively.

COMPARATIVE EXAMPLE 3

Compounds were produced by rounding in the same manner as in EXAMPLE 1 except that the diameter of the nozzle orifice 7 was 400 μm at the time of extrusion. With respect to four rounded compounds of EXAMPLE 2 produced with the rounded compounds (diameter of nozzle orifice 7: 200 μm) of EXAMPLE 1 and the nozzle orifice 7 having diameters of 50 μm, 100 μm, 150 μm and 300 μm, respectively, the easiness of supplying them to a die cavity was evaluated, using a fluidity-measuring apparatus according to JIS Z 2502.

The time period in which 80 g of each compound passed through a 2-mm diameter hole in an fluidity measurement apparatus was measured to determine the weight of each compound dropping from the hole per an hour for evaluation of its fluidity. In the same way, the pellets of COMPARATIVE EXAMPLE 1 and the compounds of COMPARATIVE EXAMPLE 3 were evaluated with respect to fluidity. The results are shown in Table 1. It is clear from Table 1 that when the nozzle orifice 7 has a diameter of 50-300 μm, the resultant compounds have improved fluidity.

Table 1

| Compound (Pellets) | Nozzle Orifice Diameter (μm) | Fluidity (g/sec.) |
|---|---|---|
| EXAMPLE 2 | 50 | 2.34 |
| | 100 | 2.29 |
| | 150 | 2.20 |
| EXAMPLE 1 | 200 | 1.98 |
| EXAMPLE 2 | 300 | 1.72 |
| COMPARATIVE EXAMPLE 1 | - | 1.59 |
| COMPARATIVE EXAMPLE 2 | 400 | 1.60 |

EXAMPLE 3

Because the rounded compound of EXAMPLE 1 was substantially spherical and excellent in pressure transmittability, it was molded to a cylindrical, isotropic, resin-bonded magnet of L = 3-30 mm (L: height) in a compression-molding die having a 10-mm-diameter cavity under a compression-molding pressure of 5.9 x $10^8$ Pa (6 ton/$cm^2$), with varied amounts of charged compounds by changing a charging depth (depth of a cavity in a pressing direction). The surface of the die cavity was finished to a surface roughness of finish symbol (▽▽▽▽) according to JIS B 0601. the resultant molded product was heat-cured to an isotropic, resin-bonded magnet. The relations of $(BH)_{max}$ of the isotropic, resin-bonded magnet at20°C and L are plotted by ○ in Fig. 4 (a). All of the isotropic, resin-bonded magnets had a density of more than 6.2 g/$cm^3$, and the deviations of their outer diameters from the diameter of a complete circle (roundness of outer surfaces) were 4-7 μm, verifying that the isotropic, resin-bonded magnets had good roundness that cannot be obtained by conventional technologies.

Among the above cylindrical resin-bonded magnets, those having L = 10 mm were divided to three pieces of substantially equal length in an L direction as shown in Fig. 4 (b), to examine their density distribution. As a result, No. 21 (left end portion) had a density of 6.33 g/$cm^3$, No.22 (center portion) had a density of 6.20 g/ $m^3$, and No.23 (right end portion) had a density of 6.32 g/$cm^3$. Also, the cylindrical resin-bonded magnets of L=30 mm were divided to ten pieces of substantially equal length in an L direction, to examine their density distribution. As a result, the left end portions had the highest density of 6.32 g/$cm^3$, two pieces in the center portion had the lowest density of 6.18-6.19 g/$cm^3$, and the right end portions had the second highest density of 6.30 g/$cm^3$.

COMPARATIVE EXAMPLE 4

Cylindrical isotropic, resin-bonded magnets of L=3-30mm were molded and evaluated in the same manner as in EXAMPLE 3 except for using pellets of COMPARATIVE EXAMPLE 1. The results are plotted by ● in Fig. 4 (a). The density of isotropic, resin-bonded magnets shown by the plots ● were 6.0 g/$cm^3$ or more and less than 6.20 g/$cm^3$, indicating that the roundness of their outer surfaces was as poor as 16-26 μm.

Next, among the above cylindrical resin-bonded magnet, those having L = 10 mm were divided to three pieces as shown in Fig. 4 (b) to examine their density distribution in the same manner as in EXAMPLE 3. As a result, No.31 (left end portion) had a density of 6.12 g/$cm^3$, No.32 (center portion) had a density of 5.81 g/$cm^3$, and No.33 (right end portion) had a density of 6.11 g/$cm^3$. Also, the cylindrical resin-bonded magnets of L=30 mm were divided to ten pieces of substantially equal length in an L direction, to examine their density distribution. As a result, the left end portions had the highest density of 6.11 g/$cm^3$, two pieces in the center portion had the lowest density of 5.78-5.80 g/$cm^3$, and the right end portions had the second highest density of 6.09 g/$cm^3$.

Fig. 4 (a) shows that when the rounded compounds of EXAMPLE 1 were used, the resultant resin-bonded magnets had the highest properties of 72.4 kJ/$m^3$ (9.1 MGOe) at L = 5 mm, and exhibited 70.8 kJ/$m^3$ (8.9 MGOe) even at L = 30 mm. Decrease in $(BH)_{max}$ was as small as 2.2%. On the other h and, when the pellets of COMPARATIVE EXAMPLE 1 were used, $(BH)_{max}$ decreased drastically as L increased (the resin-bonded magnets became longer). For instance, though 59.7 kJ/$m^3$ (7.5 MGOe) was obtained at L = 5 mm, it decreased to 54.1 kJ/$m^3$ (6.8 MGOe) at L = 30 mm. The decrease of $(BH)_{max}$ was as much as about 9%. Remarkable differences between EXAMPLE 3 and COMPARATIVE EXAMPLE 4 in $(BH)_{max}$, roundness of outer surface, density and density distribution of the resin-bonded magnets appear to be derived from differences in pellets between the compounds of EXAMPLE 1 and

COMPARATIVE EXAMPLE 1.

Each of the compounds of EXAMPLE 1 and the pellets of COMPARATIVE EXAMPLE 1 was charged into a 50-mm-diameter cavity of a compression-molding die and compressed to form a cylindrical isotropic, resin-bonded magnet having a diameter D of 50 mm and a height L of 50 mm. Each of the resultant molded products was heat-cured and divided to ten pieces in an L direction to measure its density distribution in an L direction. As a result, it was found that all molded products had the highest density in both ends and the lowest density in a center portion. Also, difference in density between both ends and the center portion was as small as 0.25 g/cm$^3$ or less in the case of using the compounds of EXAMPLE 1, while it was as large as more than 0.3 g/cm$^3$ in the case of using the pellets of COMPARATIVE EXAMPLE 1. The heat-cured cylindrical isotropic, resin-bonded magnets had an outer surface roundness of less than 10 µm in the case of using the compounds of EXAMPLE 1, while they had as large an outer surface roundness as more than 15 µm in the case of using the pellets of COMPARATIVE EXAMPLE 1.

It is thus clear that the compounds of EXAMPLE 1 are much superior to the pellets of COMPARATIVE EXAMPLE 1 in chargeability and pressure transmittability in compression molding.

Next, each cylindrical isotropic, resin-bonded magnet was formed by compression molding using the same compounds as in EXAMPLE 1 in the same manner as above except for changing (D, L) to (1 mm, 0.3 mm), (10 mm, 5 mm), and (30 mm, 30 mm), respectively, and evaluated. As a result, it was found that all resin-bonded magnets had as good outer surface roundness as less than 10 µm.

EXAMPLE 4

The compound of EXAMPLE 1 was charged into a cavity of a predetermined compression-molding die and compression-molded to form a ring-shaped, isotropic, resin-bonded magnet having an outer diameter of 22 mm, an inner diameter of 20 mm, and a height of 11.8-12.0 mm. A cavity surface of the above die was finished to surface roughness expressed by a finish symbol (▽▽▽▽) according to JIS B 0601. Though the dimensional precision (roundness, etc.) of the molded product in a radial direction depends on the surface conditions of the above die, too, the dimensional precision in height is determined substantially by the chargeability and pressure transmittability of the compounds. Therefore, 100 continuously molded products were measured as to how their height varied to evaluate the chargeability and pressure transmittability of the compounds. Compression molding was continuously carried out under a molding pressure of 5.4 x $10^8$ Pa (5.5 ton/cm$^2$) with a mechanical press. All of the resultant molded products were within the height standard, satisfying the dimension standard even after heat curing.

COMPARATIVE EXAMPLE 5

100 molded products were formed by continuous molding in the same manner as in EXAMPLE 4 except for using the compounds of COMPARATIVE EXAMPLE 3. The resultant molded products had large unevenness in height, about 20% of them failing to meet the height standard. Thus, it was necessary to select those having plus height relative to the height standard (more than 12.0 mm) while discarding those having minus height relative to the height standard (less than 11.8 mm), and grinding the selected ones as finish work to height within the height standard after heat curing.

The molded products obtained by continuous molding in EXAMPLE 4 and COMPARATIVE EXAMPLE 5 were measured with respect to height and density. The results are shown in Table 2. It is clear from Table 2 that 100 ring-shaped molded products of EXAMPLE 4 had an average density of as high as 6.21g/cm$^3$, while 100 ring-shaped molded products of COMPARATIVE EXAMPLE 5 had an average density of as low as 6.09 g/cm$^3$.

Table 2

| No. | | Height (mm) | Density (g/cm$^3$) |
|---|---|---|---|
| EXAMPLE 4 | maximum | 11.95 | 6.23 |
| | average | 11.90 | 6.21 |
| | minimum | 11.86 | 6.20 |
| COMPARATIVE EXAMPLE 5 | maximum | 12.10 | 6.18 |
| | average | 11.90 | 6.09 |
| | minimum | 11.74 | 6.01 |

The molded products of EXAMPLE 4 and COMPARATIVE EXAMPLE 5 having a height of 11.90 mm after heat curing were arbitrarily sampled, and four magnetic poles were provided symmetrically on an outer surface of each molded product under the conditions saturating the total magnetic flux to measure a total magnetic flux. As a result, difference in the total magnetic flux was appreciated in proportion to the difference in density.

EXAMPLE 5

Among the ring-shaped resin-bonded magnets of EXAMPLE 4, two magnets, one having the largest height and the other having the smallest height, were selected to measure their outer surface roundness. The results are shown in Fig. 5. Also, among the ring-shaped resin-bonded magnets of COMPARATIVE EXAMPLE 5, two magnets, one having the largest height and the other having the smallest height, were selected to measure their outer surface roundness. The results are shown in Fig. 6. As is clear from Fig. 6, the deviations of the outer diameters of the ring-shaped resin-bonded magnets of COMPARATIVE EXAMPLE 5 from the diameter of a true circle were as large as 16-28 μm. On the contrary, as shown in Fig. 5, any ring-shaped resin-bonded magnets of EXAMPLE 4 had as small outer surface roundness as 5-8 μm (8 μm at most).

With respect to molded products having the maximum height L and molded products having the minimum height L shown in Figs. 5 and 6, respectively, inner surface roundness was measured. As a result, the molded products having the maximum height L and the molded products having the minimum height L shown in Fig. 5 respectively had as small inner surface roundness as 4-6 μm. On the contrary, two molded products shown in Fig. 6, one having the maximum height and the other having the minimum height had as large inner surface roundness as 16-24 μm.

Thus, the ring-shaped, isotropic, resin-bonded magnet of the present invention has roundness in their outer and inner surfaces that is reduced to as small as 10 μm or less. It is considered that the difference in outer surface roundness between Figs. 5 and 6 is derived from the difference in chargeability and pressure transmittability between the compounds of EXAMPLE 1 and COMPARATIVE EXAMPLE 3, which causes the spring back of compression-molded products.

Using the compounds of EXAMPLE 1 and COMPARATIVE EXAMPLE 3, ring-shaped, isotropic, resin-bonded magnets having an outer diameter of 20 mm, an inner diameter of 19.4 mm (thickness: 0.3 mm), and a height of 3 mm, and ring-shaped, isotropic, resin-bonded magnets having an outer diameter of 25 mm, an inner diameter of 19 mm (thickness: 3 mm), and a height of 50 mm were compression-molded and then heat-cured, to measure roundness in their outer and inner surfaces. When the compounds of EXAMPLE 1 were used, the roundness in their outer and inner surfaces was as good as 10 μm or less. On the contrary, when the compounds of COMPARATIVE EXAMPLE 3 were used, the roundness in their outer and inner surfaces was as poor as 16 μm or more.

EXAMPLE 6

The compound of EXAMPLE 1 was charged into a cavity of a molding die in a compression-molding machine with upper and lower punches for compression, and molded under molding pressure of $5.7 \times 10^8$ Pa (5.8 ton/$cm^2$), to form a ring-shaped, isotropic, resin-bonded magnet having an outer diameter of 30 mm, an inner diameter of 25 mm (thickness 2.5 mm), and a height L of 30 mm. After heat curing, as shown in Fig. 7(b), the ring-shaped, isotropic, resin-bonded magnet was divided to 10 pieces at substantially equal length in an L direction, and each cut piece (Nos.41-50) was measured with respect to density. The results are shown by ○ in Fig. 7(a). It should be noted that the same No. represents the same sample in Figs. 7(a) and 7(b).

COMPARATIVE EXAMPLE 6

Ring-shaped isotropic, resin-bonded magnets having an outer diameter of 30 mm, an inner diameter of 25 mm (thickness 2.5 mm), and a height L of 30 mm were molded in the same manner as in EXAMPLE 6 except for using the pellets of COMPARATIVE EXAMPLE 1. After heat curing, each resin-bonded magnet was divided to ten pieces in substantially equal length in an L direction as shown in Fig. 7(b) to measure the density of each cut piece (Nos. 51-60). The results are shown by ● in Fig. 7 (a). It should be noted that the same No. represents the same sample in Figs. 7 (a) and 7(b).

As is clear from Fig. 7(a), the ring-shaped resin-bonded magnet of EXAMPLE 6 formed from the compound of EXAMPLE 1 had a density, which was the highest (6.30 g/$cm^3$) in an end portion (No. 41) on the side of the upper punch, the second highest (6.29 g/$cm^3$) in an end portion (No. 50) on the side of the lower punch, and the lowest (6.15-6.16 g/$cm^3$) in a center portion (Nos. 45, 46). On the contrary, the ring-shaped resin-bonded magnet of COMPARATIVE EXAMPLE 6 formed by using the pellets of COMPARATIVE EXAMPLE 1 had a density of 6.09 g/$cm^3$ in an end portion (No.51) on the upper punch side, and 6.08 g/$cm^3$ in end portion (No.60) on the lower punch side, but as low as 5.75 g/$cm^3$ at No. 55 and 5.77 g/$cm^3$ at No.56 in a center portion.

The ring-shaped resin-bonded magnets having L = 30 mm in EXAMPLE 6 and COMPARATIVE EXAMPLE 6 were magnetized under the conditions of saturating the total magnetic flux, such that each had four magnetic poles symmetrically on an outer surface, to measure the total magnetic flux. As a result, the ring-shaped resin-bonded magnets of EXAMPLE 6 were 2.7% higher in the total magnetic flux than those of

COMPARATIVE EXAMPLE 6.

The ring-shaped resin-bonded magnets having L=30 mm in EXAMPLE 6 and COMPARATIVE EXAMPLE 6 were magnetized to have four magnetic poles symmetrically to constitute rotors, and each rotor was assembled in a brushless DC motor for the evaluation of the maximum efficiency. In this brushless DC motor, an average air gap between the rotor and a stator was set to 0.3 mm. The maximum efficiency of the brushless DC motor is defined by the following formula:

Maximum efficiency = Maximum value of [(Output / Input) x 100%] evaluated at a number of revolution of 1500 rpm or less

input (W) = current I (A) x voltage (V) applied to a stator winding,

and

output (W) = torque (kgf·cm) x number of revolution (rpm) x 0.01027.

The maximum efficiency of brushless DC motor was 1.1% larger in the case of using the ring-shaped resin-bonded magnets having L = 30 mm in EXAMPLE 6 than in the case of using the ring-shaped resin-bonded magnets having L = 30 mm in COMPARATIVE EXAMPLE 6.

EXAMPLE 7

Sm oxide powder, La oxide powder and Fe powder each having purity of 99.9% or more were formulated to a main component composition of a Sm-La-Fe mother alloy corresponding to a magnet powder composition described below. Metallic Ca in an amount 1.0 times a stoichiometric amount necessary for reducing Sm oxide and La oxide was added to the above formulation and then mixed. The resultant mixture was introduced into a reduction/diffusion reaction and heated at 1200°C for 4 hours in an Ar gas atmosphere and cooled to room temperature. The resultant reaction product was coarsely pulverized and sieved under 32 mesh. After washing the reaction product, water was removed by a centrifugal separator. It was then dried at room temperature in a reduced pressure atmosphere of 66.5 Pa (0.5 Torr) for 2 hours to obtain Sm-La-Fe mother alloy powder formed by a reduction/diffusion method.

The above mother alloy powder was subjected to a hydrogenation-decomposition reaction treatment in a hydrogen gas atmosphere of 1.0 x $10^5$ Pa (1atm) at 700°C for 1 hour and then a dehydrogenation-recombination reaction treatment in vacuum of about 6.7 Pa (5 x $10^{-2}$ Torr) at 800°C for 1.5 hours. After sieving the resultant product under 200 mesh, it was nitrided by heating in a nitriding gas atmosphere of 1.0 x $10^5$ Pa (1atm) at 450°C for 10 hours and cooled to room temperature. It was then heat-treated at 400°C for 30minutes in an Ar gas stream and cooled to room temperature.

The resultant magnet powder had a main component composition represented by $Sm_{7.7}La_{0.5}Fe_{bal.}N_{12.9}$ by atomic %, with an oxygen content of 0.17 weight %, a carbon content of 0.06 weight %, a Ca content of 0.03 weight %, and an average particle size of 22 μm. The observation of the magnet powder particles with a scanning-type electron microscope revealed that they were in the form of round particles, substantially composed of a hard magnetic phase of $Th_2Zn_{17}$-type crystal structure (average crystal grain size: 0.19 μm), the average area ratio of α-Fe being 0.04%.

Next, 96.5 parts by weight of magnet powder, 3.0 parts by weight of nylon 12 and 0.5 parts by weight of an amino silane coupling agent were mixed and charged into a pressure, heating-type kneader heated at about 220°C, in which preliminary blending was carried out in Ar gas atmosphere to form pellets.

The preliminarily blended pellets were introduced into an extruder heated at about 220°C in an argon gas atmosphere as shown in Fig. 2 (a). Rounding was subsequently carried out in the same manner as in EXAMPLE 1 to provide round compounds.

The resultant rounded compounds were charged into a cavity of a heated compression-molding die, to compression-mold ring-shaped, isotropic, resin-bonded magnets having an outer diameter of 22 mm, an inner diameter of 20 mm, and a height of 11.9 mm. The resultant molded products were measured with respect to roundness in their outer and inner surfaces. The results are shown in Table 3. It is clear from Table 3 that they had good roundness. Also, the ring-shaped resin-bonded magnets had density of 5.8 g/cm$^3$, useful magnetic properties.

EXAMPLES 8, 9

Sm oxide powder, Fe powder and Al powder each having purity of 99.9% or more were formulated to a main component composition of an Sm-Fe-Al mother alloy corresponding to each magnet powder composition shown in Table 3. Metallic Ca in an amount 1.0 times a stoichiometric amount necessary for reducing Sm oxide was added to the above formulation. The resultant mixture was treated in the same manner as in EXAMPLE 7 to form nitride magnet powder having a main component composition shown in Table 3 and substantially composed of a 2-17-type hard magnetic phase. The 2-17-type hard magnetic phase in the nitride magnet powder of EXAMPLE 8 had an average crystal grain size of 0.18 μm, with an average area ratio of α-Fe of 0.02% and an average particle size of 24 μm. The 2-17-type hard magnetic phase in the nitride magnet powder of EXAMPLE 9 had an average crystal grain size of 0.19 μm, with an average area ratio of α-Fe of 0.03% and an average particle size of 23 μm.

Using each magnet powder, ring-shaped, isotropic, resin-bonded magnets having an outer diameter of 22 mm, an inner diameter of 20 mm, and a height of 11.9 mm were molded in the same manner as in EXAMPLE 7. The resultant ring-shaped, isotropic, resin-bonded magnets were measured with respect to roundness in outer and inner surfaces. The results are shown in Table 3. It is clear from Table 3 that all ring-shaped, isotropic, resin-bonded magnets had good roundness.

Table 3

| No | Formulation of Magnet Powder (atomic %) | Roundness (μm) | |
|---|---|---|---|
| . | | Outer Surface | Inner Surface |
| EX. 7 | $Sm_{7.7}La_{0.5}Fe_{bal.}N_{12.9}$ | 5-8 | 4-6 |
| EX. 8 | $Sm_{7.7}Al_{0.001}Fe_{bal.}N_{12.7}$ | 4-8 | 3-6 |
| EX. 9 | $Sm_{7.7}A1_{0.5}Fe_{bal.}N_{12.8}$ | 5-7 | 3-6 |

EXAMPLE 10

Sm, La, Fe, Co and Zr each having a purity of 99.9% or more were mixed to provide main component compositions of mother alloys corresponding to nitride magnet powder described below, and melted in a high-frequency furnace. Using a single-roll, melt-quenching apparatus equipped with a cooling roll (Be-Cu alloy, peripheral speed 60 m/second), the resultant mother alloy melt was poured onto a surface of the cooling roll, and rapidly quenched to provide amorphous mother alloy flakes having a thickness of about 15 μm and a width of about 2 mm. The amorphous mother alloy flakes were then heat-treated at 720°C in an argon gas atmosphere for 1 hour and cooled to room temperature. The heat-treated mother alloy was pulverized to an average particle size of about 100 μm. Next, it was nitrided by heating at 450°C in a nitriding gas of 1 atm for 20 hours and cooled to room temperature, to obtained isotropic nitride magnet powder. This magnet powder had a main component composition represented by $Sm_{5.3}La_{0.7}Fe_{bal.}Co_{5.0}Zr_{3.5}N_{14.7}$ by atomic %. The observation by X-ray diffraction (Cu-Kα) and transmission-type electron microscope revealed that the magnet powder was composed of a $TbCu_7$-type nitride magnet phase and α-Fe. The $TbCu_7$-type nitride magnet phase of this magnet powder had an average crystal grain size of 55 nm with an average area ratio of 86.9%. α-Fe had an average crystal grain size of 23 nm with an average area ratio of 13. 1%.

97.5 parts by weight of the above nitride magnet powder was formulated with 2.5 parts by weight of a liquid epoxy resin, to produce rounded compounds subsequently in the same manner as in EXAMPLE 1. The compounds were compression-molded and heat-cured in the same manner as in EXAMPLE 4 to form ring-shaped, isotropic, resin-bonded magnets having an outer diameter of 22 mm, an inner diameter of 20 mm, and a height of 11.9 mm. The ring-shaped, isotropic, resin-bonded magnets were measured with respect to roundness in their outer and inner surfaces. The results are shown in Table 4. Each ring-shaped, isotropic, resin-bonded magnet was provided with four magnetic poles symmetrically on an outer surface under the conditions of saturating the total magnetic flux. The resultant total magnetic flux was 1.6% higher than that of

EXAMPLE 4.

REFERENCE EXAMPLE 1

A blend of 97.5 parts by weight of nitride magnet powder in EXAMPLE 10 and 2.5 parts by weight of a liquid epoxy resin was introduced into a heating, pressurizing-type kneader, in which it was preliminarily blended and granulated to provide pellets. The pellets were compression-molded and heat-cured in the same manner as in EXAMPLE 10 to form ring-shaped, isotropic, resin-bonded magnets having an outer diameter of 22 mm, an inner diameter of 20 mm, and a height of 11.9 mm. The resultant ring-shaped, isotropic, resin-bonded magnets were measured with respect to roundness in their outer and inner surfaces. The results are shown in Table 4. The total magnetic flux measured in the same manner as in EXAMPLE 10 was 1.5% less than that in EXAMPLE 10.

Table 4

| No. | Formulation of Magnet Powder (atomic %) | Roundness (μm) | |
|---|---|---|---|
| | | Outer Surface | Inner Surface |
| EX. 10 | $Sm_{5.3}La_{0.7}Fe_{bal.}Co_{5.0}Zr_{3.5}N_{14.7}$ | 6-9 | 5-9 |
| REF. EX. 1 | | >15 | >15 |
| EX. 11 | $Sm_{8.0}La_{0.7}Fe_{bal.}Ti_{2.0}B_{1.0}N_{12.0}$ (50 parts by weight) + $Nd_{12.8}Fe_{bal.}B_{6.5}Nb_{1.5}$ (50 parts by weight) | 6-9 | 5-9 |
| REF. EX. 2 | | > 15 | > 15 |
| EX. 12 | $Sm_{5.3}La_{0.7}Fe_{bal.}Co_{5.0}Zr_{3.5}N_{14.7}$ (50 parts by weight) + $Nd_{12.8}Fe_{bal.}B_{6.5}Nb_{1.5}$ (50 parts by weight) | 6-9 | 6-9 |
| REF. EX. 3 | | > 15 | > 15 |

It is clear from Table 4 that the ring-shaped, isotropic, resin-bonded magnets of EXAMPLE 10 were remarkably improved in roundness in their outer and inner surfaces than those of REFERENCE EXAMPLE 1.

Also, each of the ring-shaped, isotropic, resin-bonded magnets of EXAMPLE 10 and REFERENCE EXAMPLE 1 was provided with four magnetic poles symmetrically on the outer surface to constitute a rotor, which was then assembled in a brushless DC motor. With an average air gap set to 0.28 mm between the rotor and the stator in this brushless DC motor, the maximum efficiency was measured. As a result, it was found that the brushless DC motor comprising the ring-shaped, isotropic, resin-bonded magnet of EXAMPLE 10 had the maximum efficiency 0.8% higher than that of the brushless DC motor comprising the ring-shaped, isotropic, resin-bonded magnet of REFERENCE EXAMPLE 1.

EXAMPLE 11

Strip casting was carried out in the same manner as in EXAMPLE 1 except for changing to mother alloy melt compositions corresponding to the nitride magnet powder shown in Table 4, and nitride magnet powder shown in Table 4 was produced in subsequently in the same manner as in EXAMPLE 1. This magnet powder had a main component composition of $Sm_{8.0}La_{0.7}Fe_{bal.}Ti_{2.0}B_{1.0}N_{12.0}$ by atomic %, and an average particle size of 33 μm, which was substantially composed of a hard magnetic phase having a $Th_2Zn_{17}$-type crystal structure having an average crystal grain size of 0.20 μm, an average area ratio of α-Fe being 0.01%.

50 parts by weight of this nitride magnet powder was blended with 50 parts by weight of isotropic magnet powder having a main component composition represented by $Nd_{12.8}Fe_{bal.}B_{6.5}Nb_{1.5}$ with an $Nd_2Fe_{14}B$-type intermetallic compound as a main phase and having an average crystal grain size of 0.09 μm, to produce a mixed magnet powder.

97.5 parts by weight of the above mixed magnet powder was blended with 2.5 parts by weight of a liquid epoxy resin, to produce rounded compounds subsequently in the same manner as in EXAMPLE 1. This compound was then compression-molded and heat-cured in the same manner as in EXAMPLE 4 to form ring-shaped, isotropic, resin-bonded magnets having an outer diameter of 22 mm, an inner diameter of 20 mm, and a height of 11.9 mm. The resultant ring-shaped, isotropic, resin-bonded magnets were measured with respect to roundness in their outer and inner surfaces. The results are shown in Table 4. As a result of measurement carried out in the same manner as in EXAMPLE 10, the total magnetic flux of this EXAMPLE was 3.8% higher than that of

EXAMPLE 10.

REFERENCE EXAMPLE 2

A blend of the mixed magnet powder prepared in EXAMPLE 11 and a liquid epoxy resin was charged into a heating, pressurizing-type kneader, in which it was preliminarily blended and granulated to form pellets. The resultant pellets were then compression-molded and heat-cured in the same manner as in EXAMPLE 11 to form ring-shaped, isotropic, resin-bonded magnets having an outer diameter of 22 mm, an inner diameter of 20 mm, and a height of 11.9 mm. The resultant ring-shaped, isotropic, resin-bonded magnets were measured with respect to roundness in their outer and inner surfaces. The results are shown in Table 4. Also, as a result of measurement carried out in the same manner as in EXAMPLE 11, the total magnetic flux of this REFERENCE EXAMPLE was 2.0% lower than that of EXAMPLE 11.

It is clear from Table 4 that the ring-shaped, isotropic, resin-bonded magnets of EXAMPLE 11 were remarkably improved in roundness in their outer and inner surfaces than those of REFERENCE EXAMPLE 2.

Using the ring-shaped, isotropic, resin-bonded magnets (symmetric four-magnetic pole products) of EXAMPLE 11 and REFERENCE EXAMPLE 2, respectively, the maximum efficiency of the brushless DC motors was evaluated in the same manner as in EXAMPLE 10. As a result, the brushless DC motors using the ring-shaped, isotropic, resin-bonded magnets of EXAMPLE 11 were 0.7% higher in the maximum efficiency than those using the ring-shaped, isotropic, resin-bonded magnets of REFERENCE EXAMPLE 2.

EXAMPLE 12

50 parts by weight of nitride magnet powder ($Sm_{5.3}La_{0.7}Fe_{bal.}Co_{5.0}\ Zr_{3.5}N_{14.7}$) of EXAMPLE 10 was mixed with 50 parts by weight of Nd-Fe-B magnet powder ($Nd_{12.8}Fe_{bal.}B_{6.5}Nb_{1.5}$) of EXAMPLE 11. With 97.5 parts by weight of the resultant mixed magnet powder formulated with 2.5 parts by weight of a liquid epoxy resin, rounded compounds were then produced in the same manner as in EXAMPLE 1. The rounded compounds were compression-molded and heat-cured in the same manner as in EXAMPLE 4 to produce ring-shaped, isotropic, resin-bonded magnets having an outer diameter of 22mm, an inner diameter of 20 mm, and a height of 11.9 mm. The resultant ring-shaped, isotropic, resin-bonded magnets were measured with respect to roundness in their outer and inner surfaces. The results are shown in Table 4. As a result of measurement carried out in the same manner as in EXAMPLE 10, the total magnetic flux of this EXAMPLE was 3.9% higher than that of EXAMPLE 10.

REFERENCE EXAMPLE 3

A blend of the mixed magnet powder prepared in EXAMPLE 12 and a liquid epoxy resin was charged into a heating, pressurizing-type kneader, in which it was preliminarily blended and granulated to form pellets. The resultant pellets were then compression-molded and heat-cured in the same manner as in EXAMPLE 12 to form ring-shaped, isotropic, resin-bonded magnets having an outer diameter of 22 mm, an inner diameter of 20 mm, and a height of 11.9 mm. The resultant ring-shaped, isotropic, resin-bonded magnets were measured with respect to roundness in their outer and inner surfaces. The results are shown in Table 4. Also, as a result of measurement carried out in the same manner as in EXAMPLE 12, the total magnetic flux of this REFERENCE EXAMPLE was 1.7% lower than that of EXAMPLE 12.

It is clear from Table 4 that the ring-shaped, isotropic, resin-bonded magnets of EXAMPLE 12 were remarkably improved in roundness in their outer and inner surfaces than those of REFERENCE

EXAMPLE 3.

Using the ring-shaped, isotropic, resin-bonded magnets (symmetric four-magnetic pole products) of EXAMPLE 12 and REFERENCE EXAMPLE 3, respectively, the maximum efficiency of the brushless DC motors was evaluated in the same manner as in EXAMPLE 10. As a result, the brushless DC motors using the ring-shaped, isotropic, resin-bonded magnets of EXAMPLE 12 were 0.8% higher in the maximum efficiency than those using the ring-shaped, isotropic, resin-bonded magnets of REFERENCE EXAMPLE 3.

EXAMPLE 13

The rounded compounds of EXAMPLE 1 were charged into a compound-conveying apparatus 60 of Fig. 9 heated at about 90°C, and a softened compound 62 discharged from an exit 61 of the compound-conveying apparatus 60 was supplied between rolls 64, 64 heated at 50°C in the air, so that it was rolled to two sheet-shaped, molded products 70 having a thickness of 2.0 mm and 3.0 mm respectively and a width of about 100 mm. Each sheet-shaped, molded product 70 was cut to a predetermined length, and heat-cured at 150°C for 1 hour in the air. The measurement of surface roughness (maximum roughness $R_{max}$ according to JIS B 0601) of the resultant sheet-shaped, resin-bonded magnets revealed that $R_{max}$ was 2-5 µm, indicating extremely flat surface.

EXAMPLE 14

Sheet-shaped resin-bonded magnets were produced in the same manner as in EXAMPLE 13 except for adjusting a gap between the rolls 64, 64 to provide the sheet-shaped, resin-bonded magnets with thickness of 0.1 mm, 1.0 mm, and 5.0 mm, respectively. The resultant sheet-shaped, resin-bonded magnets had $R_{max}$ within a range of 3-8 µm, indicating extremely flat surface.

COMPARATIVE EXAMPLE 7

Sheet-shaped resin-bonded magnets were produced in the same manner as in EXAMPLE 13 except for using the pellets of COMPARATIVE EXAMPLE 1. However, the resultant sheet-shaped, resin-bonded magnets had $R_{max}$ of more than 15 µm, poor surface conditions.

EXAMPLE 15

Sheet-shaped resin-bonded magnets were produced in the same manner as in EXAMPLE 13 except for using the rounded compounds of EXAMPLE 10, and their $R_{max}$ was measured. Their $R_{max}$ was 4-9 µm.

REFERENCE EXAMPLE 4

Sheet-shaped resin-bonded magnets were produced in the same manner as in EXAMPLE 15 except for using the pellets of REFERENCE EXAMPLE 1, and their $R_{max}$ was measured. Their $R_{max}$ was more than 15 µm, poorer in surface conditions than EXAMPLE 15.

EXAMPLE 16

Sheet-shaped resin-bonded magnets were produced in the same manner as in EXAMPLE 13 except for using the rounded compounds of EXAMPLE 11, and their $R_{max}$ was measured. Their $R_{max}$ was 5-9 µm.

REFERENCE EXAMPLE 5

Sheet-shaped resin-bonded magnets were produced in the same manner as in EXAMPLE 16 except for using the pellets of REFERENCE EXAMPLE 2, and their $R_{max}$ was measured. Their $R_{max}$ was more than 15 µm, poorer in surface conditions than EXAMPLE 16.

EXAMPLE 17

Sheet-shaped resin-bonded magnets were produced in the same manner as in EXAMPLE 13 except for using the rounded compounds of EXAMPLE 12, and their $R_{max}$ was measured. Their $R_{max}$ was 5-9 µm.

REFERENCE EXAMPLE 6

Sheet-shaped resin-bonded magnets were produced in the same manner as in EXAMPLE 17 except for using the pellets of REFERENCE EXAMPLE 3, and their $R_{max}$ was measured. Their $R_{max}$ was more than 15 µm, poorer in surface conditions than EXAMPLE 17.

Though the above EXAMPLES describe compression molding or calendar roll molding, isotropic, resin-bonded magnets having as good roundness or surface roughness as in the above EXAMPLES can be produced even by injection molding or extruding without machining.

EXAMPLE 18

Using Sm, La, Fe, Ti and B each having purity of 99.9% or more, a mother alloy melt adjusted to have a composition corresponding to the following nitride magnet powder was poured onto a surface of a cooling copper alloy roll (diameter: 300 mm) of a twin-roll strip caster rotating at a peripheral speed of 0.5 m/second to rapidly quench the melt to form a thin mother alloy ribbon. The resultant thin mother alloy ribbon was subjected to a hydrogenation-decomposition reaction treatment at 675°C for 1 hour in a hydrogen gas atmosphere of 1.0 x $10^5$ Pa (1atm), and then to a dehydrogenation-recombination reaction treatment at 790°C for 1.5 hours in vacuum of 4.0-8.0 Pa (3-6 x $10^{-2}$ Torr). Next, the thin mother alloy ribbon was pulverized by a jaw crusher and a disc mill in an argon gas atmosphere and then sieved to a particle size smaller than 200 mesh.

The resultant mother alloy powder was nitrided at 440°C for 10 hours in a nitriding gas atmosphere of 1.0 x $10^5$ Pa (1atm) and then cooled to room temperature. It was then heat-treated at 400°C for 30 minutes in an argon gas stream and cooled to room temperature, to form nitride magnet powder having a main component composition of $Sm_{9.2}La_{0.05}Fe_{bal}Ti_{2.7}B_{1.0}N_{12.7}$ and having an average particle size of 20 μm, which was substantially composed of a hard magnetic phase having a $Th_2Zn_{17}$-type crystal structure having an average crystal grain size of 0.18 μm. In this magnet powder, an average area ratio of α-Fe was 0.01%.

93.5 parts by weight of the above nitride magnet powder, 2.5 parts by weight of natural rubber, 2.0 parts by weight of nitrile rubber, 1.94 parts by weight of chlorinated polyethylene, 0.05 parts by weight of a bisphenol-type epoxy resin, and 0.01 parts by weight of calcium stearate were blended in an argon gas atmosphere by a heating, pressurizing-type kneader, to form compounds having a particle size of 5 mm or less. The compounds were charged into a compound-conveying apparatus heated in the same manner as in EXAMPLE 13, and compounds discharged from an exit of the conveying apparatus were supplied to a rolling machine heated at 50°C to carry out rolling to form sheet-shaped, molded products having a thickness of 3.0 mm. To remove volatile impurities, the sheet-shaped, molded products were heated at 50°C for 10 hours in the air, subjected to a curing treatment at 150°C for 2 hours in the air, and then cooled to room temperature. The resultant sheet-shaped, isotropic, resin-bonded magnets were magnetized at a magnetizing field intensity of 1.9 MA/m (25 kOe) at room temperature (25°C). The resultant sheet-shaped, isotropic, resin-bonded magnets had $(BH)_{max}$ of 28.7 kJ/$m^3$ (3.6 MGOe).

EXAMPLE 19

Nitride magnet powder having a main component composition represented by $Sm_{8.5}La_{0.7}Fe_{bal.}Ti_{2.7}B_{1.0}N_{12.5}$ and having an average particle size of 20 μm, which was substantially composed of a hard magnetic phase having a $Th_2Zn_{17}$-type crystal structure having an average crystal grain size of 0.18 μm, the content of α-Fe being 0.02% by average area ratio, was produced in the same manner as in EXAMPLE 18 except for changing its main component composition. Fig. 12 (a) shows a scanning-type electron photomicrograph of this magnet powder. It is clear from Fig. 12 (a) that it was in the form of round particles.

93.5 parts by weight of the nitride magnet powder, 2.5 parts by weight of natural rubber, 2.0 parts by weight of nitrile rubber, 1.94 parts by weight of chlorinated polyethylene, 0.05 parts by weight of a bisphenol-type epoxy resin, and 0.01 parts by weight of calcium stearate were blended in a heating, pressing-type kneader in an Ar gas atmosphere, and pulverized to form compounds. The compounds were then rolled in the same manner as in EXAMPLE 18 to form sheet-shaped, isotropic, resin-bonded magnets having a thickness of 3.0 mm. The resultant sheet-shaped, isotropic, resin-bonded magnets were magnetized at room temperature (25°C) and 1989.5 kA/m (25 kOe). As a result, $(BH)_{max}$ was 31.8 kJ/$m^3$ (4.0 MGOe), and iHc was 748.1 kA/m (9.4 kOe). Also, they had a density of 5.4 g/$cm^3$.

Fig. 10 shows the change of $(BH)_{max}$ of the above sheet-shaped, resin-bonded magnet when a magnetizing field intensity was changed at room temperature (25°C).

The above sheet-shaped, resin-bonded magnets were cut to a predetermined shape and laminated to form samples having a permeance coefficient (Pc) = 2. Each sample was magnetized at room temperature (25°C) under the conditions of saturating $(BH)_{max}$. Using a search coil and a digital magnetic flux meter, the open magnetic flux ($\Phi_1$) of each sample was measured. After each sample was heated at 100°C for 1-300 hours in the air and cooled to room temperature, its open magnetic flux ($\Phi_2$) was measured. The open magnetic flux ($\Phi_1$) before heating in the air and the open magnetic flux ($\Phi_2$) after heating in the air were used to determine an irreversible loss of flux by the following formula:

$$\text{Irreversible loss of flux} = [(\Phi_2 - \Phi_1) / \Phi_1] \times 100\ (\%),$$

$\Phi_1$: open magnetic flux (kM x T) before heating in the air at room temperature, and
$\Phi_2$: open magnetic flux (kM x T) after heating in the air at room temperature.

The measurement results of irreversible loss of flux are shown in Fig. 11.

Production and evaluation of magnet rolls for developing roll apparatus using sheet-shaped, resin-bonded magnets

Fig. 14 is a cross-sectional view showing an important portion of a typical developing roll apparatus 80 in which the magnet roll of the present invention was assembled, Fig. 15 is a cross-sectional view taken along the line A-A in Fig. 14. The developing roll apparatus 80 comprises a magnet roll 81, a cylindrical sleeve 82 containing a magnet roll 81, a pair of flanges 83a, 83b attached to both ends of the cylindrical sleeve 82, and bearings 84a, 84b mounted onto inner surfaces of the flanges 83a, 83b, the shaft 86 being rotatably supported by the bearings 84a, 84b.

A magnet roll 81 comprises a radially anisotropic ferrite resin-bonded magnet 88 having an outer diameter D of 20.0 mm and a length of 220.0 mm provided with a groove 87 extending in an axial direction, a magnet 89 for a developing magnetic pole $N_1$, which was cut from the above sheet-shaped, resin-bonded magnet to a thickness of 3.0 mm, a width of 3.0 mm and a length of 220.0 mm and fixed to the groove 87, and a ferromagnetic shaft 86 (made of S45C) inserted into the inner diameter side of the radially anisotropic ferrite resin-bonded magnet 88.

One flange 83b is provided with a seal member (oil seal) 85 on an end surface. Four magnetic poles in total extending in an axial direction were provided on an outer surface of the magnet roll 81. The non-magnetic sleeve 82 and the flanges 83a, 83b are made of an aluminum alloy.

By the relative rotation of a magnet roll 81 and a sleeve 82, for instance, rotating the sleeve 82 with the magnet roll 81 stationary, in the developing roll apparatus 80, a magnetic developer is absorbed onto an outer surface of the sleeve 82, and conveyed to a developing region in which the sleeve 82 opposes an image-bearing member (not shown), to develop electrostatic image on the image-bearing member.

Because the sheet-shaped, resin-bonded magnet89 can be magnetized in a state where it is fixed to the magnet roll 81, its magnetization efficiency is improved. A closed magnetic circuit 90 is formed in the magnet roll 81 as shown by the dotted line in Fig. 15, a strong magnetic field is generated on the sleeve 82. A reference numeral 95 denotes a magnetic gap.

A surface magnetic flux density Bo was measured in a range of 100 mm in an axial direction on an outer surface including an $N_1$ magnetic pole near an axial center portion of the magnet roll 81. As a result, Bo was as high as 0.18 T (1800 G) in average value, with as good unevenness dBo of Bo as less than 0.005 T (50 G).

The developing roll apparatus 80 was assembled in a copier to make 10,000 copies, and the appearance of the sheet-shaped, resin-bonded magnet 89 constituting the magnet roll 81 was examined. As a result, it was confirmed that the sheet-shaped, resin-bonded magnet 89 kept good appearance without deterioration in a magnetic force.

EXAMPLE 20

Nitride magnet powder having a main component composition shown in Table 5 (average particle size: about 20 μm) was produced in the same manner as in EXAMPLE 18 except for changing the main component composition, and by using the above nitride magnet powder, a sheet-shaped, isotropic, resin-bonded magnet was produced to measure its magnetic properties. The measurement results are shown in Table 5. The sheet-shaped, resin-bonded magnet had a density of 5.4-5.5 g/cm$^3$. Each magnet powder was substantially composed of a hard magnetic phase of a $Th_2Zn_{17}$-type crystal structure having an average crystal grain size of about 0.2 μm, an average area ratio of α-Fe being 0.01-0.03%.

COMPARATIVE EXAMPLE 8

3.0-mm-thick, sheet-shaped, isotropic, resin-bonded magnets were produced in the same manner as in EXAMPLE 18 except for using nitride magnet powder having a main component composition represented by $Sm_{9.2}Fe_{bal.}Ti_{2.7}B_{1.0}N_{12.8}$ and having an average particle size of 22 μm, which was substantially composed of a hard magnetic phase (average crystal grain size: 0.20 μm) having a $Th_2Zn_{17}$-type crystal structure, and magnetized at room temperature (25°C) and a magnetizing field intensity of 1.9 MA/m (25kOe). As a result, they had $(BH)_{max}$ of 25.4 kJ/m$^3$ (3.2 MGOe).

Fig. 10 shows $(BH)_{max}$ of the sheet-shaped, resin-bonded magnet when a magnetizing field intensity was changed at room temperature (25°C) in the same manner as in EXAMPLE 19, and Fig. 11 shows the irreversible loss of flux of the sheet-shaped, resin-bonded magnet.

COMPARATIVE EXAMPLE 9

Nitride magnet powder having a main component composition shown in Table 5 and an average particle size of about 20 μm was produced in the same manner as in EXAMPLE 18 except for using the La content of 3.0 atomic %, and a sheet-shaped, resin-bonded magnet was formed therefrom to measure its magnetic properties. The measurement results are shown in Table 5.

Fig. 10 shows $(BH)_{max}$ of the sheet-shaped, resin-bonded magnet when a magnetizing field intensity was changed at room temperature (25°C) in the same manner as in EXAMPLE 19, and Fig. 11 shows the irreversible loss of flux of the sheet-shaped, resin-bonded magnet.

Table 5

| No. | Composition of Nitride Magnet Powder (atomic %) | $(BH)_{max}$ (kJ/m$^3$) (MGOe) | iHc (kA/m) (kOe) |
|---|---|---|---|
| EX. 18 | $Sm_{9.2}La_{0.05}Fe_{bal.}Ti_{2.7}B_{1.0}N_{12.7}$ | 28.7<br>3.6 | 771.9<br>9.7 |
| EX. 19 | $Sm_{8.5}La_{0.7}Fe_{bal.}Ti_{2.7}B_{1.0}N_{12.5}$ | 31.8<br>4.0 | 748.1<br>9.4 |
| EX. 20 | $Sm_{8.9}La_{0.3}Fe_{bal.}Ti_{2.7}B_{1.0}N_{12.7}$ | 31.0<br>3.9 | 748.1<br>9.4 |
| | $Sm_{7.9}La_{1.3}Fe_{bal.}Ti_{2.7}B_{1.0}N_{12.6}$ | 31.0<br>3.9 | 732.1<br>9.2 |
| | $Sm_{7.2}La_{2.0}Fe_{bal.}Ti_{2.7}B_{1.0}N_{12.6}$ | 29.5<br>3.7 | 636.6<br>8.0 |
| COM. EX.8 | $Sm_{9.2}Fe_{bal.}Ti_{2.7}B_{1.0}N_{12.5}$ | 25.4<br>3.2 | 771.9<br>9.7 |
| COM. EX.9 | $Sm_{6.2}La_{3.0}Fe_{bal.}Ti_{2.7}B_{1.0}N_{12.5}$ | 27.0<br>3.4 | 374.0<br>4.7 |

It is clear from Table 5 and Figs. 10 and 11 that the sheet-shaped, resin-bonded magnets of EXAMPLES 18-20 were better in magnetizability than those of COMPARATIVE EXAMPLES 8, 9. Also, Fig. 11 shows that the sheet-shaped, resin-bonded magnet of EXAMPLE 19 had as good irreversible loss of flux as that of COMPARATIVE EXAMPLE 8.

EXAMPLES 21-27, COMPARATIVE EXAMPLE 10

In EXAMPLES 21, 22, 24 and 26, rounded compounds were produced in the same manner as in EXAMPLE 1 except for using each magnet powder shown in Table 6, and rolled to each 2.6-mm-thick, sheet-shaped, resin-bonded magnet in the same manner as in EXAMPLE 13.

In COMPARATIVE EXAMPLE 10 and EXAMPLES 23, 25 and 27, preliminarily blended pellets were produced in the same manner as in COMPARATIVE EXAMPLE 1 except for using each magnet powder shown in Table 6, and rolled to each 2.6-mm-thick, sheet-shaped, resin-bonded magnet in the same manner as in EXAMPLE 13.

Each of the resultant sheet-shaped, resin-bonded magnet was cut to a thickness of 2.6 mm, a width of 3.0 mm, and a length of 220.0 mm, and assembled in a magnet roll shown in Fig. 15 in place of the sheet-shaped, resin-bonded magnet 89 constituting a developing magnetic pole $N_1$ of the magnet roll 81. A surface magnetic flux density Bo was measured in a range of 100 mm in an axial direction on an outer surface including an $N_1$ magnetic pole near an axial center portion of the magnet roll. Bo measured (average value) are shown in Table 6.

It is clear from Table 6 that magnet rolls each having a developing magnetic pole $N_1$ constituted by a cut sheet-shaped, resin-bonded magnet formed from rounded compounds produced by extruding through a nozzle orifice of the extruder shown in Fig. 2, cutting and rounding have high Bo (average value). It is also clear that Bo is higher in EXAMPLES 21-27 than in COMPARATIVE EXAMPLE 10. Also, in EXAMPLES 24-27 in which 50% of Nd-Fe-B magnet powder was formulated, particularly high Bo was obtained. Further, the sheet-shaped, resin-bonded magnets of EXAMPLES 21, 22, 24 and 26 had $R_{max}$ of less than 10 µm, while the sheet-shaped, resin-bonded magnets of COMPARATIVE EXAMPLE 10 and EXAMPLES 23, 25 and 27 had $R_{max}$ of more than 15 µm.

Table 6

| No. | Formulation of Magnet Powder | Compound /Pellets | Bo (T/G) of Developing Magnetic Pole of Magnet Roll |
|---|---|---|---|
| EX. 21 | EX. 1 | A | 0.175/1750 |
| COM. EX. 10 | | B | 0.170/1700 |
| EX. 22 | EX. 10 | A | 0.184/1840 |
| EX. 23 | | B | 0.176/1760 |
| EX. 24 | EX. 11 | A | 0.195/1950 |
| EX. 25 | | B | 0.188/1880 |
| EX. 26 | EX. 12 | A | 0.196/1960 |
| EX. 27 | | B | 0.189/1890 |
| Note A Compounds formed by extruding through a nozzle orifice of the extruder shown in Fig. 2, cutting and rounding. B Pellets only preliminarily blended | | | |

EXAMPLE 28

A magnet roll 119 having a different structure according to the present invention shown in Fig. 16 (a) can be produced, for instance, as follows: First, after forming an axially extending groove 113 in a developing magnetic pole portion of a cylindrical, isotropic, ferrite sintered magnet 117 fixed to a shaft 118, the sheet-shaped, isotropic, resin-bonded magnet 116 of the present invention having a substantially U-shaped cross section was fixed to the groove 113. Because the sheet-shaped, resin-bonded magnet 116 is provided with a recess 114 in an axial direction, a magnetic flux density distribution in a gap immediately above the developing magnetic pole ($N_1$) has a waveform having 2 peaks.

A magnet roll 124 having a different structure according to the present invention shown in Fig. 16 (b) can be produced, for instance, as follows: First, a softened compound based on ferrite magnet powder for resin-bonded magnets and a thermoplastic resin is charged into an extrusion die cavity to which a radially orienting magnetic field is applied, extruded and then solidified. After demagnetization, it is cut to a predetermined length to form a C-shaped, molded product 120 having a gap 122. After the molded product 120 is fixed to a shaft 123, the sheet-shaped, isotropic, resin-bonded magnet 121 of the present invention is fixed in a gap 122. The C-shaped, molded product 120 may be ferrite resin-bonded magnet or ferrite sintered magnet having isotropy or radial anisotropy.

A magnet roll 129 having a different structure according to the present invention shown in Fig. 16 (c) can be produced, for instance, as follows: The sheet-shaped, resin-bonded magnet 126 of the present invention is wound around a shaft 128 by at least one turn and fixed to the shaft 128. 127 denotes a seam of the sheet-shaped, resin-bonded magnet 126.

EXAMPLE 29

A composite magnet roll 130 having a different structure according to the present invention shown in Fig. 17 is constituted by a ring-shaped outer layer 131 composed of the sheet-shaped, isotropic, resin-bonded magnet of the present invention, a inner layer 132 composed of a ring-shaped ferrite resin-bonded magnet provided with multi-magnetic pole anisotropy (symmetric six-magnetic pole anisotropy), and a shaft 133 fixed to the inside of an inner layer 132. 131a denotes a seam of sheet-shaped, resin-bonded magnet. Assuming that an outer layer 131 has an outer diameter $D_{131}$ (mm), a thickness $t_{131}$ (mm), a number of magnetic pole of *n*, a magnetic pole interval $P_1$ (mm), intrusion depth *h* (mm) of magnetic flux, $P_1=\pi D_{131}/n$, and *h* is about $P_1/2$. Because a magnetic pole interval $P_1$ is wide when the number of magnetic poles *n* is small, the magnetic flux has a large intrusion depth *h*. Namely, in a case where an interval $P_1$ between a developing magnetic pole for providing a high magnetic force and adjacent magnetic poles and the thickness $t_{131}$ of the outer layer 131 meet the condition of $P_1/t_{131} \geqq 1.6$, the magnetic force of the inner layer 132 can effectively be utilized. Though the magnet roll 130 has symmetric magnetic poles, the same is true of those having asymmetrical magnetic poles.

When the magnet roll is entirely constituted by an integral ferrite resin-bonded magnet having multi-magnetic pole anisotropy, a magnetizing wave form is constrained in an anisotropy-giving direction, resulting in large unevenness dBo of Bo in an axial direction. Because the sheet-shaped, R-T-N isotropic, resin-bonded magnet 131 constitutes an outer layer in the magnet roll 130 of the present invention, a magnetizing wave form can freely be adjusted to obtain an effect that Bo has a high average value with low dBo. To obtain this effect, a ratio ($t_{131}/t_{132}$) of the thickness $t_{131}$ of the outer layer 131 to the thickness $t_{132}$ of the inner layer 132 is preferably in a range of 1:9-3:7. This composite magnet roll may effectively be used not only for small-diameter products of 10-20 mm in outer diameter, but also for large-diameter products of 50-60 mm in outer diameter.

EXAMPLE 30

A composite magnet roll 140 having a different structure according to the present invention shown in Fig. 18 is constituted by an inner layer 141 of the sheet-shaped, isotropic, resin-bonded magnet of the present invention wound around and adhered to a shaft 144, and an outer layer 142 of a ring-shaped ferrite resin-bonded magnet adhered to the outer surface of the inner layer 141, the ring-shaped ferrite resin-bonded magnet comprising ferrite magnet powder and a thermoplastic resin and being provided with multi-magnetic pole anisotropy (symmetric 12-magnetic pole anisotropy).

In Fig. 18 an outer layer 142 has an outer diameter $D_{142}$ (mm), thickness $t_{142}$ (mm), a number of magnetic pole *n*', a magnetic pole interval $P_2$ (mm), and intrusion depth *h*' (mm) of magnetic flux, $P_2=\pi D_{142}/n'$, and *h*' is about $P_2/2$. Because the magnet roll 140 has a large number of magnetic poles, the magnetic pole interval $P_2$ is small, resulting in a small intrusion depth *h*' of magnetic flux. When the magnet roll 140 is entirely formed by a ferrite resin-bonded magnet provided with multi-magnetic pole anisotropy, more multi-magnetic pole anisotropy tends to be given to a thin surface layer as the number of magnetic poles increases, resulting in decrease in Bo. Thus, when the magnetic pole interval $P_2$ and the thickness $t_{142}$ of the outer layer 142 meet the condition of $P_2/t_{142} < 1.6$, multi-magnetic pole anisotropy is given to the entire outer layer 142, resulting in improved Bo in the magnet roll 140. For this purpose, a ratio ($t_{141}/t_{142}$) of the thickness $t_{141}$ of the inner layer 141 to the thickness $t_{142}$ of the outer layer 142 is preferably in a range of 4:1-3:2. This composite magnet roll is effectively used not only as a small-diameter product having an outer diameter of 10-20 mm but also as a large-diameter products having an outer diameter of 50-60 mm.

EXAMPLE 31

A magnet roll 170 having a different structure according to the present invention shown in Fig. 19 (a) is constituted by attaching the sheet-shaped, isotropic, resin-bonded magnet 172 of the present invention to a large-diameter portion 171a of a ferromagnetic shaft. The sheet-shaped, resin-bonded magnet 172 has a seam 174 at an angle $\theta$ ($0° < \theta < 90°$) relative to an axial direction X2, with a magnetic pole boundary 175 and the seam 174 in parallel. Though not particularly restrictive, it is suitable for a developing roll apparatus in which a magnet roll is rotated.

A magnet roll 180 having a different structure according to the present invention shown in Fig. 19 (b) is constituted by attaching the sheet-shaped, isotropic, resin-bonded magnet 182 of the present invention to a large-diameter portion 181a of a ferromagnetic shaft. The sheet-shaped, resin-bonded magnet 182 is provided with a gap 185 at a position corresponding to a seam, and the gap 185 is at an angle $\theta$ ($0° < \theta < 90°$) relative to an axial direction X3. Also, the gap 185 is in parallel with the magnetic pole boundary 188. Though not particularly restrictive, this is suitable for a developing roll apparatus in which a magnet roll is rotated.

Though not particularly restrictive, the magnet roll of the present invention preferably has 3-32 magnetic poles, more preferably 4-16 magnetic poles at an equal or unequal interval on an outer surface in a circumferential direction.

Though not particularly restrictive, the magnet roll of the present invention is highly useful for practical applications, when a ratio L/D of the length L to the outer diameter D is 5 or more. Specifically, the outer diameter D is preferably 2-60 mm, more preferably 5-30 mm, particularly preferably 10-20 mm. The length L is preferably 50-350 mm, more preferably 100-350 mm, particularly preferably 200-350 mm.

EXAMPLE 32

<u>Production and evaluation of rotating machine using sheet-shaped, isotropic, resin-bonded magnet</u>

2.0-mm-thick sheet-shaped, isotropic, resin-bonded magnet was produced in the same manner as in EXAMPLE 19 except for changing its thickness and used as a field magnet. Fig. 20 (a) is a front view showing an important portion of one example of the fan motor of the present invention, and Fig. 20 (b) is a view showing the fan motor seen from back.

The fan motor 210 of the present invention is provided with a rotor 207 and a stator (armature) 208 opposing via an air gap 209. 201 denotes a ring-shaped field magnet having an outer diameter of 30.0 mm and a height of 30.0 mm, which is formed by winding the above 2.0-mm-thick, sheet-shaped, isotropic, resin-bonded magnet by one turn, and fixed to an inner surface of a ring-shaped, ferromagnetic yoke 202 (made of SS400), and magnetized to have four magnetic poles symmetrically. 201a denotes a seam of the sheet-shaped, resin-bonded magnet. The fan motor 210 has a shaft 203 (rotor 207) rotatable at a predetermined speed via bearings 206. The rotatable shaft 203 is disposed coaxially with the yoke 202, and integrally held by an injection-molded member 204 made of a glass-reinforced polybutylene terephthalate resin. The support member 204 comprises a fan 204a, a rim 204b, a spoke 204c and a rear member 204d, to provide the rotor 207 with practically useful strength.

Magnetization is carried out in the form of a rotor 207. The outer surface of stator 208 is provided with stator magnetic poles (four symmetric magnetic poles), which are not shown. The fan 204a is rotated efficiently by a rectangular wave-conducting signal (180° conducting at electrical angle) supplied from a fan motor-driving control circuit (not shown).

Near an axial center portion of the rotor 207 before assembling in the fan motor 210, a surface magnetic flux density (Bo) distribution was measured on an inner surface of the field magnet 201 in a circumferential direction. The results are shown in Fig. 21. The maximum value of Bo at four magnetic poles was 0.16 T (1600 G) on average.

Next, the fan motor 210 comprising the rotor 207 was assembled in an air-blowing fan to carry out continuous operation for one month. After continuous operation, the field magnet201 was free from cracking, showing good appearance. Also, the continuous operation did not cause any deterioration in the performance of the fan motor 210.

COMPARATIVE EXAMPLE 11

2.0-mm-thick Nd-Fe-B sheet-shaped, isotropic, resin-bonded magnet was produced in the same manner as in EXAMPLE 32 except that isotropic, Nd-Fe-B magnet powder (MQP-B) available from MQI (Magnequench International) was used as magnet powder. However, when the sheet-shaped, resin-bonded magnet was wound by one turn and fixed to an inner surface of the yoke for a fan motor, the sheet-shaped, resin-bonded magnet was cracked, failing to be used for practical applications.

COMPARATIVE EXAMPLE 12

A fan motor was produced in the same manner as in EXAMPLE 32 except for using a radially anisotropic, ring-shaped, ferrite resin-bonded magnet (tradename KPM-2A, outer diameter: 30.0 mm, inner diameter: 26.0 mm, and height: 30.0 mm) available from Hitachi Metals, Ltd. as a field magnet with four symmetric magnetic poles. A surface magnetic flux density distribution was measured on an inner surface of the ring-shaped, resin-bonded, ferrite magnet disposed in this fan motor rotor in a circumferential direction. The results are shown in Fig. 21. The averaged maximum value of Bo at four magnetic poles was less than that of EXAMPLE 32.

COMPARATIVE EXAMPLE 13

A 2.0-mm-thick sheet-shaped, isotropic, resin-bonded magnet was produced, using the pellets of COMPARATIVE EXAMPLE 1. This sheet-shaped, isotropic, resin-bonded magnet was assembled in a rotor as a field magnet for a fan motor. A surface magnetic flux density distribution was measured on an inner surface of the sheet-shaped, resin-bonded magnet disposed in this fan motor rotor in a circumferential direction. The results are shown in Fig. 21. The averaged maximum value of Bo at four magnetic poles was less than that of EXAMPLE 32 and more than that of COMPARATIVE EXAMPLE 12.

EXAMPLE 33

In constituting a rotor 207 for a fan motor 210 shown in Fig. 20, the thickness of the sheet-shaped, resin-bonded magnet and an inner surface of a yoke 202 to which a field magnet 201 formed by winding the sheet-shaped, resin-bonded magnet is fixed were relatively changed to examine whether or not the sheet-shaped, resin-bonded magnet fixed to the yoke 202 is cracked.

Using nitride magnet powder of EXAMPLE 19, the sheet-shaped, molded product of 0.05-5.0 mm in thickness and 100 mm in width was produced in the same manner as in EXAMPLE 19 except for changing the thickness of the sheet-shaped, molded product. The sheet-shaped, molded product was cut to predetermined width and length and subjected to a heat treatment and a curing treatment. The resultant sheet-shaped, molded product had a density of 5.4-5.5 g/$cm^3$.

Cut products of each thickness were wound in a ring shape by one turn, and each of them was adhered to an inner surface of a ring-shaped, ferromagnetic yoke of 1.0-100.0 mm in inner diameter, to prepare 20 samples for each sheet thickness and each yoke inner diameter shown in Table 7. Each sample was left to stand at room temperature in the air for one month to examine how it was cracked. The results are shown in Table 7. Incidentally, the inner diameter of the yoke shown in Table 7 substantially corresponds to the outer diameter of the ring-shaped field magnet. It is clear from Table 7 that the thicker the sheet-shaped, isotropic, resin-bonded magnet, and the smaller the yoke inner diameter, the more likely cracking takes place.

Table 7

| Sheet Thickness (mm) | Inner Diameter of Yoke (mm) | | | | | | | |
|---|---|---|---|---|---|---|---|---|
| | 1.0 | 2.0 | 4.0 | 8.0 | 16.0 | 32.0 | 64.0 | 100.0 |
| 0.05 | ○ | ○ | ○ | ○ | ○ | ○ | ○ | ○ |
| 0.3 | Δ | ○ | ○ | ○ | ○ | ○ | ○ | ○ |
| 0.5 | - | Δ | ○ | ○ | ○ | ○ | ○ | ○ |
| 1.0 | - | - | Δ | ○ | ○ | ○ | ○ | ○ |
| 2.0 | - | - | - | Δ | ○ | ○ | ○ | ○ |
| 5.0 | - | - | - | - | Δ | ○ | ○ | ○ |

Note ○: Good.
Δ: The percentage of samples having cracking was 1/20-10/20.
× : The percentage of samples having cracking was 11/20 or more.
— : Not adhered because of too narrow space on the side of an inner diameter of the yoke.

COMPARATIVE EXAMPLE 14

A sheet-shaped, molded product having a thickness of 0.05-5.0 mm and a width of about 100 mm was produced in the same manner as in EXAMPLE 33 except for using the nitride magnet powder of EXAMPLE 10. it was cut to a predetermined width and length, and subjected to a heat treatment and a curing treatment. Each of the sheet-shaped, molded product was adhered to an inner surface of a yoke in the same manner as in EXAMPLE 33 except for winding a cut product of each thickness by one turn. The resultant samples were examined as to whether or not the sheet-shaped, resin-bonded magnets were cracked. The results are shown in Table 8. It is clear from Table 8 that there was cracking in any combination of sheet thickness and yoke inner diameter.

Table 8

| Sheet Thickness (mm) | Inner Diameter of Yoke (mm) | | | | | | | |
|---|---|---|---|---|---|---|---|---|
| | 1.0 | 2.0 | 4.0 | 8.0 | 16.0 | 32.0 | 64.0 | 100.0 |
| 0.05 | Δ | Δ | Δ | Δ | Δ | Δ | Δ | Δ |
| 0.3 | × | △ | △ | △ | △ | △ | △ | △ |
| 0.5 | — | × | △ | △ | △ | △ | △ | Δ |
| 1.0 | — | — | × | △ | △ | △ | △ | Δ |
| 2.0 | — | — | — | × | △ | △ | △ | Δ |
| 5.0 | - | - | — | — | × | △ | △ | Δ |

Note O: Good.
Δ: The percentage of samples having cracking was 1/20-10/20.
× : The percentage of samples having cracking was 11/20 or more.
— : Not adhered because of too narrow space on the side of an inner diameter of the yoke.

The comparison of Tables 7 and 8 revealed that the sheet-shaped, resin-bonded magnets of EXAMPLE 33 are better than those of COMPARATIVE EXAMPLE 14 in cracking resistance (durability) when fixed to yoke surfaces having predetermined radii of curvature, and in capability of providing reliable fan motors. The reason therefor is considered that the magnet powder constituting the sheet-shaped, resin-bonded magnets of EXAMPLE 33 is in the form of a round, irregular-shaped bulk substantially similar to that shown in Fig. 12 (a), while the magnet powder constituting the sheet-shaped, resin-bonded magnets of COMPARATIVE EXAMPLE 14 is an extremely thin flat sheet of less than about 20 μm in thickness, as is clear from Fig. 12 (b).

The scanning-type electron microscopic observation of fracture surfaces of cracked products in the above samples revealed that magnet powder particles were not broken on any fracture surfaces in the samples of EXAMPLE 33, while flat magnet powder particles were broken in their thickness directions on many fracture surfaces in the samples of COMPARATIVE EXAMPLE 14. This indicates that granular particles in the sheet-shaped, resin-bonded magnets of EXAMPLE 33 have substantially isotropic strength and thus exhibit good cracking resistance, when a stress σ is applied to the granular particles resin-bonded by a binder as shown in Fig. 13 (a). On the other hand, it is considered that when a stress σ is applied to flat particles resin-bonded by a binder in the sheet-shaped, resin-bonded magnets of COMPARATIVE EXAMPLE 14 as shown in Fig. 13 (b), the flat particles are broken in their thinnest (weakest) directions, exhibiting low cracking resistance.

EXAMPLE 34

Rounded compounds were produced by blending 93.5 parts by weight of the nitride magnet powder of EXAMPLE 19 with 6.5 parts by weight of a liquid epoxy resin, and subsequently in the same manner as in EXAMPLE 1. Sheet-shaped, isotropic, resin-bonded magnets of 2.0 mm in thickness ($R_{max}$ = 5-8 μm) were then produced from the compounds in the same manner as in EXAMPLE 13. After cutting the sheet-shaped, isotropic, resin-bonded magnets to predetermined width and length, each of them was wound by one turn and fixed to an inner surface of a yoke for a rotor, to form a field magnet having an outer diameter of 30.0mm, an inner diameter of 26.0 mm, and a height of 30.0 mm. The field magnet was provided with four magnetic poles symmetrically. The measurement of a surface magnetic flux density (Bo) distribution on an inner surface in an axial center portion of each field magnet in a circumferential direction revealed that the maximum value of Bo at four magnetic poles was 0.167 T (1670 G) on average, higher than that of EXAMPLE 32.

EXAMPLE 35

Each of Figs. 22 (a)-(d) shows a seam of the wound sheet-shaped, resin-bonded magnet and a magnetic pole along the seam, when a field magnet is formed by winding the sheet-shaped, isotropic, resin-bonded magnet of the present invention. Fig. 22 (a) shows an example in which a seam 331 (magnetic pole boundary) of a ring-shaped field magnet 330 is in parallel with the axial direction of the field magnet 330. Fig. 22 (b) shows an example in which a seam (magnetic pole boundary) 341 of a ring-shaped field magnet340 is at an angle 0 ($0° < \theta < 90°$) relative to the axial direction X4 of a field magnet 340, with four magnetic poles in parallel to the seam 341. This structure is effective to reduce a cogging torque.

Fig. 22 (c) shows an example in which a seam (magnetic pole boundary) 351 of a ring-shaped field magnet 350 has a portion 351a at an angle θ ($0° < \theta < 90°$) relative to an axial direction X5 and a portion 351b in perpendicular to the axial direction X5, with four magnetic poles along the seam 351. This structure effectively suppresses a cogging torque, thereby improving the output of a rotor.

Fig. 22 (d) shows an example in which a gap 361 is provided in a portion corresponding to the seam of the ring-shaped field magnet 360. In this state, the sheet-shaped, resin-bonded magnet 362 fixed to the yoke is effectively resistant to cracking by thermal stress.

Fig. 23 shows another structure of a rotor used in the present invention. Fig. 23 (a) shows an outer rotor-type rotor 370 comprising the sheet-shaped, resin-bonded magnet 371 of the present invention adhered to the inner surface of a ferromagnetic yoke 372 via equal-interval gap 373. Fig. 23 (b) shows an inner rotor-type rotor 380 comprising a field magnet 381 formed from a one-turn winding of the sheet-shaped, resin-bonded magnet of the present invention adhered to a ferromagnetic rotor core. Fig. 23 (c) shows an inner rotor-type rotor 390 comprising the sheet-shaped, resin-bonded magnet 391 of the present invention adhered to an outer surface of a ferromagnetic rotor core 392 via equal-interval gap 393.

EXAMPLE 36

<u>Production and evaluation of pager motor</u>

Fig. 24 is a cross-sectional view showing an important part of a motor as vibration motor 420 for a pager according to an embodiment of the present invention. Fig. 24(b) is a cross-sectional view taken along the line B-B in Fig. 24(a).

A field magnet 424 is formed by cutting a 0.5-mm- thick sheet-shaped, isotropic, resin-bonded magnet prepared in EXAMPLE 33 to predetermined width and length, and winding the cut sheet magnet by one turn and fixing it to a surface a ferromagnetic (S45C) rotor yoke 426. 424a denotes a seam of the sheet-shaped, resin-bonded magnet. The field magnet 424 is provided with four magnetic poles symmetrically on an outer surface in circumferential direction. An air gap 427 is adjusted to have an average thickness of 0.1 mm.

A stator 435 has a stator core 422 and a winding 430. The stator core has six teeth 422a, each tooth 422a has a winding of 36 turns, and a winding 430 is constituted by a wire having a diameter of 0.10 mm. The stator core 422 is constituted by laminating thin ferromagnetic (silicon steel: JIS50A350) sheets of 0.5 mm in thickness in an L direction (L = 10 mm). A substantially half-cylindrical eccentric weight 433 is attached to a tip end portion of the rotatable shaft 428, such that the eccentric weight 433 rotates integrally with the rotatable shaft 428. When the motor 420 is driven, the eccentric weight 433 rotates eccentrically, generating remarkable vibration in the motor 420.

The motor 420 is efficiently rotated by rotation control by three-phase alternating current conduction. Lest that the field magnet 424 is demagnetized by a reverse magnetic field applied from the winding 430 on the side of the stator 435, the field magnet 424 preferably has an average permeance coefficient Pc of 0.5-3 (thickness: 0.1-0.9 mm). The vibration motor 420 having the above structure for a pager is extremely small, such that the outer diameter of the rotor 425 is as small as 2.0 mm, and the outer diameter of a stator 435 is as small as 6.0 mm.

Fig. 25 shows a torque in a stationary state when current of 0.08A is supplied to a U-W phase of a winding 430 of a motor 420. In Fig. 25, the axis of abscissas represents a machine angle, and the axis of ordinates represents a torque. The maximum torque is almost 0.1 Nmm in absolute value, meaning that it can provide useful motor performance.

The motor 420 was assembled in a cell phone, and after use for one month, it was disassembled to examine the conditions of a field magnet 424. As a result, it was found that the field magnet 424 was free from cracking, keeping motor performance useful for practical applications.

Though this example describes a case where a pager motor is installed in a cell phone, this is not restrictive, providing useful effects even when it is installed in portable bells.

EXAMPLE 37

Production and evaluation of spindle motor

Fig. 26 (a) is a cross-sectional view showing an important portion of a typical spindle motor 450 of the present invention, and Fig. 26 (b) is a cross-sectional view taken along the line C-C in Fig. 26 (a).

The motor 450 comprises an air gap 447, and a stator 445 and a rotor 455 opposing each other via the air gap 447. The stator 445 comprises a center shaft 448, a ferromagnetic stator core 445 disposed around the center shaft 448, a core 443 and a winding 449. The rotor 455 comprises a field magnet 453 formed by cutting the sheet-shaped, resin-bonded magnet (thickness: 1.0 mm) prepared in EXAMPLE 33 to a predetermined width and length, winding the cut sheet-shaped, resin-bonded magnet by one turn and fixing it to an inner surface of a ferromagnetic rotor yoke 452. 453a denotes a seam of the sheet-shaped, resin-bonded magnet. The motor 450 is a so-called outer rotating-type brushless motor in which the rotor 455 is disposed outside. The field magnet 453 had an extremely small inner diameter of 20 mm.

After the motor 450 was assembled in a hard disc drive and used for one month, the hard disc drive was disassembled to examine the conditions of the field magnet 453. As a result, no cracking was appreciated, indicating that it kept a motor performance useful in practical applications.

Incidentally, also useful is a brush motor converted from a spindle motor having the same magnetic circuit as in Fig. 26 and provided with a brush, with a current-passing portion of a winding 449 changed such that a stator is disposed outside and an inner winding is rotatable.

EXAMPLE 38

The isotropic, sheet-shaped, resin-bonded magnet of the present invention was used to produce a motor 520 having an axial air gap as shown in Fig. 27, and evaluated.

Fig. 27 (a) is a view showing the motor 520 seen from above, and Fig. 27 (b) is a cross-sectional view taken along the line D-D in Fig. 27 (a). The field magnet 501 was formed by cutting a 0.5-mm-thick, sheet-shaped, isotropic, resin-bonded magnet prepared in EXAMPLE 33 in a doughnut shape, and fixing the cut sheet to a ferromagnetic back yoke 502 (S45C, etc.). The rotor 505 was constituted by disposing these field magnets 501 around a rotatable shaft 503. As shown in Fig. 27 (c), 12 magnetic poles were provided in these field magnets 501 in a plane at an equal interval along a rotational direction of a portion of the field magnet 501 opposing to the air gap 515. The stator core has 18 teeth 517a.

The motor 520 is efficiently rotated by rotation control by a three-phase alternating current supply system. Lest that the field magnet 501 is demagnetized to a practically useless level by a reverse magnetic field applied from a winding 516 on the side of stator 510, the field magnet 501 preferably has an average permeance coefficient Pc of 0.5-3.

Though the back yoke 502 constituting the rotor 505 of the motor 520 is as thin as 0.55 mm in an axial direction, there is only extremely small core loss in the back yoke 502 because the back yoke 502 is made of a ferromagnetic material (S45C).

The core (yoke) 517 of the stator 510 is made of silicon steel (JIS50A350) and as thin as 0.55 mm. Teeth 517a of the stator core had a winding of 72 turns, and a winding 516 was constituted by a wire having a diameter of 0.15 mm. An axial air gap 515 was as thin as 0.2 mm on average. As a result, the total thickness $t_{520}$ of the back yoke 502, the field magnet 501, the air gap 515 and the stator core 517 was 1.8 mm, providing a thin motor that was conventionally impossible. When current of 0.1 A was supplied to a U-W phase of the winding 516 of the motor 520, a torque in a stationary state was measured. The results are shown in Fig. 28. In Fig. 28, the axis of abscissas represents a mechanical angle, and the axis of ordinates represents a torque. The maximum torque was 12 Nmm in absolute value, indicating that it had useful motor performance.

After the motor 520 was continuously operated for 100 hours, the field magnet 501 was examined with respect to cracking. As a result, the field magnet 501 was free from cracking, without deterioration in a magnetic force.

EXAMPLE 39

The compounds of EXAMPLES 10-12 were used to produce doughnut-shaped, isotropic, resin-bonded sheet magnets (thickness: 0.5 mm) as in EXAMPLE 38. Next, a motor having an axial air gap was produced in the same manner as in EXAMPLE 38 except for using each of these sheet-shaped, resin-bonded magnets, and evaluated. As a result, when the field magnets were formed from the compounds of EXAMPLES 11 and 12, the highest motor performance was achieved, without cracking in the field magnets. In a motor comprising a field magnet formed from the compound of EXAMPLE 10, substantially the same motor performance as in EXAMPLE 38 was achieved, without cracking in the field magnets.

Though not particularly restrictive, the field magnet of the rotor may have preferably 2-100, more preferably 4-16, magnetic poles with equal or different intervals.

Though the sheet-shaped, resin-bonded magnet is disposed in a rotor in the above EXAMPLES, the sheet-shaped, resin-bonded magnet may be disposed on the side of a stator to constitute a motor.

To provide the isotropic, resin-bonded magnet of the present invention with increased cracking resistance, moldability and oxidation resistance, surface modifiers (silane coupling agents, etc.), lubricants, fillers and antioxidants may be added in a total amount of 2 weight % or less.

To improve corrosion resistance, the isotropic, resin-bonded magnet of the present invention preferably has a corrosion-resistant coating (epoxy resin coating, etc.) in an average thickness of 0.5-30 μm. When the average thickness of the corrosion-resistant coating is less than 0.5 μm, improved corrosion resistance cannot be achieved. On the other hand, when it exceeds 30 μm, the effect of improving the corrosion resistance is saturated.

As described above in detail, the present invention provides a high-performance, sheet-shaped, R-T-N-type, isotropic, resin-bonded magnet having decreased surface roughness (maximum roughness: $R_{max}$) than conventional resin-bonded magnets.

It also provides high-performance, sheet-shaped, isotropic, resin-bonded magnet having decreased surface roughness (maximum roughness: $R_{max}$) than conventional resin-bonded magnets, which is substantially composed of R-T-N isotropic magnet powder, R'-T'-B isotropic magnet powder having an $R'_2T'_{14}B$-type intermetallic compound (R' is at least one of rare earth elements including Y, Nd being indispensable, and T' is Fe or Fe and Co.) as a main phase, and a binder.

It further provides a ring-shaped or cylindrical, high-performance, R-T-N isotropic, resin-bonded magnet having improved roundness of outer or inner surface than those of conventional resin-bonded magnets.

It further provides a ring-shaped or cylindrical, high-performance, isotropic, resin-bonded magnet having improved roundness of outer or inner surface than those of conventional resin-bonded magnets, which is substantially composed of R-T-N isotropic magnet powder, R'-T'-B isotropic magnet powder, and a binder.

It further provides a high-performance, sheet-shaped, R-T-N-type, isotropic, resin-bonded magnet having improved magnetizability than that of conventional resin-bonded magnets.

It further provides a high-performance, isotropic, resin-bonded magnet having better magnetizability than that of conventional resin-bonded magnets, which is substantially composed of (Sm, La)-T-N isotropic magnet powder, R'-T'-B isotropic magnet powder, and a binder.

It further provides a high-performance rotor and magnet roll constituted by using the above isotropic, resin-bonded magnet.

It further provides a high-performance compound for the above isotropic, resin-bonded magnet, and a method for producing the high-performance compound.

## Claims

**1.** An isotropic, resin-bonded magnet substantially comprising R-T-N magnet powder having a main component com-

position represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, and a binder, in the form of a sheet-shaped, molded product having a thickness of 0.1-5 mm, with the maximum roughness ($R_{max}$) defined by JIS B 0601 decreased to 15 μm or less.

**2.** The isotropic, resin-bonded magnet according to claim 1, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**3.** The isotropic, resin-bonded magnet according to claim 1, wherein said R-T-N magnet powder comprises as a main phase a hard magnetic phase having a $TbCu_7$-type crystal structure, said main phase having an average crystal grain size of 0.002-0.5 μm.

**4.** A rotating machine comprising the isotropic, resin-bonded magnet according to any one of claims 1-3.

**5.** A magnet roll comprising the isotropic, resin-bonded magnet according to any one of claims 1-3.

**6.** An isotropic, resin-bonded magnet substantially comprising (a) R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, (b) R'-T'-B magnet powder comprising as a main phase an $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding said two kinds of magnet powder, in the form of a sheet-shaped, molded product having a thickness of 0.1-5 mm, with the maximum roughness ($R_{max}$) defined by JIS B 0601 decreased to 15 μm or less.

**7.** The isotropic, resin-bonded magnet according to claim 6, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**8.** The isotropic, resin-bonded magnet according to claim 6, wherein said R-T-N magnet powder comprises as a main phase a hard magnetic phase having a $TbCu_7$-type crystal structure, said main phase having an average crystal grain size of 0.002-0.5 μm.

**9.** A rotating machine comprising the isotropic, resin-bonded magnet according to any one of claims 6-8.

**10.** A magnet roll comprising the isotropic, resin-bonded magnet according to any one of claims 6-8.

**11.** An isotropic, resin-bonded magnet substantially comprising R-T-N magnet powder having a main component composition represented by $R_\alpha T_{100-(\alpha+\beta+\gamma+\delta)}M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \leq \alpha \leq 15$, $0 \leq \beta \leq 10$, $0 \leq \gamma \leq 4$ and $4 \leq \delta \leq 30$, respectively, and a binder, in the form of a ring-shaped or cylindrical, molded product with the deviation of its outer diameter from a diameter of a true circle decreased to 15 μm or less.

**12.** The isotropic, resin-bonded magnet according to claim 11, wherein the deviation of an inner diameter of said ring-shaped, isotropic, resin-bonded magnet from a diameter of a true circle is decreased to 15 μm or less.

**13.** The isotropic, resin-bonded magnet according to claim 11 or 12, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**14.** The isotropic, resin-bonded magnet according to claim 11 or 12, wherein said R-T-N magnet powder comprises as a main phase a hard magnetic phase having a $TbCu_7$-type crystal structure, said main phase having an average crystal grain size of 0.002-0.5 μm.

**15.** A rotating machine comprising the isotropic, resin-bonded magnet according to any one of claims 11-14.

**16.** A magnet roll comprising the isotropic, resin-bonded magnet according to any one of claims 11-14.

**17.** An isotropic, resin-bonded magnet substantially comprising (a) R-T-N magnet powder having a main component composition represented by $R_\alpha T_{100-(\alpha+\beta+\gamma+\delta)} M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$, $0 \le \gamma \le 4$ and $4 \le \delta \le 30$, respectively, (b) R'-T'-B magnet powder comprising as a main phase $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding said two kinds of magnet powder, in the form of a ring-shaped or cylindrical, molded product with the deviation of its outer diameter from a diameter of a true circle decreased to 15 μm or less.

**18.** The isotropic, resin-bonded magnet according to claim 17, the deviation of an inner diameter of said ring-shaped, isotropic, resin-bonded magnet from a diameter of a true circle is decreased to 15 μm or less.

**19.** The isotropic, resin-bonded magnet according to claim 17 or 18, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**20.** The isotropic, resin-bonded magnet according to claim 17 or 18, wherein said R-T-N magnet powder comprises as a main phase a hard magnetic phase having a $TbCu_7$-type crystal structure, said main phase having an average crystal grain size of 0.002-0.5 μm.

**21.** A rotating machine comprising the isotropic, resin-bonded magnet according to any one of claims 17-20.

**22.** A magnet roll comprising the isotropic, resin-bonded magnet according to any one of claims 17-20.

**23.** An isotropic, resin-bonded magnet substantially comprising R-T-N magnet powder having a main component composition represented by $R_\alpha T_{100-(\alpha+\beta+\gamma+\delta)} M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$, $0 \le \gamma \le 4$ and $4 \le \delta \le 30$, respectively, and a binder, in the form of a sheet-shaped, molded product having a thickness of 0.1-5 mm.

**24.** The isotropic, resin-bonded magnet according to claim 23, wherein the maximum roughness ($R_{max}$) defined by JIS B 0601 is decreased to 15 μm or less.

**25.** The isotropic, resin-bonded magnet according to claim 23 or 24, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**26.** The isotropic, resin-bonded magnet according to claim 23 or 24, wherein said R-T-N magnet powder comprises as a main phase a hard magnetic phase having a $TbCu_7$-type crystal structure, said main phase having an average crystal grain size of 0.002-0.5 μm.

**27.** A rotating machine comprising the isotropic, resin-bonded magnet according to any one of claims 23-26.

**28.** A magnet roll comprising the isotropic, resin-bonded magnet according to any one of claims 23-26.

**29.** The isotropic, resin-bonded magnet substantially comprising (a) R-T-N magnet powder having a main component composition represented by $R_\alpha T_{100-(\alpha+\beta+\gamma+\delta)} M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$, $0 \le \gamma \le 4$ and $4 \le \delta \le 30$, respectively, (b) R'-T'-B magnet powder comprising as a main phase an $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding said two kinds of magnet powder.

**30.** The isotropic, resin-bonded magnet according to claim 29, wherein it is in the form of a sheet-shaped, molded product having a thickness of 0.01-5 mm.

**31.** The isotropic, resin-bonded magnet according to claim 30, wherein the maximum roughness ($R_{max}$) defined by JIS B 0601 is decreased to 15 μm or less.

**32.** The isotropic, resin-bonded magnet according to any one of claims 29-31, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**33.** The isotropic, resin-bonded magnet according to any one of claims 29-31, wherein said R-T-N magnet powder comprises as a main phase a hard magnetic phase having a $TbCu_7$-type crystal structure, said main phase having an average crystal grain size of 0.002-0.5 μm.

**34.** A rotating machine comprising the isotropic, resin-bonded magnet according to any one of claims 29-33.

**35.** A magnet roll comprising the isotropic, resin-bonded magnet according to any one of claims 29-33.

**36.** An isotropic compound comprising R-T-N magnet powder having a main component composition represented by $R_\alpha T_{100-(\alpha+\beta+\gamma+\delta)} M_\beta B_\gamma N_\delta$ by atomic %, wherein R substantially comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$, $0 \le \gamma \le 4$ and $4 \le \delta \le 30$, respectively, and a binder.

**37.** The isotropic compound according to claim 36, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**38.** The isotropic compound according to claim 36, wherein said R-T-N magnet powder comprises as a main phase a hard magnetic phase having a $TbCu_7$-type crystal structure, said main phase having an average crystal grain size of 0.002-0.5 μm.

**39.** An isotropic compound comprising (a) R-T-N magnet powder having a main component composition represented by $R_\alpha T_{100-(\alpha+\beta+\gamma+\delta)} M_\beta B_\gamma N_\delta$ by atomic %, wherein R comprises Sm, La and inevitable rare earth elements, the content of La being 0.05-2 atomic %, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$, $0 \le \gamma \le 4$ and $4 \le \delta \le 30$, respectively, (b) R'-T'-B magnet powder comprising as main phase a $R'_2T'_{14}B$-type intermetallic compound, wherein R' is at least one of rare earth elements including Y, Nd being indispensable, and T' is Fe or Fe and Co, and having an average crystal grain size of 0.01-0.5 μm, and (c) a binder bonding said two kinds of magnet powder.

**40.** The isotropic compound according to claim 39, wherein said R-T-N magnet powder comprises as a main phase a hard magnetic phase having a $Th_2Zn_{17}$- or $Th_2Ni_{17}$-type crystal structure, said main phase having an average crystal grain size of 0.01-1 μm.

**41.** The isotropic compound according to claim 39, wherein said R-T-N magnet powder comprises as a main phase a hard magnetic phase having a $TbCu_7$-type crystal structure, said main phase having an average crystal grain size of 0.002-0.5 μm.

**42.** A method for producing an isotropic compound comprising the steps of (1) introducing into an extruder a mixture of R-T-N magnet powder having a main component composition represented by $R_\alpha T_{100-(\alpha+\beta+\gamma+\delta)} M_\beta B_\gamma N_\delta$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and α, β, γ and δ satisfy $4 \le \alpha \le 15$, $0 \le \beta \le 10$,$0 \le \gamma \le 4$ and $4 \le \delta \le 30$, respectively, and a binder, (2) extruding the resultant blend through a nozzle of 300 μm or less in diameter attached to said extruder, and (3) cutting and rounding the extruded blend.

**43.** A method for producing an isotropic compound comprising the steps of (1) introducing into an extruder a mixture substantially comprises (a) R-T-N magnet powder having a main component composition represented by $R_{\alpha}T_{100-(\alpha+\beta+\gamma+\delta)}M_{\beta}B_{\gamma}N_{\delta}$ by atomic %, wherein R is at least one of rare earth elements including Y, Sm being indispensable, T is Fe or Fe and Co, M is at least one element selected from the group consisting of Al, Ti, V, Cr, Mn, Cu, Ga, Zr, Nb, Mo, Hf, Ta, W and Zn, and $\alpha$, $\beta$, $\gamma$ and $\delta$ satisfy $4 \leq \alpha \leq 15$, $0 \leq \beta \leq 10$, $0 \leq \gamma \leq 4$ and $4 \leq \delta \leq 30$, respectively, (b) R'-T'-B magnet powder comprising as a main phase an $R'_2T'_{14}B$-type intermetallic compound, wherein R' is at least one of rare earth elements including Y, Nd being indispensable, and T' is Fe or Fe and Co, and having an average crystal grain size of 0.01-0.5 µm, and (c) a binder boding said two magnet powders, (2) extruding the resultant blend through a nozzle of 300 µm or less in diameter attached to said extruder, and (3) cutting and rounding the extruded blend.

Fig. 1

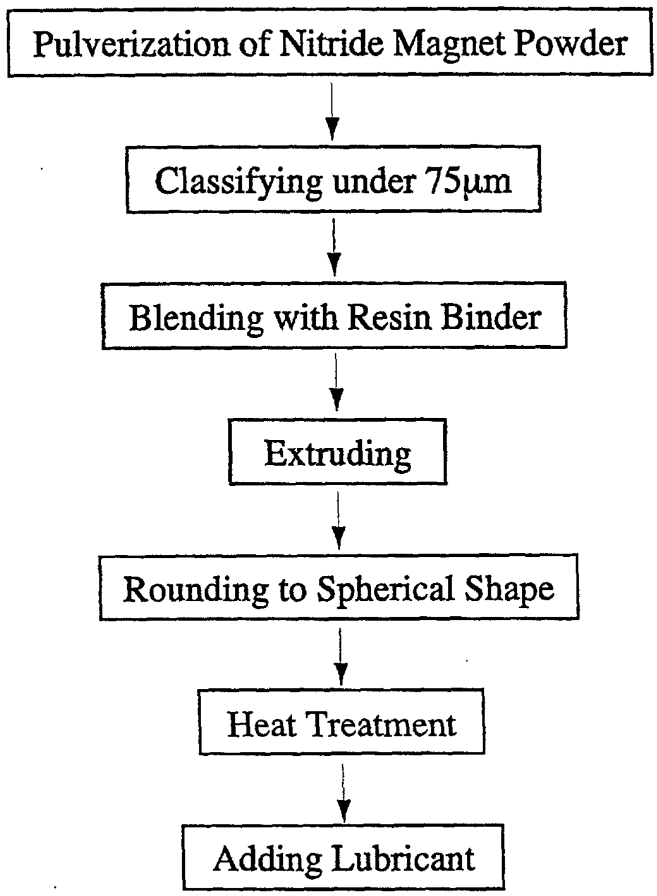
Pulverization of Nitride Magnet Powder
Classifying under 75μm
Blending with Resin Binder
Extruding
Rounding to Spherical Shape
Heat Treatment
Adding Lubricant

Fig. 2(a)

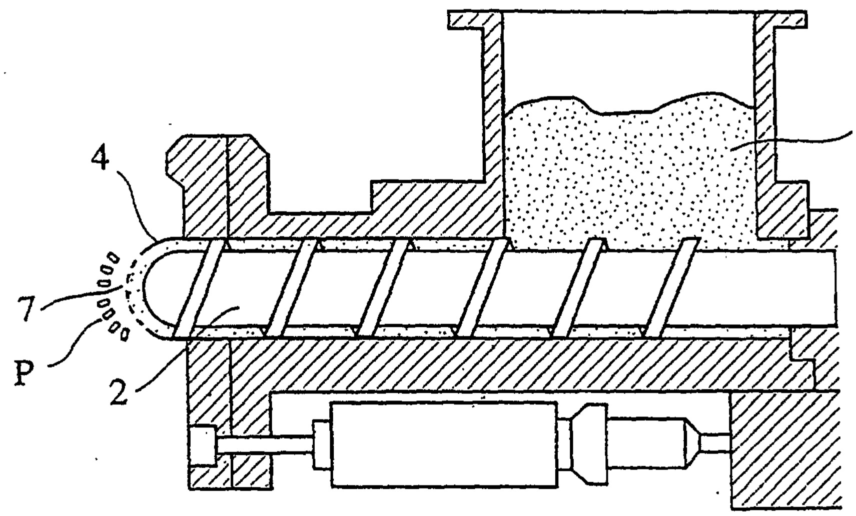


Fig. 2(b)

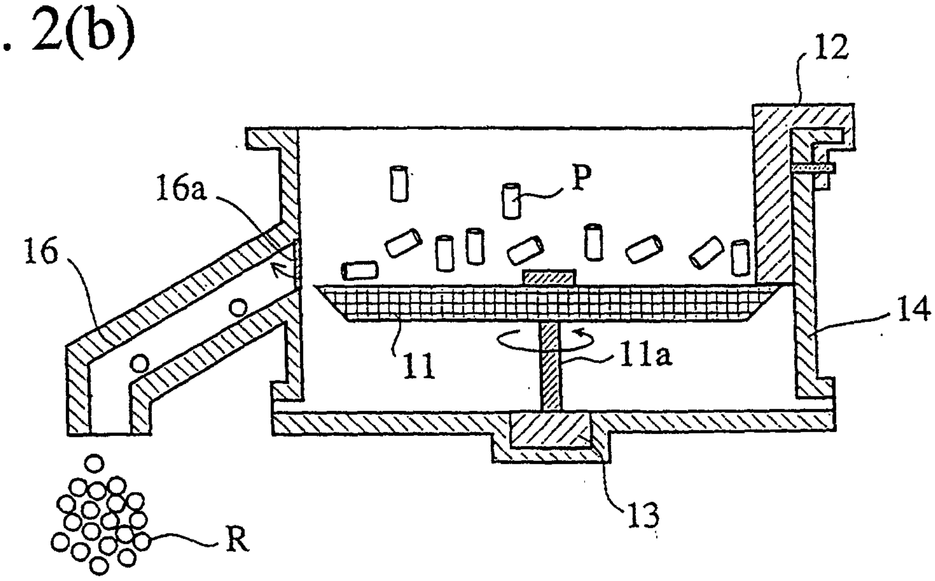

Fig. 3(a)

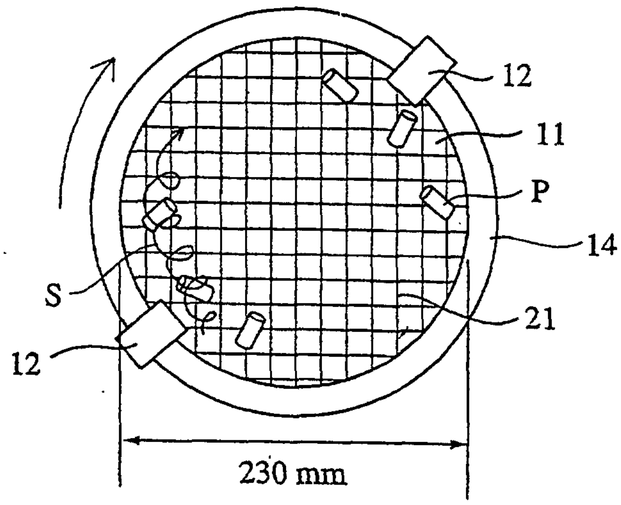


Fig. 3(b)

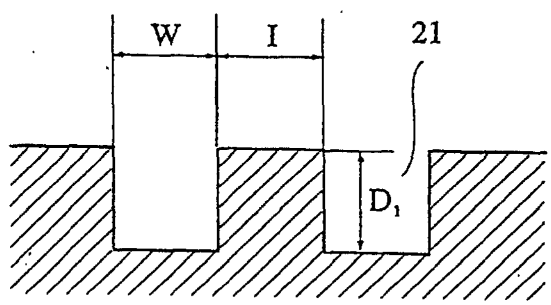


Fig. 3(c)

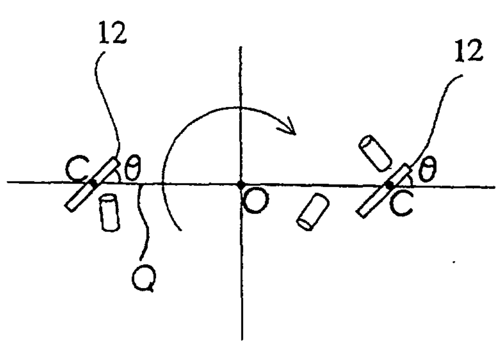

Fig. 4(a)

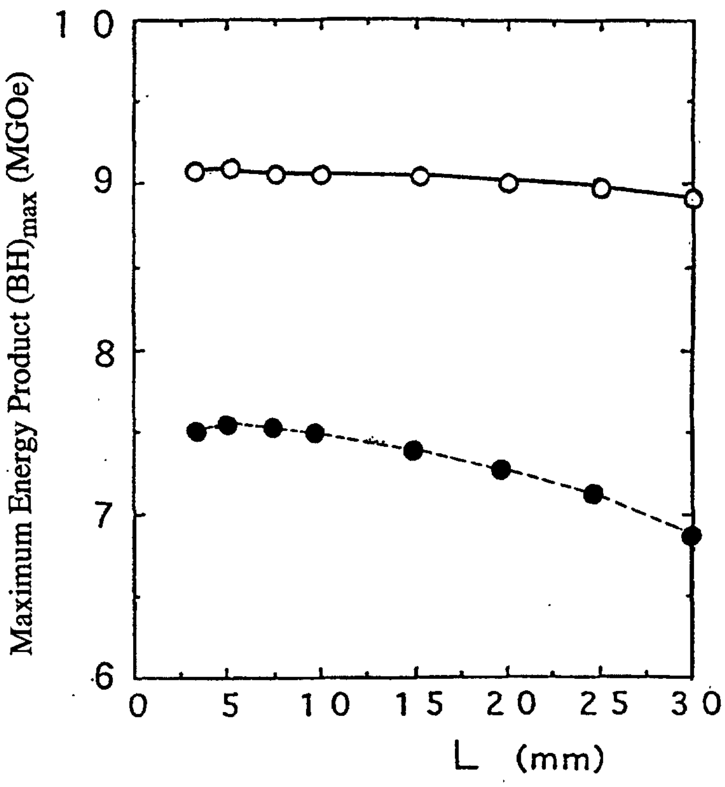
Maximum Energy Product (BH)max (MGOe)
10
9
8
7
6
0
5
10
15
20
25
30
L (mm)

Fig. 4(b)

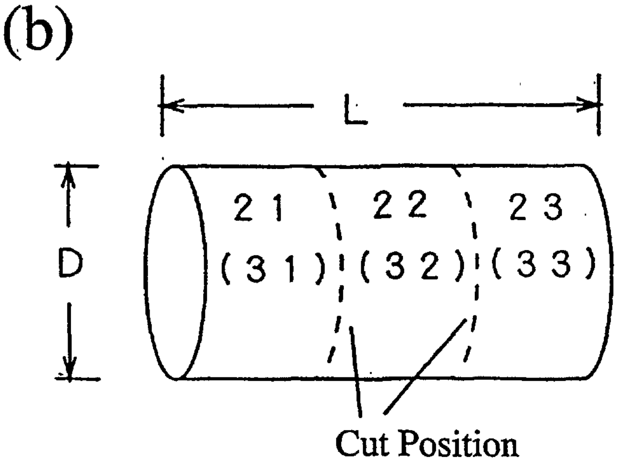
L
D
21
(31)
22
(32)
23
(33)
Cut Position

Fig. 5(a)

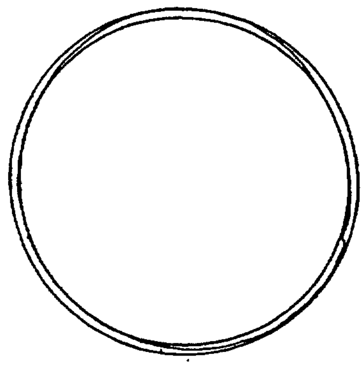

Example (Height : Maximum)

Fig. 5(b)

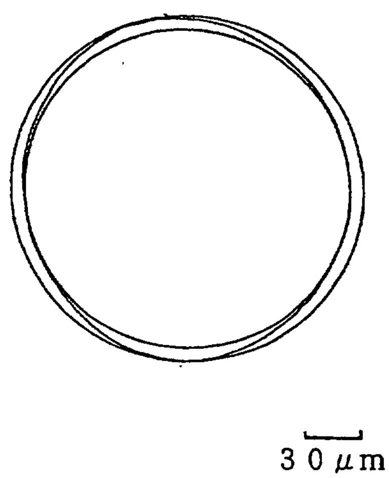


Example (Height : Minimum)

Fig. 6(a)

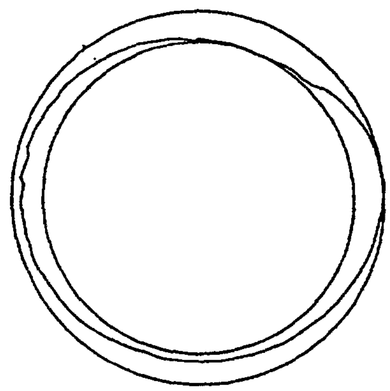

Example (Height : Maximum)

Fig. 6(b)

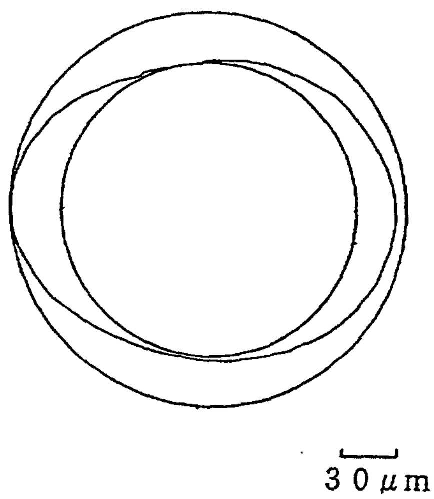


Example (Height : Minimum)

Fig. 7(a)

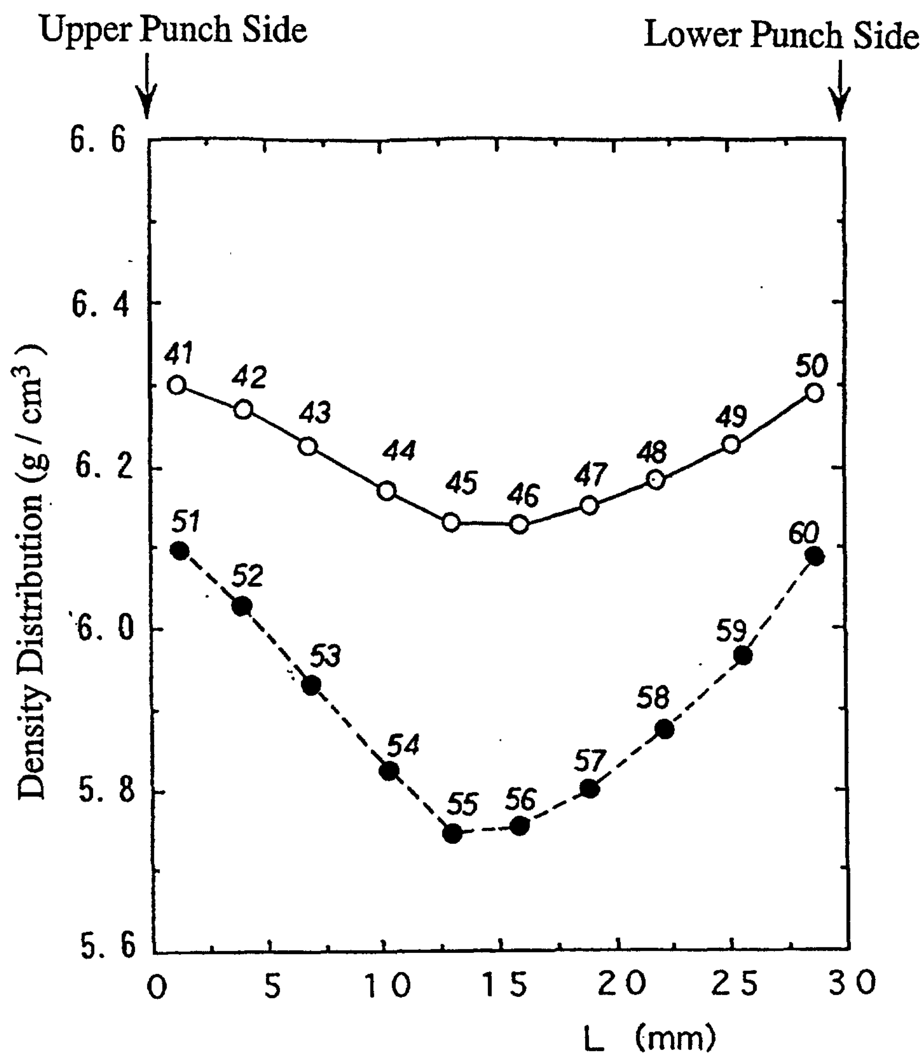
Upper Punch Side
Lower Punch Side
6.6
6.4
6.2
6.0
5.8
5.6
Density Distribution (g / cm3)
41
42
43
44
45
46
47
48
49
50
51
52
53
54
55
56
57
58
59
60
0
5
10
15
20
25
30
L (mm)

Fig. 7(b)

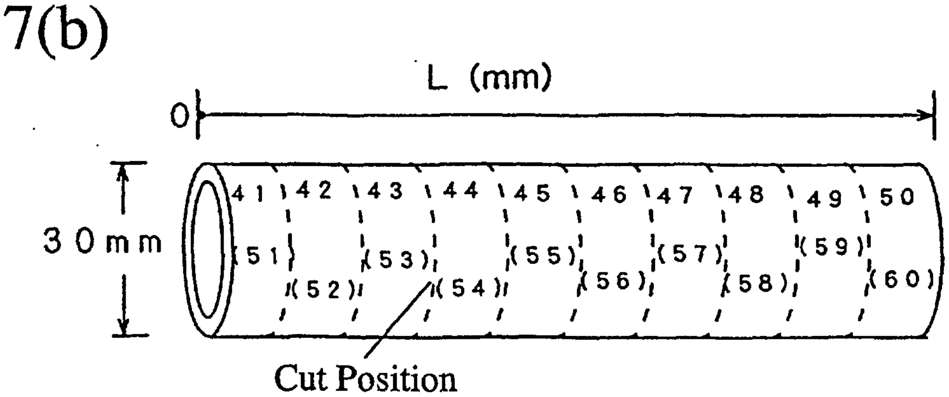
L (mm)
0
30mm
41
42
43
44
45
46
47
48
49
50
(51)
(52)
(53)
(54)
(55)
(56)
(57)
(58)
(59)
(60)
Cut Position

Fig. 8

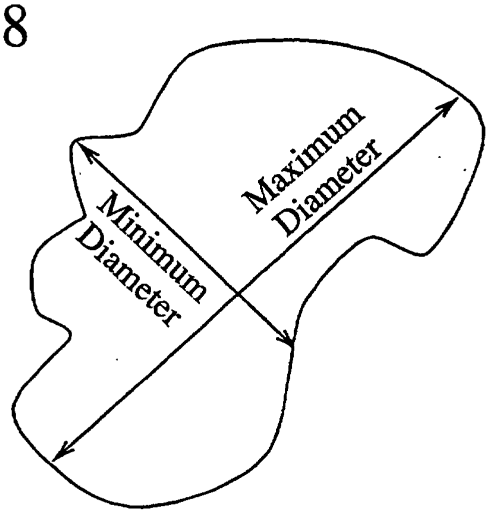


Fig. 9

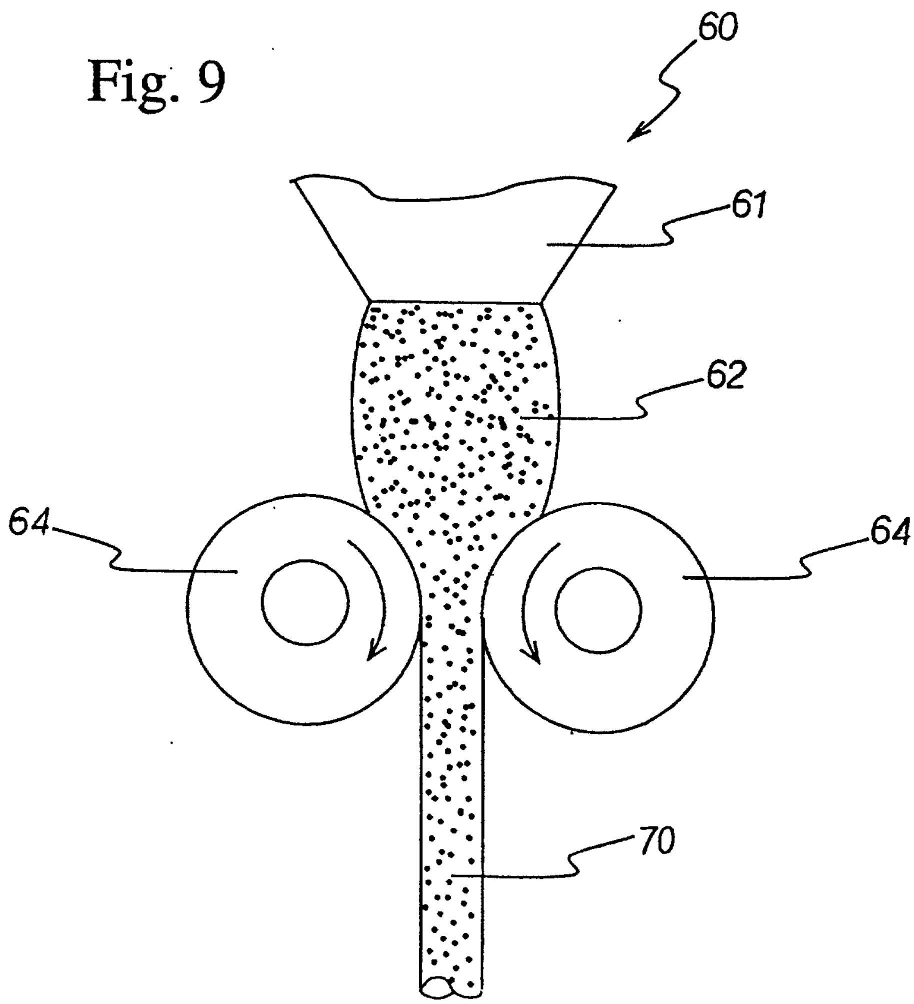

Fig. 10

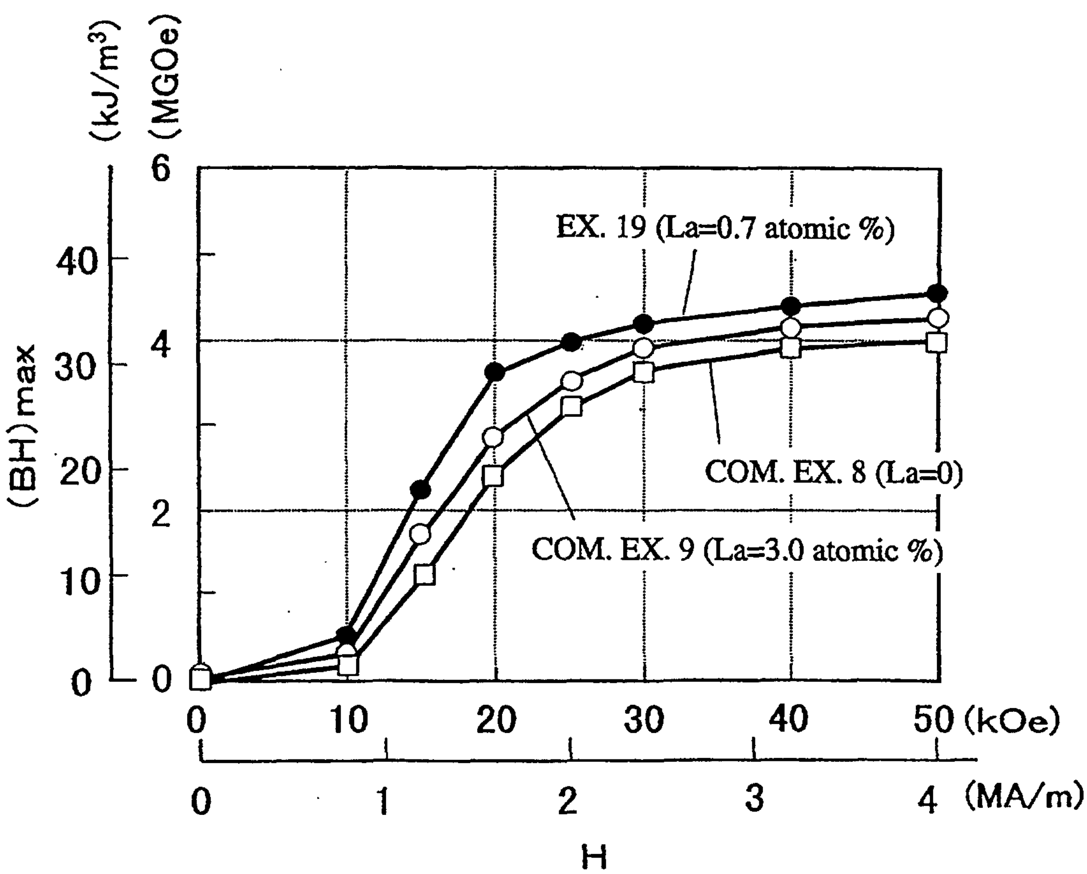
(kJ/m³)
(MGOe)
(BH)max
6
40
4
30
20
2
10
0
0
EX. 19 (La=0.7 atomic %)
COM. EX. 8 (La=0)
COM. EX. 9 (La=3.0 atomic %)
0
10
20
30
40
50 (kOe)
0
1
2
3
4 (MA/m)
H

Fig. 11

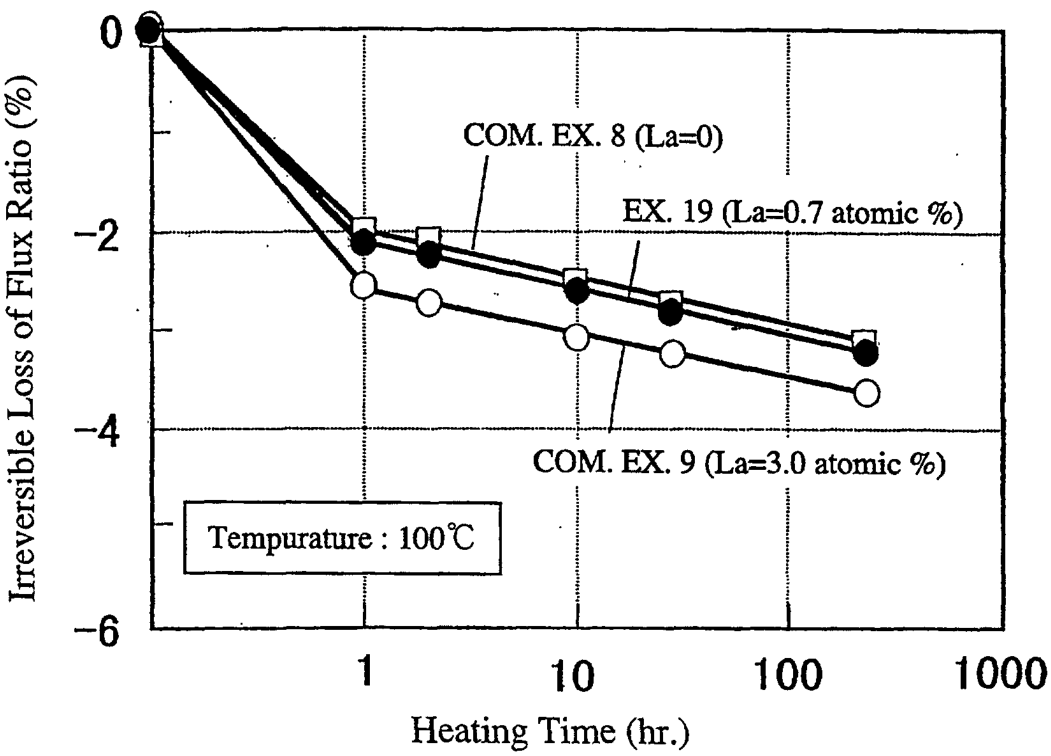
0
-2
-4
-6
Irreversible Loss of Flux Ratio (%)
COM. EX. 8 (La=0)
EX. 19 (La=0.7 atomic %)
COM. EX. 9 (La=3.0 atomic %)
Tempuratature : 100℃
1
10
100
1000
Heating Time (hr.)

Fig. 12(a)

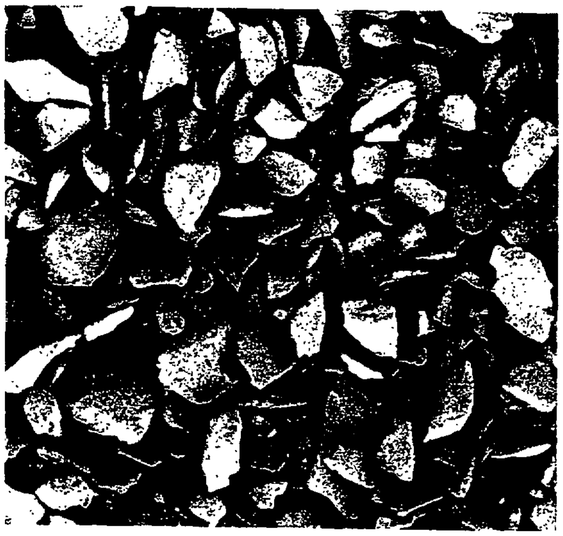

50 μm

Fig. 12(b)

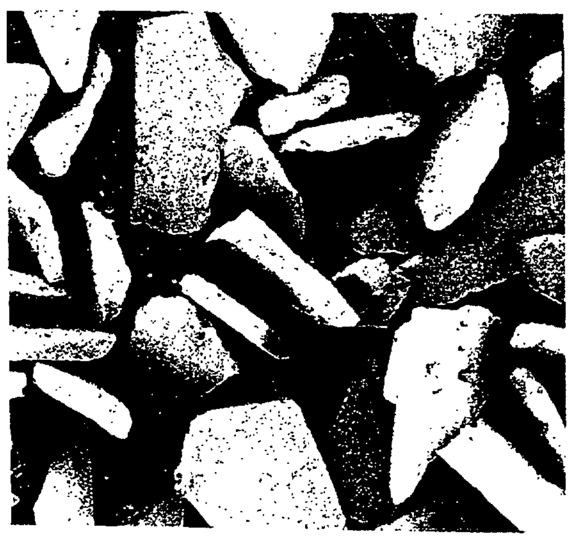

150 μm

Fig. 13(a)

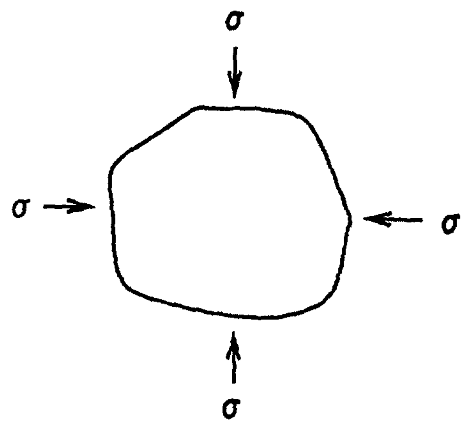


Fig. 13(b)

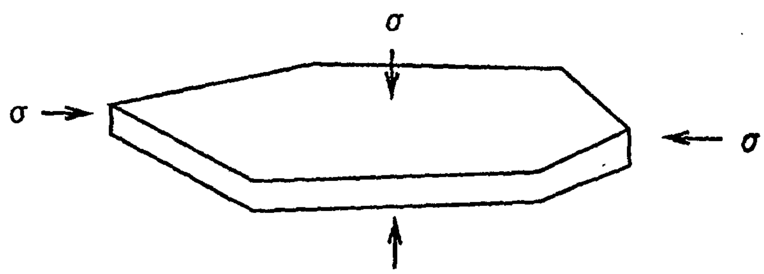

Fig. 14

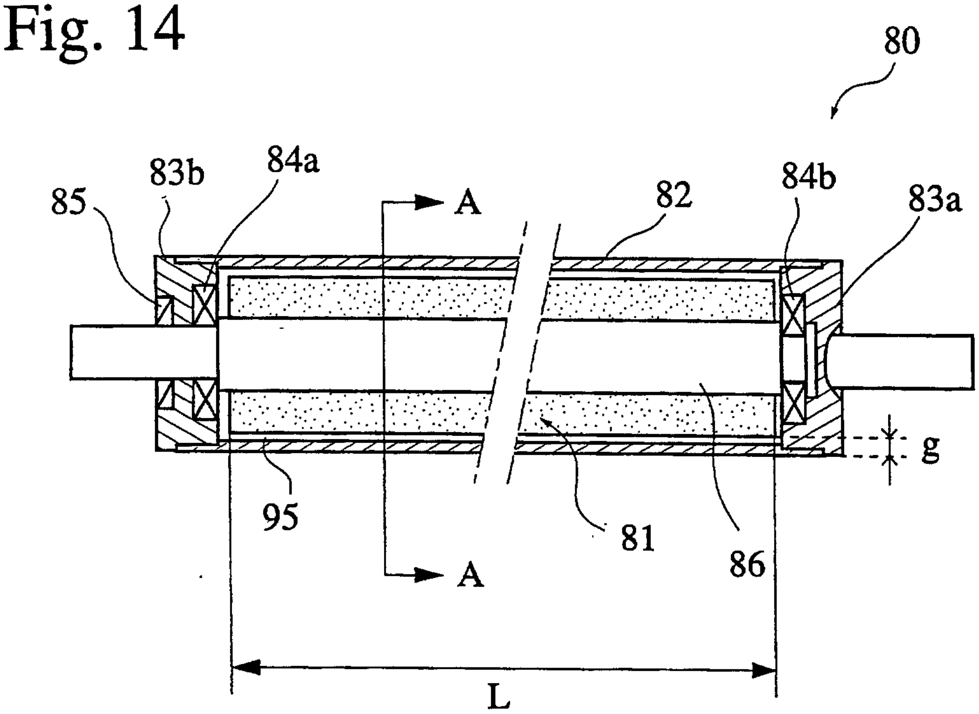
80
85
83b
84a
A
82
84b
83a
g
95
81
86
A
L

Fig. 15

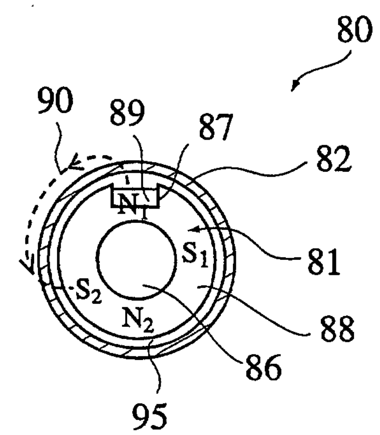
80
90
89
87
82
N1
S1
81
S2
N2
88
86
95

Fig. 16(a)

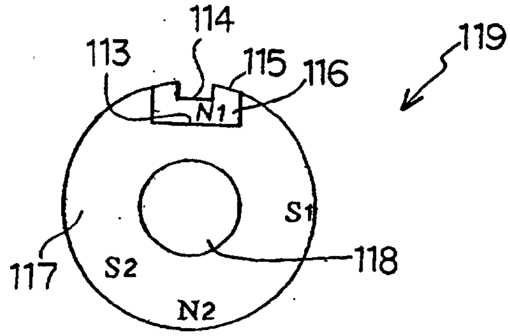


Fig. 16(b)

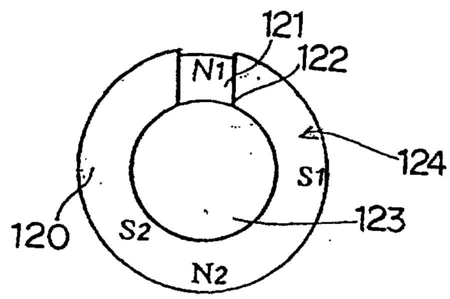


Fig. 16(c)

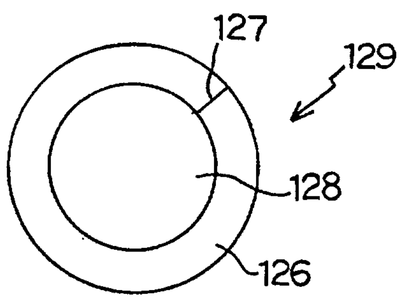

Fig. 17

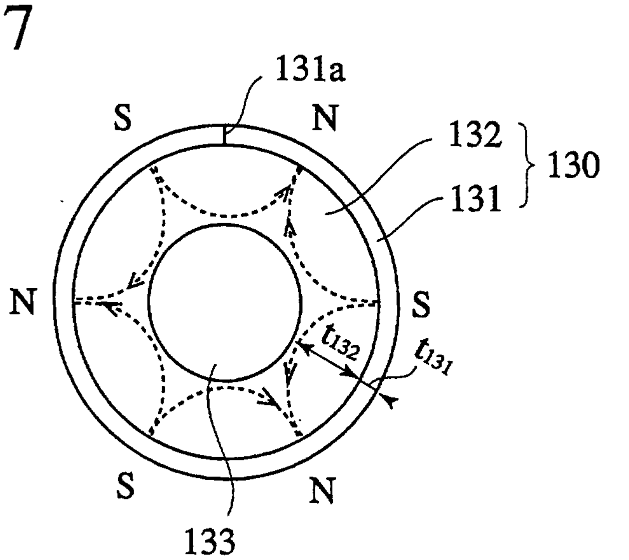
131a
S
N
132
131
130
N
S
$t_{132}$
$t_{131}$
S
N
133

Fig. 18

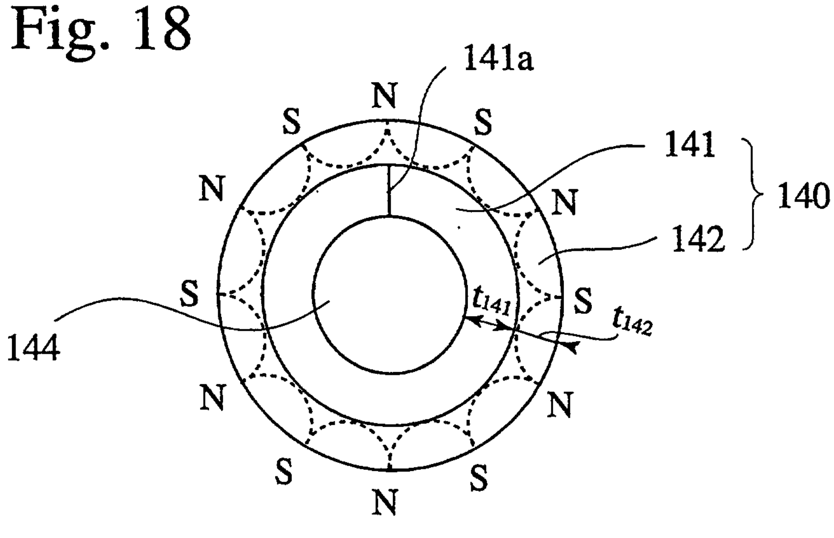
141a
N
S
S
141
140
N
N
142
S
S
$t_{141}$
$t_{142}$
144
N
N
S
S
N

Fig. 19(a)

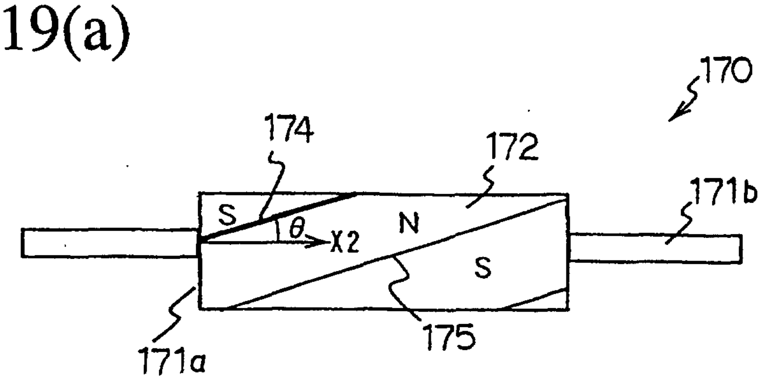


Fig. 19(b)

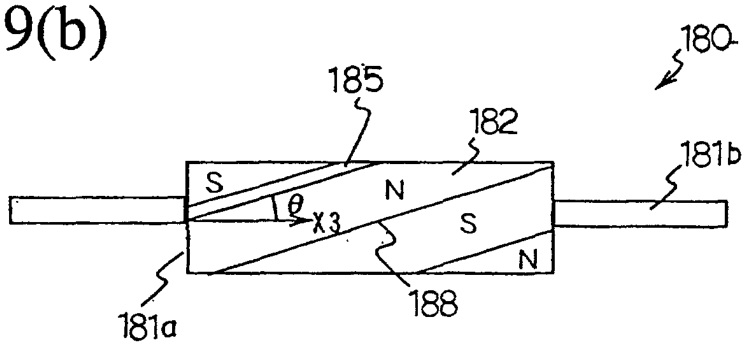

Fig. 20(a)

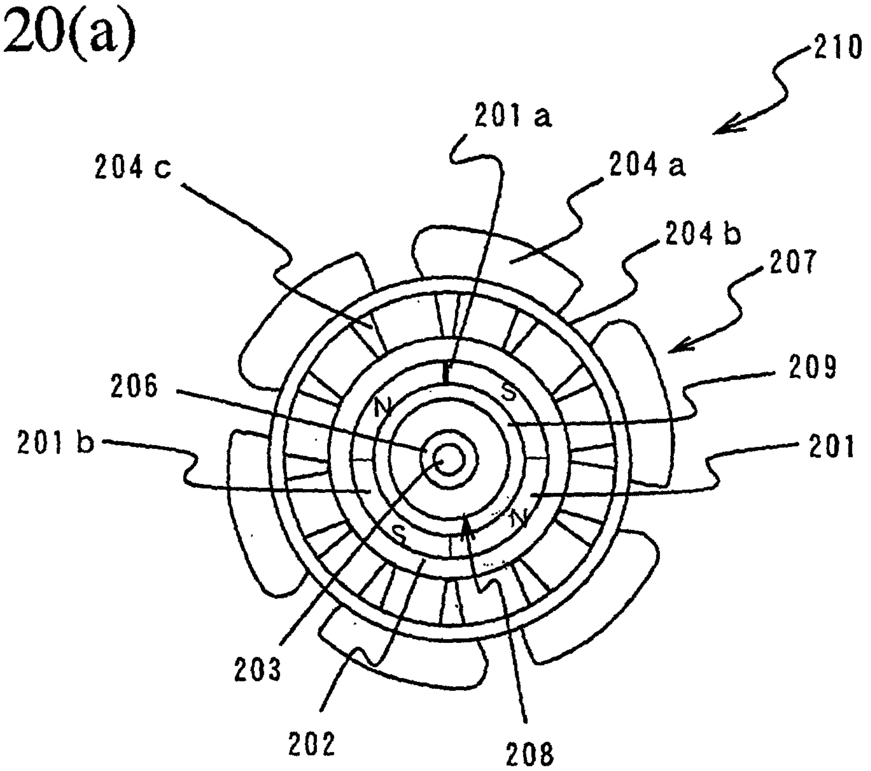


Fig. 20(b)

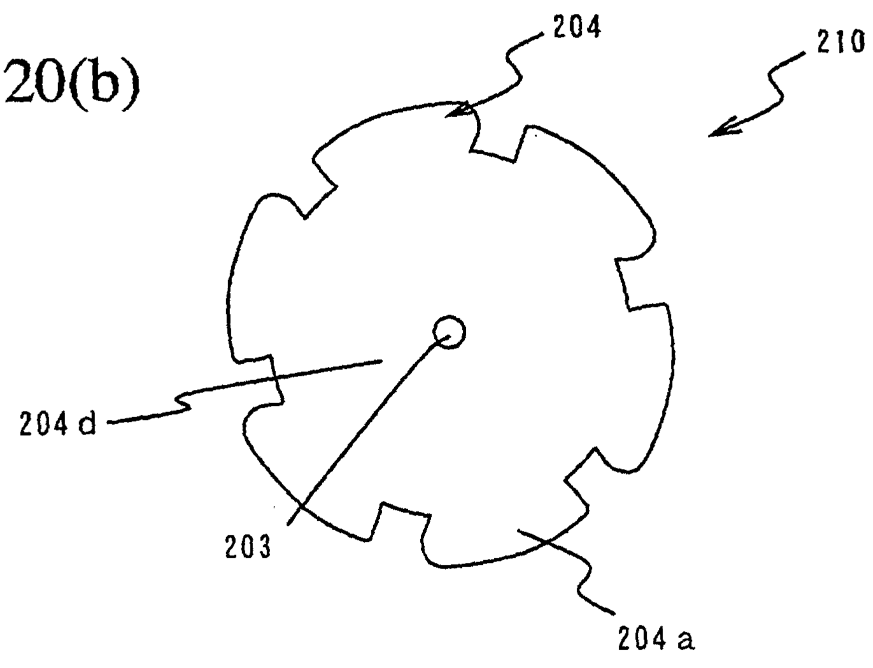

Fig. 21

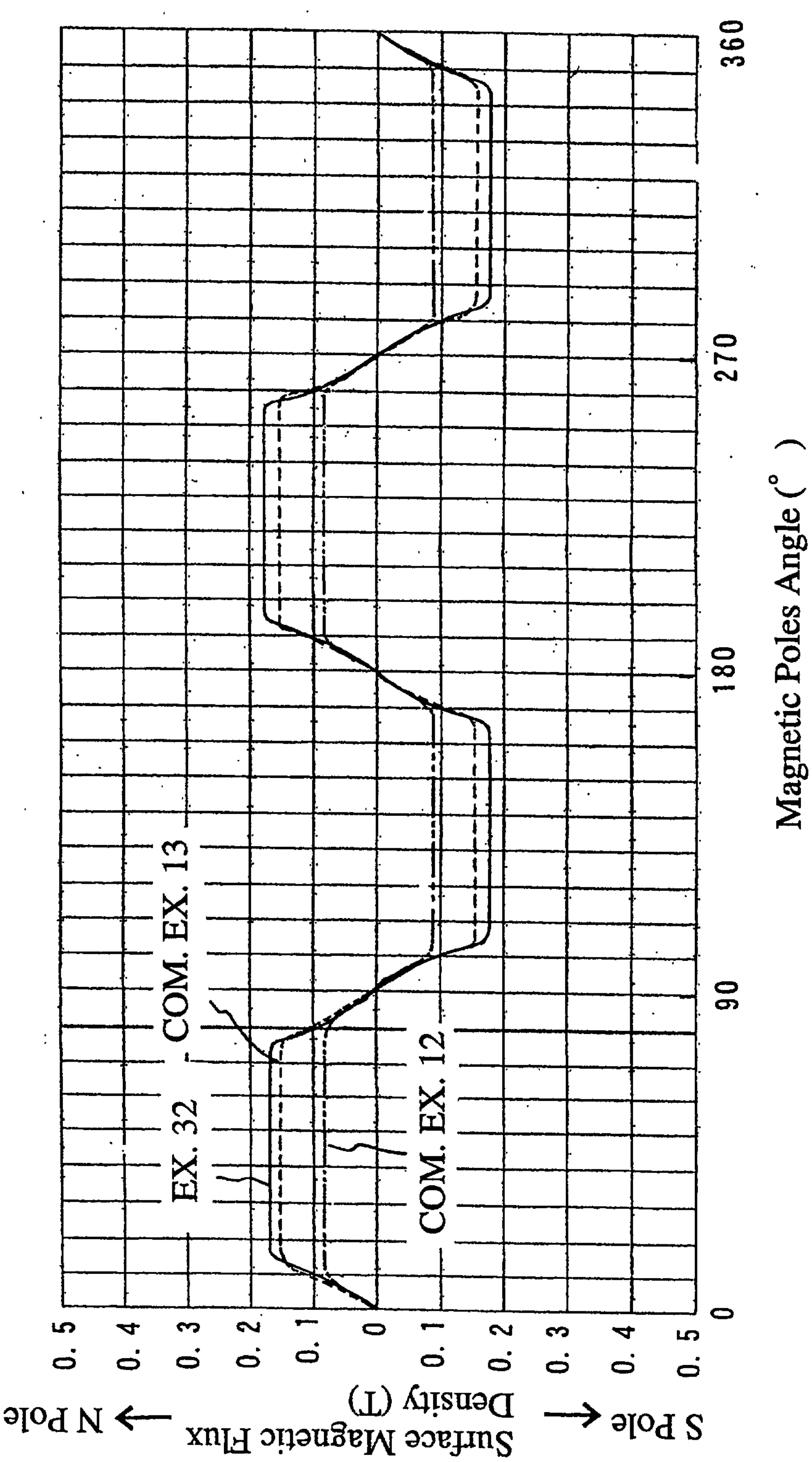
EX. 32
COM. EX. 13
COM. EX. 12
0.5
0.4
0.3
0.2
0.1
0
0.1
0.2
0.3
0.4
0.5
N Pole
Surface Magnetic Flux Density (T)
S Pole
0
90
180
270
360
Magnetic Poles Angle (°)

Fig. 22(a)

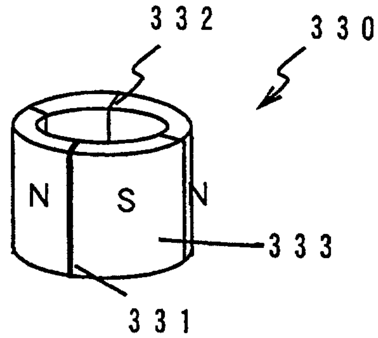


Fig. 22(b)

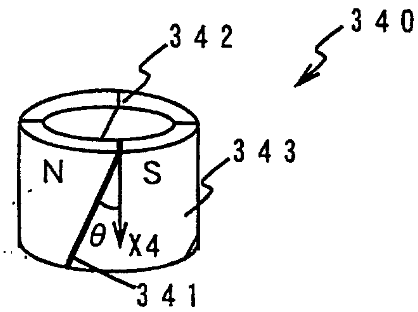


Fig. 22(c)

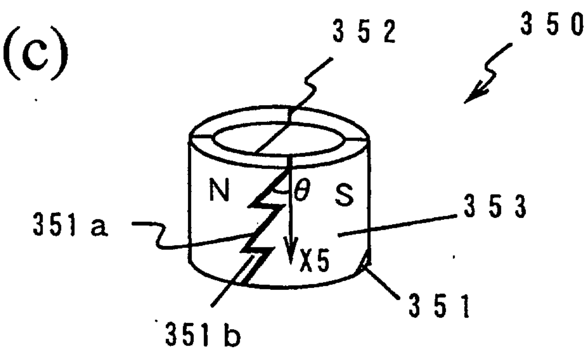


Fig. 22(d)

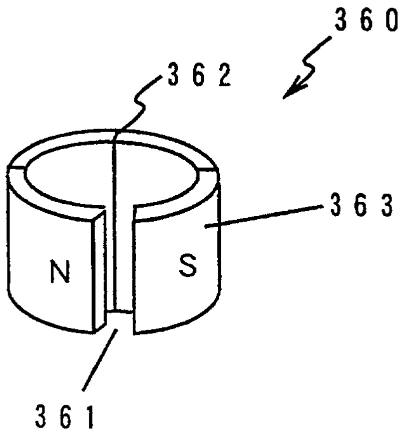

Fig. 23(a)

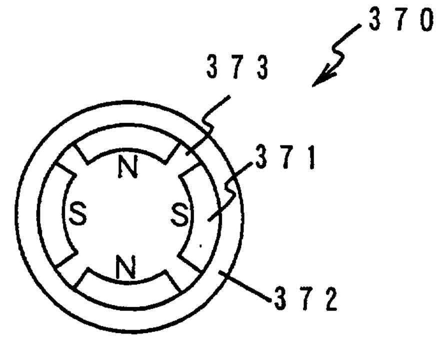


Fig. 23(b)

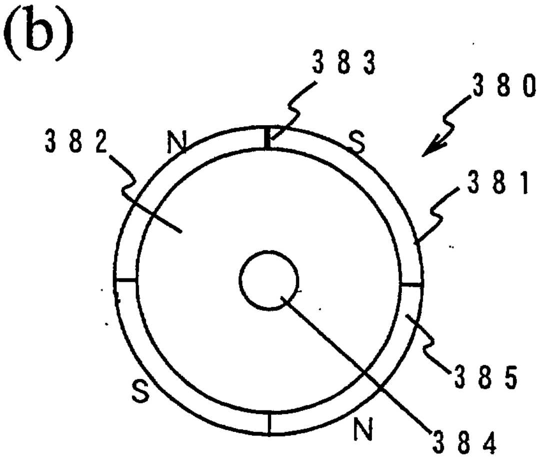


Fig. 23(c)

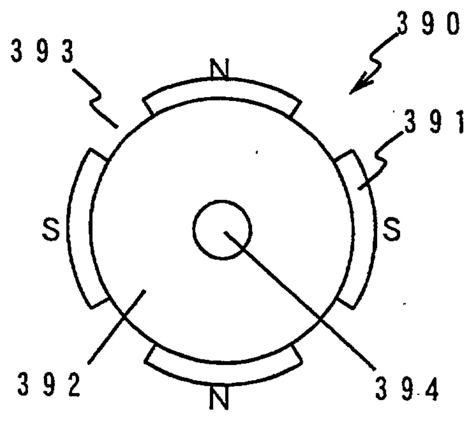

Fig. 24(a)

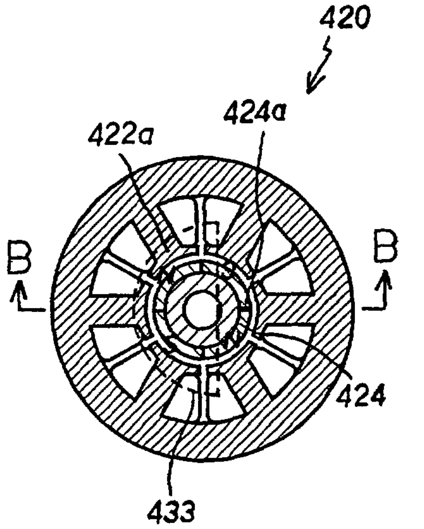


Fig. 24(b)

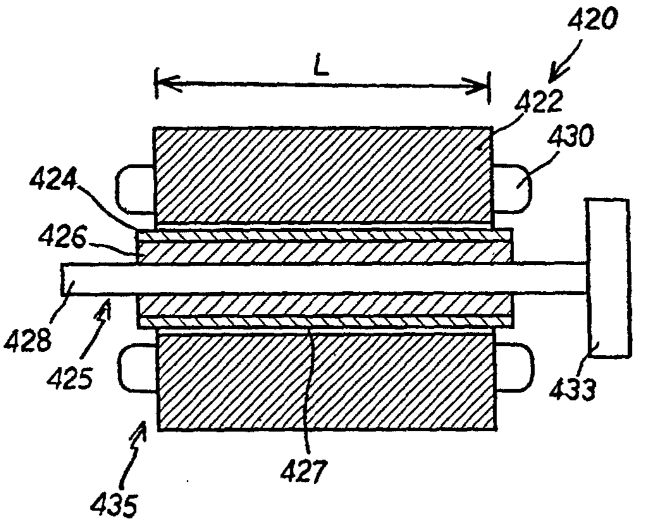

Fig. 25

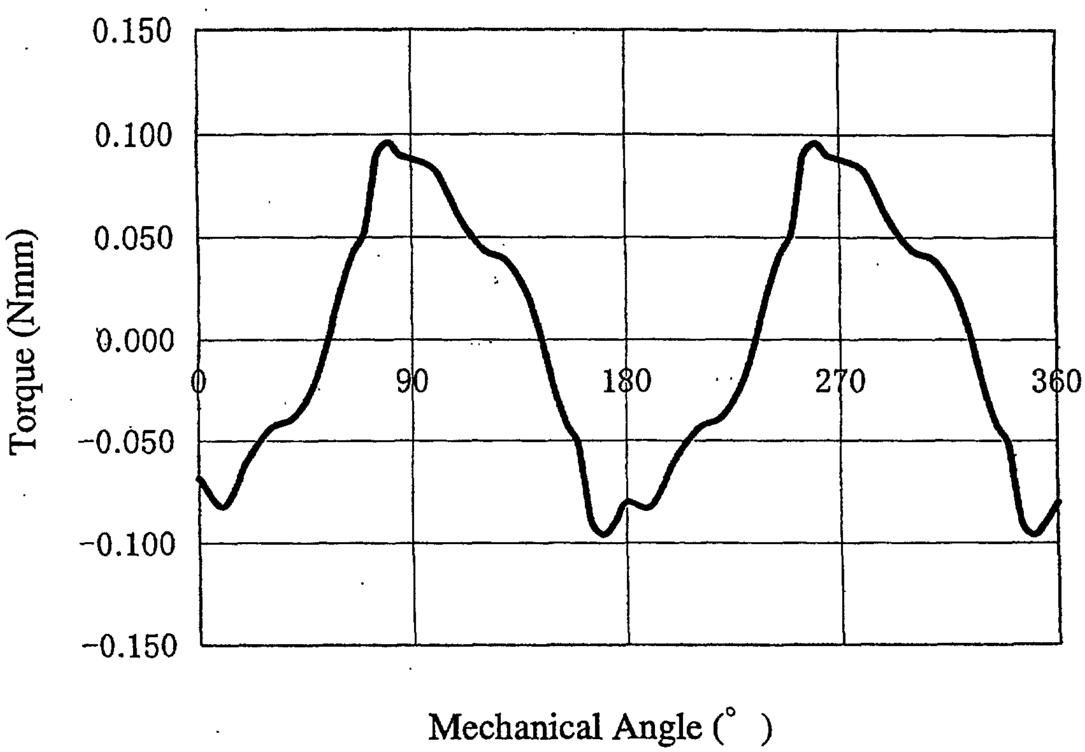
0.150
0.100
0.050
0.000
-0.050
-0.100
-0.150
0
90
180
270
360
Torque (Nmm)
Mechanical Angle (° )

Fig. 26(a)

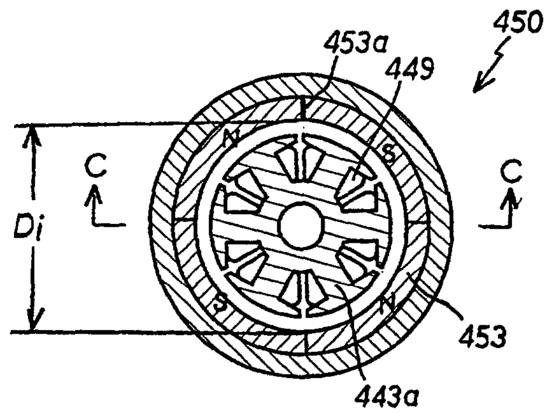


Fig. 26(b)

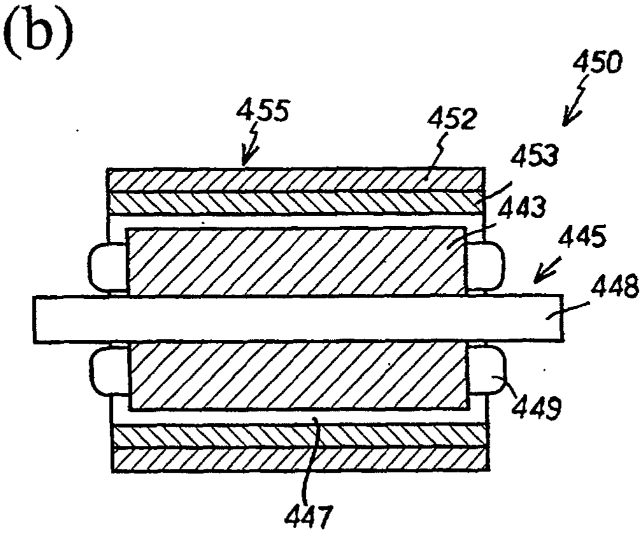

Fig. 27(a)

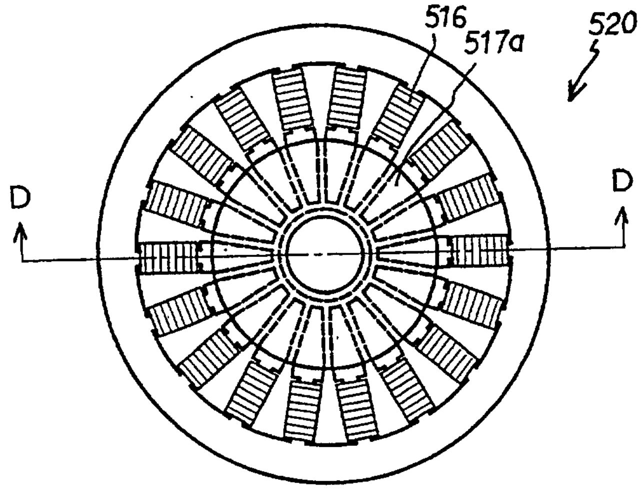


Fig. 27(b)

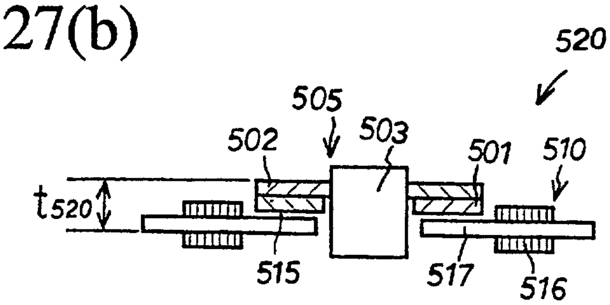


Fig. 27(c)

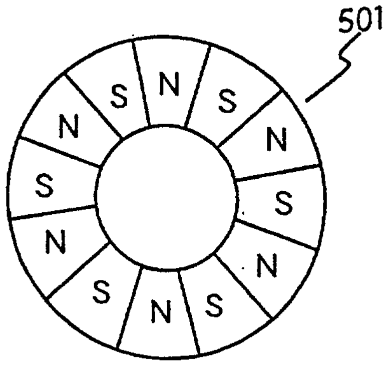

Fig. 28

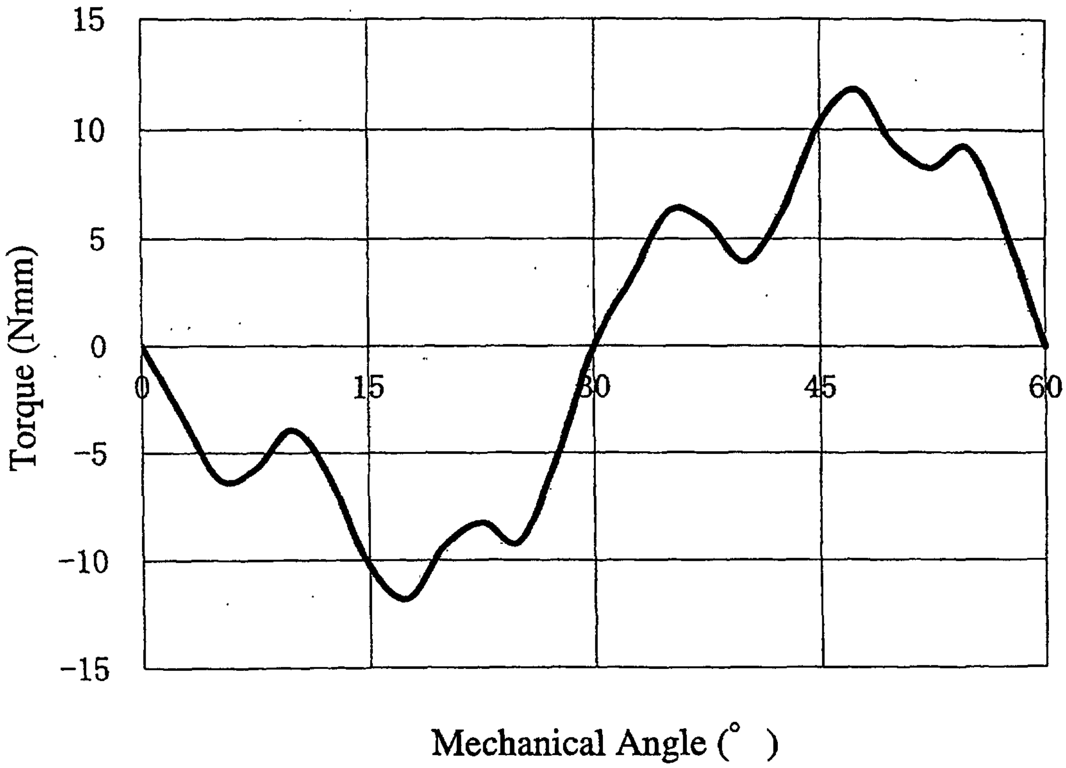

## INTERNATIONAL SEARCH REPORT

International application No.
PCT/JP00/08288

A. CLASSIFICATION OF SUBJECT MATTER
Int.Cl[7] H01F 1/08

According to International Patent Classification (IPC) or to both national classification and IPC

B. FIELDS SEARCHED

Minimum documentation searched (classification system followed by classification symbols)
Int.Cl[7] H01F 1/08

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2001 |
| Kokai Jitsuyo Shinan Koho | 1971-2001 | Toroku Jitsuyo Shinan Koho | 1994-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 9-298111, A (TDK Corporation), 18 November, 1997 (18.11.97), Claims (Family: none) | 1-43 |
| Y | JP, 11-121215, A (Hitachi Metals, Ltd.), 30 April, 1999 (30.04.99), Claims (Family: none) | 1-43 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 February, 2001 (07.02.01) | 20 February, 2001 (20.02.01) |
| Name and mailing address of the ISA/ Japanese Patent Office | Authorized officer |
| Facsimile No. | Telephone No. |

Form PCT/ISA/210 (second sheet) (July 1992)